(19) Europäisches Patentamt
European Patent Office
Office européen des brevets

(11) **EP 3 242 175 B1**

(12) **EUROPÄISCHE PATENTSCHRIFT**

(45) Veröffentlichungstag und Bekanntmachung des Hinweises auf die Patenterteilung:
**26.01.2022 Patentblatt 2022/04**

(21) Anmeldenummer: **17166807.2**

(22) Anmeldetag: **18.04.2017**

(51) Internationale Patentklassifikation (IPC):
**G05B 19/18** (2006.01)  **G05B 19/41** (2006.01)
**B23F 1/00** (2006.01)  **B23F 23/12** (2006.01)
**B23F 1/02** (2006.01)

(52) Gemeinsame Patentklassifikation (CPC):
**B23F 5/04; B23F 1/02; B23F 19/002; B23F 21/026;
B23F 23/006; B23F 23/1225; G05B 19/186;
G05B 19/41**

(54) **VERFAHREN ZUR VERZAHNBEARBEITUNG EINES WERKSTÜCKES**

METHOD FOR COGGING A WORKPIECE

PROCÉDÉ D'USINAGE DES ENGRENAGES D'UNE PIÈCE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **28.04.2016 DE 102016005257**

(43) Veröffentlichungstag der Anmeldung:
**08.11.2017 Patentblatt 2017/45**

(73) Patentinhaber: **Liebherr-Verzahntechnik GmbH
87437 Kempten (DE)**

(72) Erfinder: **Würfel, Robert
87499 Wildpoldsried (DE)**

(74) Vertreter: **Behr, Wolfgang
Lorenz Seidler Gossel
Rechtsanwälte Patentanwälte
Partnerschaft mbB
Widenmayerstraße 23
80538 München (DE)**

(56) Entgegenhaltungen:
**DE-A1- 10 131 060       DE-A1-102012 015 846
DE-A1-102014 007 646**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft ein Verfahren zur Verzahnbearbeitung eines Werkstückes durch ein Werkzeug auf einer Verzahnmaschine. Dabei wird das Werkstück durch einen Wälzbearbeitungsverfahren bearbeitet, bei welchem das Werkzeug zur Verzahnbearbeitung mit einen vorgegebenen Achsabstand und Achskreuzwinkel auf dem Werkstück abwälzt.

Bei einem Wälzbearbeitungsverfahren sind die Rotationsbewegungen von Werkzeug und Werkstück so gekoppelt, dass die Verzahnung des Werkzeuges auf der Verzahnung des Werkstückes abwälzt, die sogenannte Wälzkopplung. Die Wälzbewegung entspricht damit der eines durch Werkzeug und Werkstück gebildeten Getriebes. Der Wälzbewegung ist eine Relativbewegung zwischen dem Werkzeug und dem Werkstück in Richtung der Werkstückbreite, d.h. in Richtung der Rotationsachse des Werkstücks überlagert, durch welche das Werkzeug am Werkstück in einem Bearbeitungshub entlang geführt wird.

Der Achsabstand zwischen Werkstück und Werkzeug definiert dabei die Eingriffstiefe des Werkzeuges in das Werkstück und erlaubt eine Beeinflussung der Zahndicke. Der Achskreuzwinkel ist bei bekannten Wälzbearbeitungsverfahren durch den Schrägungswinkel von Werkzeug und Werkstück vorgegeben.

Durch ein solches Wälzbearbeitungsverfahren kann eine gewünschte Flankenlinienform und/oder Zahndicke der Verzahnung erzeugt werden. Der Begriff der Flankenlinienform umfasst im Sinne der Erfindung zum einen eine unmodifizierte Flankenlinie. Der Begriff der Flankenlinienform umfasst im Sinne der Erfindung zum anderen eine Flankenlinienmodifikation.

Dabei ist es aus dem Stand der Technik bereits bekannt, eine modifizierte Flankenlinie vorzugeben und durch ein Wälzbearbeitungsverfahren zu erzeugen. Hierfür ist es aus der DE 102 085 31 bekannt, durch eine Variation des Achsabstandes in Abhängigkeit von der Werkstückbreitenposition und einer entsprechenden Korrektur der Wälzkopplung freie Flankenlinienmodifikation auf linker und rechter Flanke des Werkstücks zu erzeugen. Druckschrift DE 10 2014 007 646 A1 zeigt ein Verfahren zur Lagebestimmung der Evolventen eines vorverzahnten Werkstückes innerhalb einer Verzahnmaschine unter Verwendung eines verzahnten Werkzeuges. In Umkehrung des Verfahrens wird eine lageorientierte Fertigung beschrieben, bei welcher auf Grundlage der gewünschten Position der Evolventen Parameter der Bearbeitung und insbesondere die Drehwinkel und Vorschübe von Werkstück und Werkzeug bestimmt werden.

Druckschrift DE 10 2012 015 846 A1 zeigt ein Verfahren zur Herstellung eines Werkstückes mit korrigierter Verzahnungsgeometrie. Hierfür wird das zur Verzahnbearbeitung eingesetzte Werkzeug modifiziert abgerichtet.

Aufgabe der vorliegenden Erfindung ist es, die Möglichkeiten der Wälzbearbeitung zu erweitern.

Diese Aufgabe wird durch ein Verfahren gemäß Anspruch 1 , eine Verzahmaschine gemäss Anspruch 12 und einem Computerprogramm gemäss Anspruch 14 gelöst. Vorteilhafte

Ausgestaltungen der vorliegenden Erfindung sind Gegenstand der Unteransprüche.

Die vorliegende Erfindung umfasst ein Verfahren zur Verzahnbearbeitung eines Werkstückes durch ein Werkzeug auf einer Verzahnmaschine, wobei das Werkstück durch ein Wälzbearbeitungsverfahren bearbeitet wird, bei welchem das Werkzeug zur Verzahnbearbeitung mit einem vorgegebenen Achsabstand und Achskreuzwinkel auf dem Werkstück abwälzt. Dabei wir durch das Wälzbearbeitungsverfahren eine gewünschte Flankenlinienform und/oder Zahndicke der Verzahnung erzeugt. Erfindungsgemäß ist eine Zusatz-Bedingung vorgebbar, wobei der Achsabstand und der Achskreuzwinkel in Abhängigkeit von der gewünschten Flankenlinienform und/oder Zahndicke der Verzahnung und der Zusatzbedingung bestimmt werden.

Der Erfinder der vorliegenden Erfindung hat erkannt, dass über den Achskreuzwinkel ein weiterer Freiheitsgrad der Verzahnbearbeitung zur Verfügung steht, welcher zur Erweiterung der Möglichkeit der Wälzbearbeitung eingesetzt werden kann. Dieser weitere Freiheitsgrad erlaubt es, beim Wälzbearbeiten eine Zusatzbedingung vorzugeben, in deren Abhängigkeit der Achsabstand und der Achskreuzwinkel bestimmt werden.

Das erfindungsgemäße Verfahren kommt bevorzugt bei einer zweiflankigen Wälzbearbeitung zum Einsatz.

Die vorliegende Erfindung ist insbesondere beim Wälzfräsen und beim Wälzschleifen einsetzbar. Beim Wälzfräsen wird als Werkstück ein noch unverzahnter Rohling, welcher üblicherweise eine rotationssymmetrische Form aufweist und erst durch das Wälzfräsverfahren eine Verzahnung erhält, bearbeitet. Das Wälzfräsen erfolgt üblicherweise in mehreren Bearbeitungshüben.

Beim Wälzschleifen wird als Werkstück üblicherweise ein bereits vorverzahnter Rohling bearbeitet, wobei das Wälzschleifen dazu eingesetzt wird, um die Qualität der Verzahnungsgeometrie zu verbessern. Beim Wälzschleifen handelt es sich insbesondere um eine Hart-Fein-Bearbeitung. Üblicherweise wird der vorverzahnte Rohling vor der Durchführung des Wälzschleifens oberfläche-gehärtet. Das Wälzschleifen erfolgt bevorzugt in mehreren Bearbeitungshüben, und insbesondere in mindestens einem Schruppschnitt und mindesten einem Schlichtschnitt.

Die Werkstücke bestehen üblicherweise aus Metall, insbesondere aus Stahl. Beim Wälzfräsen kommt als Werkzeug üblicherweise ein Wälzfräser zum Einsatz, beim Wälzschleifen üblicherweise eine Schleifschnecke. Bei der Schleifschnecke kann es sich um ein abrichtbares oder um ein nicht-abrichtbares Werkzeug handeln.

Im Rahmen der vorliegenden Erfindung wird bevorzugt ein Achskreuzwinkel eingesetzt, welcher von einem durch die Schrägungswinkel von Werkzeug und Werkstück vorgegebenen Achskreuzwinkel, welcher im Stand der Technik eingesetzt wurde, abweicht. Die Abweichung des Achskreuzwinkels von einem durch die Schrägungswinkel von Werkzeug und Werkstück vorgegebenen Achskreuzwinkel wird bevorzugt in Abhängigkeit von der Zusatzbedingung gewählt. Bevorzugt wird dann der Achsabstand so eingestellt, dass die gewünschte Flankenlinie und/oder Zahndicke trotz des abweichenden Achskreuzwinkels erzeugt wird.

Der Erfinder der vorliegenden Erfindung hat erkannt, dass durch eine Veränderung des Achskreuzwinkels die Zahndicke verändert werden kann. Insbesondere kann durch ein Abweichen von dem durch die Schrägungswinkel von Werkzeug und Werkstück vorgegebenen Achskreuzwinkel die Zahndicke verringert werden. Durch eine entsprechende Einstellung des Achskreuzwinkels kann daher eine Vergrößerung der Zahndicke, welche durch einen größeren Achsabstand hervorgerufen wird, ausgeglichen werden. Dies erlaubt es, den Achsabstand innerhalb gewisser Grenzen frei zu wählen, und durch eine entsprechende Wahl des Achskreuzwinkels dennoch die gewünschte Flankenlinienform oder Zahndicke zu erreichen. Durch die Einstellung des Achsabstandes ist es wiederrum möglich, eine Zusatzbedingung zu erfüllen.

Bevorzugt wird erfindungsgemäß der Achsabstand und die Abweichung zwischen dem einzustellenden Achskreuzwinkel und dem durch die Schrägungswinkel von Werkzeug und Werkstück vorgegebenen Achskreuzwinkel in Abhängigkeit von der Zusatzbedingung und der gewünschten Flankenlinienform und/oder Zahndicke bestimmt. Insbesondere kann der Achsabstand in Abhängigkeit von der Zusatzbedingung eingestellt werden, und der Achskreuzwinkel so bestimmt werden, dass die gewünschte Flankenlinienform und/oder Zahndicke erzeugt wird.

Weiterhin kann erfindungsgemäß vorgesehen sein, dass neben einer gezielten Einstellung von Achsabstand und Achskreuzwinkel auch eine gezielte Einstellung der Korrektur der Wälzkopplung erfolgt.

Eine Korrektur der Wälzkopplung in Abhängigkeit von Werkstückbreitenposition kann durch viele unterschiedliche Maschinenachsen erreicht werden. Insbesondere kann eine Korrektur der Wälzkopplung durch eine Zusatzdrehbewegung von Werkstück und/oder Werkzeug erreicht werden. Die Korrektur der Wälzkopplung kann jedoch auch durch eine Shiftbewegung und/oder bei einer Schrägverzahnung durch eine Axialvorschubbewegung des Werkstücks erreicht werden. Die Bewegungen erfolgen dabei bevorzugt in Abhängigkeit von Werkstückbreitenposition.

Erfindungsgemäß können der Achsabstand, der Achskreuzwinkel und eine Korrektur der Wälzkopplung in Abhängigkeit von der gewünschten Flankenlinienform und/oder Zahndicke und der Zusatzbedingung bestimmt werden. Die Korrektur der Wälzkopplung erlaubt eine Beeinflussung der Flankenlinienform, welche sich auf linker und rechter Flanke unterschiedlich auswirkt. Durch eine Einstellung des Achsabstands und einer entsprechenden Korrektur der Wälzkopplung ist daher die Flankenlinienform und/oder Zahndicke auf linker und rechter Flanke unabhängig vorgebbar.

Erfindungsgemäß kann als gewünschte Flankenlinienform eine Flankenmodifikation vorgebbar sein, wobei die Zahndicke und/oder Flankenlinienmodifikation bevorzugt für linke und rechte Flanke unabhängig vorgebbar ist.

Alternativ oder zusätzlich können der Achsabstand und/oder die Korrektur der Wälzkopplung als Funktion der Werkstückbreitenposition bestimmt werden. Durch einen in Abhängigkeit von der Werksstückbreitenposition variablen Achsabstand und eine entsprechende Korrektur der Wälzkopplung können erfindungsgemäß innerhalb gewisser Randbedingungen frei vorgebbare Flankenlinienmodifikation auf rechter und linker Flanke erzeugt werden. Die erfindungsgemäße Einstellung des Achsabstandes erlaubt zusätzlich die Erfüllung einer Zusatzbedingung.

Erfindungsgemäß betrifft die Zusatzbedingung, welche erfindungsgemäß vorgebbar und durch Einstellung des Achskreuzwinkels erfüllbar ist, die Geometrie der Verzahnung, wobei es sich bei der Zusatzbedingung um eine Vorgabe zu der Form der Verzahnung im inaktiven und/oder im aktiven Teil der Verzahnung handelt.

In einer ersten Variante der vorliegenden Erfindung kann es sich bei der Zusatzbedingung um eine Vorgabe zu der Form der Verzahnung im inaktiven Teil der Verzahnung handeln. In einer zweiten Variante der vorliegenden Erfindung kann es sich bei der Zusatzbedingung dagegen um eine Vorgabe der Form der Verzahnung im aktiven Teil der Verzahnung handeln. Bei dem inaktiven Teil der Verzahnung handelt es sich insbesondere um den nichtevolventischen Teil der Verzahnung, insbesondere um den Zahnfuß und/oder den Zahnkopf. Bei dem aktiven Teil der Verzahnung handelt es sich insbesondere um den evolventischen Teil der Verzahnung, insbesondere um die linke und/oder rechte Zahnflanke.

Im Rahmen der ersten Variante kann die Vorgabe die Zahnfußgeometrie, insbesondere den Zahnfußradius und/oder den Verlauf des Zahnfußes betreffen, und/oder die Zahnkopfgeometrie, insbesondre den Zahnkopfradius und/oder den Verlauf des Zahnkopfes, der auf dem Werkstück erzeugten Verzahnung. Besonders relevant ist im Rahmen der vorliegenden Erfindung dabei eine Vorgabe zur Zahnfußgeometrie.

Im Rahmen der zweiten Variante, bei welcher die Zusatzbedingung eine Vorgabe zur Form der Verzahnung im aktiven Teil der Verzahnung betrifft, kann die Vorgabe insbesondere die

Position einer durch eine Modifikation auf dem Werkzeug auf der aktiven Zahnflanke des Werkstücks erzeugten Modifikation betreffen.

Insbesondere kann als Zusatzbedingung daher der Fußkreisradius oder der Kopfkreisradius der auf dem Werkstück erzeugten Verzahnung vorgegeben, wobei ein entsprechender Fußkreisradius oder Kopfkreisradius im Rahmen des erfindungsgemäßen Verfahrens durch eine entsprechende Einstellung des Achskreuzwinkels und des Achsabstands erzeugt werden.

Alternativ kann als Zusatzbedingung die Position einer auf der aktiven Zahnflanke des Werkstücks erzeugten Modifikation vorgegeben werden, wobei eine entsprechende Position der Modifikation im Rahmen des erfindungsgemäßen Verfahrens durch eine entsprechende Einstellung des Achskreuzwinkels und des Achsabstands erzeugt wird.

Wird erfindungsgemäß nur eine Zusatzbedingung vorgegeben, so kann diese bevorzugt durch das erfindungsgemäße Verfahren exakt erfüllt werden. Insbesondere werden hierfür erfindungsgemäß der Achsabstand und der Achskreuzwinkel und gegebenenfalls die Korrektur der Wälzkopplung so bestimmt, dass die gewünschte Flankenlinienform und/oder Zahndicke erzeugt und die Zusatzbedingung exakt erfüllt wird.

Im Rahmen der vorliegenden Erfindung können jedoch auch zwei oder mehr Zusatzbedingungen vorgegeben werden, insbesondere zwei der oben genannten Zusatzbedingungen. Insbesondere kann dabei eine erste Vorgabe zu der Form der Verzahnung im inaktiven Teil der Verzahnung und eine zweite Vorgabe zur Form der Verzahnung im aktiven Teil der Verzahnung vorgebbar sein. Insbesondere kann erfindungsgemäß eine Vorgabe zum Fuß- und/oder Kopfkreisradius und eine Vorgabe zur Position einer durch eine Modifikation auf dem Werkzeug auf der aktiven Zahnflanke des Werkstücks erzeugten Modifikation vorgesehen sein. In diesem Fall können die zwei oder mehr Zusatzbedingungen jedoch üblicherweise nicht mehr exakt erfüllt werden. Bevorzugt werden daher der Achsabstand und der Achskreuzwinkel und gegebenenfalls eine Korrektur der Wälzkopplung mittels einer Ausgleichsrechnung so bestimmt, dass die zwei oder mehr Zusatzbedingungen in optimaler Näherung erfüllt sind.

Die vorliegende Erfindung erlaubt eine Vielzahl von neuen Anwendungen, welche im Folgenden näher beschrieben werden:

In einer ersten Variante kann erfindungsgemäß der Zahnfuß bei mindestens einem Bearbeitungshub zusammen mit der aktiven Zahnflanke mit bearbeitet werden. Erfindungsgemäß sind die bei diesem Bearbeitungshub erzeugte Zahndicke und der bei diesem Bearbeitungshub erzeugte Fußkreisradius separat vorgebbar und/oder der Materialabtrag im Bereich des Zahnfußes und der Zahnflanke separat einstellbar. Erfindungsgemäß werden die bei diesem Bearbeitungshub erzeugte Zahndicke und der bei diesem Bearbeitungshub erzeugte Fußkreisradius durch eine geeignete Einstellung von Achskreuzwinkel und Achsabstand zwischen Werkzeug und Werkstück erzeugt.

Der Erfinder der vorliegenden Erfindung hat erkannt, dass der Materialabtrag im Bereich des Zahnfußes im Wesentlichen nur von dem Achsabstand, nicht dagegen von dem Achskreuzwinkel abhängt. Der Materialabtrag im Bereich der Zahnflanken hängt dagegen sowohl von dem Achsabstand, als auch von dem Achskreuzwinkel ab. Erfindungsgemäß kann daher der Achsabstand in Abhängigkeit von dem vorgegebenen Fußkreisradius bzw. in Abhängigkeit von dem vorgegebenen Materialabtrag im Bereich des Zahnfußes eingestellt werden, und der Achskreuzwinkel in Abhängigkeit von dem so bestimmten Achsabstand so eingestellt werden, dass die gewünschte Zahndicke bzw. der gewünschte Materialabtrag im Bereich der Zahnflanken erreicht wird.

Das erfindungsgemäße Verfahren hat dabei erhebliche Vorteile gegenüber aus dem Stand der Technik bekannten Verfahren, bei welchem der Materialabtrag auf den Zahnflanken und im Zahnfuß nicht separat einstellbar waren. Dies konnte dazu führen, dann im Zahnfuß ein technologisch ungünstig großer Materialabtrag erfolgte, oder auf den Zahnflanken ein unnötig kleiner Materialabtrag gewählt werden musste.

Bevorzugt ist im Rahmen der vorliegenden Erfindung der Materialabtrag auf rechter und linker Flanke separat vorgebbar. Bevorzugt wird ein entsprechender Materialabtrag durch eine geeignete Einstellung von Achskreuzwinkel und Achsabstand zwischen Werkzeug und Werkstück und einer geeigneten Korrektur der Wälzkopplung erzeugt. Durch die Korrektur der Wälzkopplung ist wiederum eine unabhängige Einstellung des Materialabtrags auf rechter und linker Flanke möglich.

In einer zweiten Variante, welche bevorzugt gemäß der ersten Variante ausgeführt wird, wird das Werkstück mit mehreren Bearbeitungshüben bearbeitet, wobei der Zahnfuß bei mindestens einem Bearbeitungshub zusammen mit der aktiven Zahnflanke mit bearbeitet wird. Dabei erfolgt die Einstellung von Achskreuzwinkel und Achsabstand zwischen Werkzeug und Werkstück so, dass der Materialabtrag im Bereich des Zahnfußes beim letzten Bearbeitungshub kleiner als bei einen vorangegangenen Bearbeitungshub ist. Der Erfinder der vorliegenden Erfindung hat erkannt, dass die Größe des Materialabtrages im Bereich des Zahnfußes einen Einfluss auf die Qualität der Verzahnung im aktiven Bereich der Zahnflanke hat. Wird daher der Materialabtrag für den letzten Bearbeitungshub im Bereich des Zahnfußes klein gewählt, werden die negativen Auswirkungen auf die Verzahnqualität im Bereich der Zahnflanken verringert.

Bevorzugt ist der Materialabtrag im Bereich des Zahnfußes bei allen vorangegangenen Bearbeitungshüben größer oder gleich dem Materialabtrag im Bereich des Zahnfußes beim letzten Bearbeitungshub. Alternativ oder zusätzlich kann beim letzten Bearbeitungshub im Fußbereich überhaupt kein Materialabtrag erfolgen.

In einer dritten Variante, welche gegebenenfalls mit der ersten und/oder zweiten Variante kombiniert werden kann, wird der Zahnfuß bei mindestens einem Bearbeitungshub zusammen mit der aktiven Zahnflanke mit bearbeitet, während der Zahnfuß bei mindestens einem anderen Bearbeitungshub nicht mit bearbeitet wird. Dies kann zum einen technologische Vorteile haben, zum anderen erhöht es die Freiheitsgrade bei der Bearbeitung der aktiven Zahnflanke.

Bevorzugt wird bei dem einen Bearbeitungshub, bei welchem der Zahnfuß zusammen mit der aktiven Zahnflanke mit bearbeitet wird, keine durch eine Variation der Bewegungsachsen der Verzahnmaschine bedingte Modifikation erzeugt. Dies hat den Vorteil, dass auf den Zahnfuß keine Modifikation aufgebracht wird. Bevorzugt wird dagegen bei dem anderen Bearbeitungshub eine durch eine Variation der Bewegungsachsen bedingte Modifikation der aktiven Zahnflanke erzeugt, während das Werkzeug außer Eingriff mit dem Zahnfuß bleibt. Erfindungsgemäß wird bevorzugt ein ausreichend großer Abstand zwischen dem Zahnfuß der Verzahnung des Werkstücks und dem Zahnkopf des Werkzeuges gewählt, das trotz der Variation der Bewegungsachsen, durch welche die Modifikation der aktiven Zahnflanke erzeugt wird, das Werkzeug außer Eingriff mit dem Zahnfuß der auf dem Werkstück erzeugten Verzahnung bleibt.

Bei der Variation der Bewegungsachsen, durch welche die Modifikation der aktiven Zahnflanke erzeugt wird, kann es sich insbesondere um eine Variation des Achsabstands und/oder des Achskreuzwinkels und/oder der Korrektur der Wälzkopplung handeln. Bevorzugt werden daher bei dem anderen Bearbeitungshub der Achsabstand und/oder der Achskreuzwinkel und/oder eine Korrektur der Wälzkopplung zur Erzeugung einer Flankenlinienmodifikation der aktiven Zahnflanke in Abhängigkeit von der Werkstückbreitenposition verändert.

Die vorliegende Erfindung erlaubt beim Wälzschleifen den Einsatz eines KombiAbrichters zum Abrichten der als Werkzeug eingesetzten Schleifschnecke, wobei der Kombi-Abrichter gleichzeitig mindestens eine linke und rechte Zahnflanke und einen Zahnkopf der Schleifschnecke abrichtet. Hierdurch sind zwar die Zahndicke und der Kopfkreisradius der Schleifschnecke voneinander abhängig. Erfindungsgemäß kann dennoch ein gewünschter Fußkreisradius und eine gewünschte Flankenlinienform und/oder Zahndicke der auf dem Werkstück zu erzeugenden Verzahnung durch geeignete Einstellung des Achsabstands und des Achskreuzwinkels und gegebenenfalls eine geeignete Korrektur der Wälzkopplung zwischen Werkzeug und Werkstück bei der Bearbeitung des Werkstückes erzeugt werden.

Bei einem Kombi-Abrichter im Sinne der vorliegenden Erfinder kann es sich insbesondere um eine Abrichtrolle und/oder eine Kombination aus Abrichtrollen und/oder eine mehrrippige Abrichtrolle und/oder ein Abrichtzahnrad handeln.

Bei den oben beschriebenen Varianten der vorliegenden Erfindung betraf die Zusatzbedingung jeweils eine Vorgabe zur Geometrie der zur erzeugenden Verzahnung im Bereich des Zahnfußes und/oder Zahnkopfes, und insbesondere eine Vorgabe eines gewünschten Fußkreisradius. Die vorliegende Erfindung ist jedoch nicht auf solche Zusatzbedingungen, welche sich auf den inaktiven Bereich der Verzahnung beziehen, beschränkt.

In einer weiteren Variante der vorliegenden Erfindung kommt ein Werkzeug zum Einsatz, welches eine Modifikation aufweist, welche bei der Verzahnbearbeitung auf die aktive Zahnflanke des Werkstücks aufgebracht wird. Dabei ist erfindungsgemäß die Position der Modifikation auf der aktiven Zahnflanke des Werkstückes vorgebbar und/oder veränderbar und/oder wird über die Einstellung des Achskreuzwinkels und des Achsabstands zwischen Werkzeug und Werkstück eingestellt.

Der Erfinder der vorliegenden Erfindung hat erkannt, dass die Position der Modifikation auf der aktiven Zahnflanke des Werkstückes in unterschiedlicher Art und Weise von dem Achsabstand und von dem Achskreuzwinkel abhängt. Die Position der Modifikation hängt dabei stärker vom Achsabstand, aber schwächer auch vom Achskreuzwinkel ab. Der Achsabstand kann daher in erster Näherung in Abhängigkeit von der gewünschten Position der Modifikation auf der aktiven Zahnflanke des Werkstückes eingestellt werden, wobei der Achskreuzwinkel dann in Abhängigkeit von diesem Achsabstand so eingestellt wird, dass die gewünschte Zahndicke und/oder Flankenlinienform erzeugt wird. Zur exakten Bestimmung von Achsabstand und Achskreuzwinkel ist aber ein Gleichungssystem in den Größen Achsabstand und Achskreuzwinkel und gegebenenfalls Korrektur der Wälzkopplung zu lösen, so dass sowohl die gewünschte Position der Modifikation als auch die Zahndicke und/oder Flankenlinienform erreicht wird.

Eine mögliche Anwendung besteht darin, dass ein Werkzeug verwendet wird, dessen Modifikation für eine andere Werkstücksollgeometrie ausgelegt wurde, wobei die Position der Modifikation auf dem Werkstück über die Einstellung des Achskreuzwinkels und des Achsabstands zwischen Werkstück und Werkstück an die neue Werkstücksollgeomterie angepasst wird. Beispielsweise kann so ein Werkzeug eingesetzt werden, welches eigentlich für die Werkstücksollgeometrie eines Zahnrades ausgelegt ist, welches mit dem zu bearbeiteten Zahnrad eine Getriebepaarung bildet.

Die erfindungsgemäß eingesetzte Modifikation des Werkzeuges kann insbesondere durch eine entsprechende Modifikation des Abrichters erzeugt werden. Insbesondere kann im Rahmen der vorliegenden Erfindung das Werkzeug über einen Abrichter abgerichtet werden, welche eine Profilmodifikation aufweist, welche durch das Abrichten auf das Werkzeug übertragen wird. Insbesondere kann ein Abrichter eingesetzt werden, welcher gleichzeitig mindestens eine linke und eine rechte Zahnflanke abrichtet. Als Abrichter kann insbesondere eine Abrichtrolle und/oder eine Kombination aus Abrichtrollen und/oder eine mehrrippige Abrichtrolle und/oder ein Abrichtzahnrad eingesetzt werden.

Werden gleichzeitig linke und rechte Zahnflanke abgerichtet, kann die Position der Profilmodifikation beim Abrichten nicht mehr unabhängig von der Zahnlückenweite bzw. Zahndicke der Verzahnung des Werkzeuges eingestellt werden.

Die vorliegende Erfindung erlaubt jedoch, die Position der Modifikation auf dem Werkstück über die Einstellung des Achskreuzwinkels und des Achsabstands zwischen Werkzeug und Werkstück an die Werkstücksollgeometrie anzupassen, und insbesondere die Position der Modifikation wie gewünscht zu erzeugen, und dennoch auch die gewünschte Zahndicke und/oder Flankenlinienform zu erzeugen.

Im Rahmen der vorliegenden Erfindung kann bei mindestens einen Bearbeitungshub mit einem über die Werkstückbreite konstanten Achskreuzwinkel gearbeitet werden. Weiterhin kann auch bei allen Bearbeitungshüben mit einem über die Werkstückbreite konstanten Achskreuzwinkel gearbeitet werden. Insbesondere kann im Rahmen der Erfindung für jeweils einen Bearbeitungshub ein konstanter Achskreuzwinkel in Abhängigkeit von der Zusatzbedingung bestimmt und bei der Verzahnbearbeitung eingesetzt werden. Im Rahmen der vorliegenden Erfindung ist es jedoch auch möglich, den Achskreuzwinkel in Abhängigkeit von der Werkstückbreite zu verändern.

In einem weiteren unabhängigen Aspekt umfasst die vorliegende Erfindung eine Verzahnmaschine mit einer Werkzeugaufnahme und einer Werkstückaufnahme sowie NC-Achsen zur Einstellung der Relativposition zwischen Werkzeug und Werkstück zur Verzahnbearbeitung eines in der Werkstückaufnahme aufgenommenen Werkstückes durch ein in der Werkzeugaufnahme aufgenommenes Werkzeug. Die Verzahnmaschine umfasst eine Steuerung zur Ansteuerung der NC-Achsen zur Durchführung eines Wälzbearbeitungsverfahrens, bei welchem das Werkzeug zur Verzahnbearbeitung auf dem Werkstück abwälzt. Die Steuerung weist eine Eingabefunktion auf, durch welche eine gewünschte Flankenlinienform und/oder Zahndicke und eine Zusatzbedingung vorgebbar sind. Weiterhin weist die Steuerung eine Bearbeitungsfunktion auf, welche den Achsabstand und den Achskreuzwinkel zwischen Werkstück und Werkzeug bei der Wälzbearbeitung so einstellt, dass das bearbeitete Werkstück die gewünschte Flankenlinienform und/oder Zahndicke aufweist und die Zusatzbedingung erfüllt.

Wie bereits oben beschrieben kann es sich bei der gewünschten Flankenlinienform sowohl um eine unmodifizierte Flankenlinie handeln, als auch um eine Flankenlinienmodifikation. Die vorliegende Erfindung betrifft damit auch solche Verzahnmaschinen, deren Eingabefunktion keine Vorgabe einer Flankenlinienmodifikation zulässt. Bevorzugt betrifft die vorliegende Erfindung jedoch Verzahnmaschinen, bei welchen über die Eingabefunktion eine Flankenlinienmodifikation vorgebbar ist.

Alternativ oder zusätzlich kann durch die Eingabefunktion eine bei einem Bearbeitungshub erzeugte Zahndicke und/oder ein bei einem Bearbeitungshub erzeugter Fußkreisradius separat vorgebbar sein. Weiterhin alternativ oder zusätzlich kann der Materialabtrag auf rechter und linker Flanke und im Zahnfuß separat vorgebbar sein. Die Bearbeitungsfunktion steuert bevorzugt den Achsabstand, den Achskreuzwinkel und gegebenenfalls eine Korrektur der Wälzkopplung entsprechend an, um die Zahndicke und/oder den Fußkreisradius zu erzeugen bzw. den vorgegebenen Materialabtrag vorzunehmen.

Die Ansteuerung der NC-Achsen durch die Bearbeitungsfunktion erfolgt bevorzugt automatisiert in Abhängigkeit von der vorgegebenen Flankenlinienform und/oder Zahndicke und der Zusatzbedingung.

Bei der Zusatzbedingung kann es sich insbesondere um eine Zusatzbedingung handeln, wie sie oben beschrieben wurde. Weiterhin bevorzugt sind die Eingabefunktion und die Bearbeitungsfunktion so ausgestaltet, dass eines der oben beschriebenen Verfahren über die erfindungsgemäße Verzahnmaschine durchführbar ist. Bevorzugt ist die Bearbeitungsfunktion dabei so ausgestaltet, dass sie eine Wälzbearbeitung gemäß einem der oben dargestellten Verfahren automatisiert in Abhängigkeit von den Eingaben und/oder Vorgaben durchführt. Die vorliegende Erfindung wird nun anhand von Ausführungsbeispielen und Figuren näher erläutert.

Kurzbeschreibung der Figuren

Die Figuren zeigen beispielhaft nur w-z-Diagramme zylindrischer Verzahnungen. Die *w-z*-Diagramme konischer Verzahnungen sind im Allgemeinen nicht rechteckig, meist trapezförmig, da sich der Auswertebereich des Wälzwegs über die Verzahnbreite ändert.

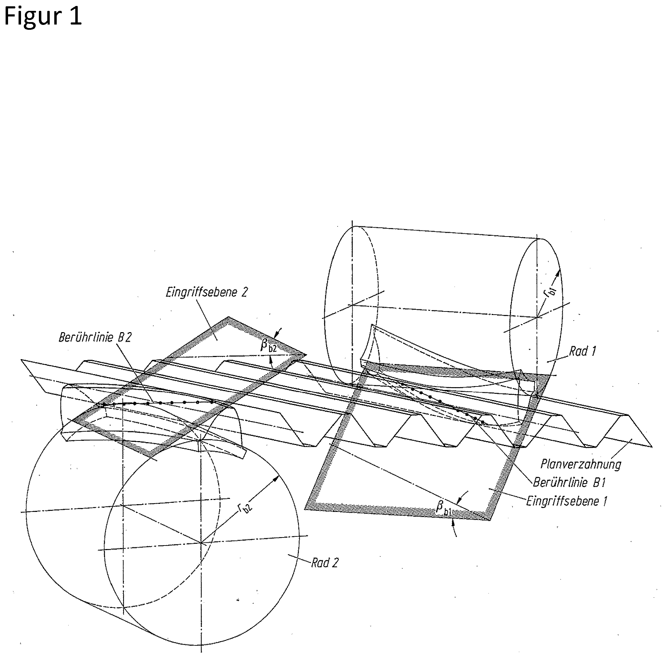

Figur 1     zeigt eine Darstellung zweier Verzahnungen in einem Schraubwälzgetriebe inklusive der gemeinsamen Zahnstange und den Eingriffsebenen beider Verzahnungen. Zur besseren Darstellung entspricht die relative Lage der beiden Verzahnungen nicht der im Schraubwälzgetriebe. Diese Figur zeigt auch die relative Lage einer zylindrischen Verzahnung zur generierenden Zahnstange. (Aus Niemann, G; Winter, H: Maschinenelemente Band 3 2. Auflage, Springer Verlag, Berlin, 1983)

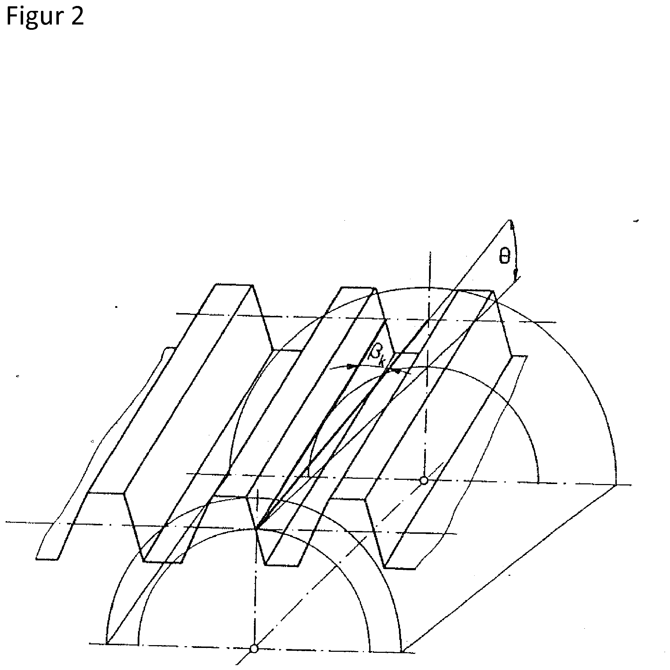

Figur 2     zeigt eine Darstellung einer konischen Verzahnung mit einer sie generierenden Zahnstange. Die Zahnstange ist um den Schrägungswinkel $\beta_k = \beta_w$ geschwenkt und um den Konuswinkel $\theta = \vartheta$ gekippt. (Aus Zierau, S: Die geometrische Auslegung konischer Zahnräder und Paarungen mit parallelen Achsen, Bericht Nr. 32, Institut für Konstruktionslehre, Technische Universität Braunschweig)

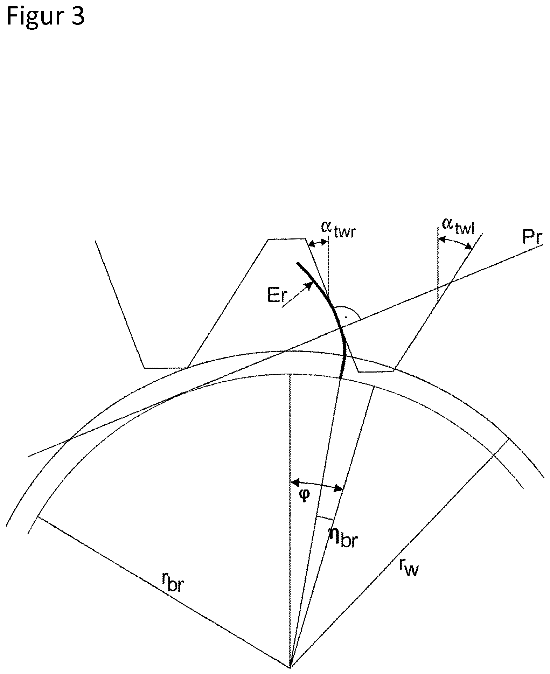

Figur 3     zeigt den Eingriff einer rechten Flanke mit einer generierenden asymmetrischen Zahnstange im Stirnschnitt. Der Profilwinkel im Stirnschnitt $\alpha_{twr}$ definiert die Neigung der Eingriffsebenen $P_r$. Die Verzahnung ist um den Drehwinkel $\varphi$ gedreht.

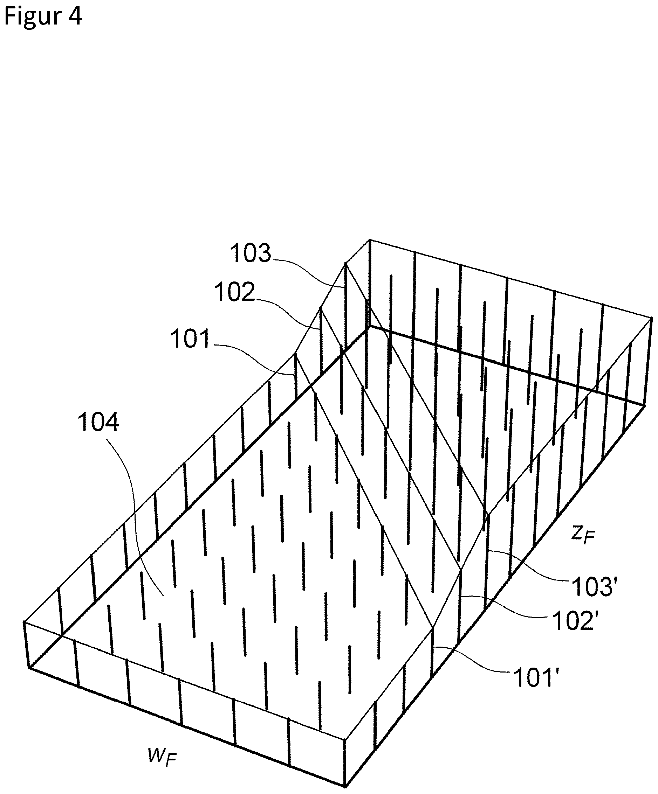

Figur 4     zeigt schematisch einen Abschnitt der Flanke eines Werkstückzahns mit Vektoren in Normalenrichtung für ein nicht über die ganze Breite geschliffenes Werkstück. Die Anzahl der Vektoren wurde im Vergleich zu einer Simulationsrechnung hier deutlich reduziert. Die hier schematisch gezeigte Ebene 104 entspricht der im Allgemeinen gekrümmten Flanke des nicht modifizierten Werkstücks, auf die die Vektoren gestellt werden.

Die Vektoren 101 und 101' wurden bereits vom Kontaktpfad überstrichen und sind somit vollständig gekürzt. Die Vektoren 102 und 102' wurden bereits mindestens einmal gekürzt, jedoch noch nicht vom Kontaktpfad überstrichen. Die Vektoren 103 und 103' wurden noch nicht gekürzt und haben somit noch die Länge dem gewählten Aufmaß entsprechend.

Figur 5     zeigt in Abhängigkeit von der Änderung des Achskreuzwinkels $\Delta\gamma$ gegenüber dem Stand der Technik a) die Änderung des Grundlückenwinkels des Werkstücks $\Delta\Sigma\eta_{b2}$ gegenüber dem Grundlückenwinkel, welcher sich beim Achskreuzwinkel gemäß dem Stand der Technik ergibt b) die Achsabstandsänderung $\Delta d$, die nötig ist, um die Zahndicke des Werkstücks bei verändertem Achskreuzwinkel konstant zu halten.

Figur 6     zeigt in Abhängigkeit vom Achskreuzwinkel y a) die Verschiebung der Profilmodifikation $\Delta w$ bei fester Zahndicke des Werkstücks, b) die Änderung des Profilwinkels $\alpha_{tw}$ im Stirnschnitt der theoretischen generierenden Zahnstange des Werkstücks.

Figur 7     zeigt Stirnschnitte einer erzeugten Lückengeometrie vereinfacht trapezförmig dargestellt nach einem ersten und einem zweiten Bearbeitungshub. a) mit unverändertem Achskreuzwinkel b) mit verändertem Achskreuzwinkel zwischen den Hüben.

Figur 8     zeigt den Eingriff einer Schleifschnecke mit zwei Varianten von Abrichtscheiben welche zum gleichzeitigen Abrichten der linken und rechten Flanken und des Schneckenkopfes verwendet werden können.

Figur 9     zeigt eine mehrrippige Kopfabrichtrollen 51 und 53 im Eingriff mit einer Schnecke 52.

Figur 10     zeigt einen mehrrippigen Abrichter 55 im Eingriff mit einer Schnecke 52. a) Beim Abrichten der Flanken der Schnecke, b) beim Abrichten der Köpfe der Schneckengänge.

Figur 11     zeigt einen Kombiabrichter zusammengesetzt aus einer Kopfabrichtrolle 54 und einer Doppelkegelscheibe 56 im Eingriff mit einer Schnecke 52 a) beim Abrichten der Flanken der Schneckengänge b) beim Abrichten des Kopfes eines Schneckengangs.

Figur 12     zeigt zwei Ausgestaltungsvarianten von Profilen am Außendurchmesser eines Abrichters gemäß Figur 10.

Figur 13     zeigt ein w-z-Diagramm einer natürliche verschränkten Flankenlinienballigkeit. Linie 20 markiert eine Berührspur. Diese entspricht einer Linie mit konstantem Wert der Modifikation

Figur 14     zeigt ein w-z-Diagramm einer Modifikation mit über der Verzahnbreite verschobener Lage der Kopfrücknahme.

Figur 15     zeigt ein w-z-Diagramm einer linearen dreiecksförmigen Endrücknahme ohne tangentialen Übergang.

Figur 16     zeigt die unterschiedliche Lage der Berührspur auf linker (LF) und rechter (RF) Flanke eines Werkstücks, abhängig vom Profilwinkel $\alpha$ des verwendeten Werkzeugs.

Figur 17     zeigt die unterschiedliche Lage der Berührspur auf linker (LF) und rechter (RF) Flanke eines Werkstücks, abhängig vom Achskreuzwinkel y.

Figur 18     zeigt schematisch zwei zylindrische Werkzeuge mit über die Werkzeugbreite veränderten Kopfkreisradien.

Figur 19     zeigt eine Ausführungsform einer Abrichtfliese mir abrasiver Fläche 70.

Figur 20     zeigt schematisch am Hüllkörper eines zylindrischen Werkzeugs 40 mit drei periodisch wiederkehrenden Bereichen 41, 42, 43 den Verlauf des Kopfkreisradius und eine speziell für diesen Hüllkörper ausgelegte Abrichtfliese 44.

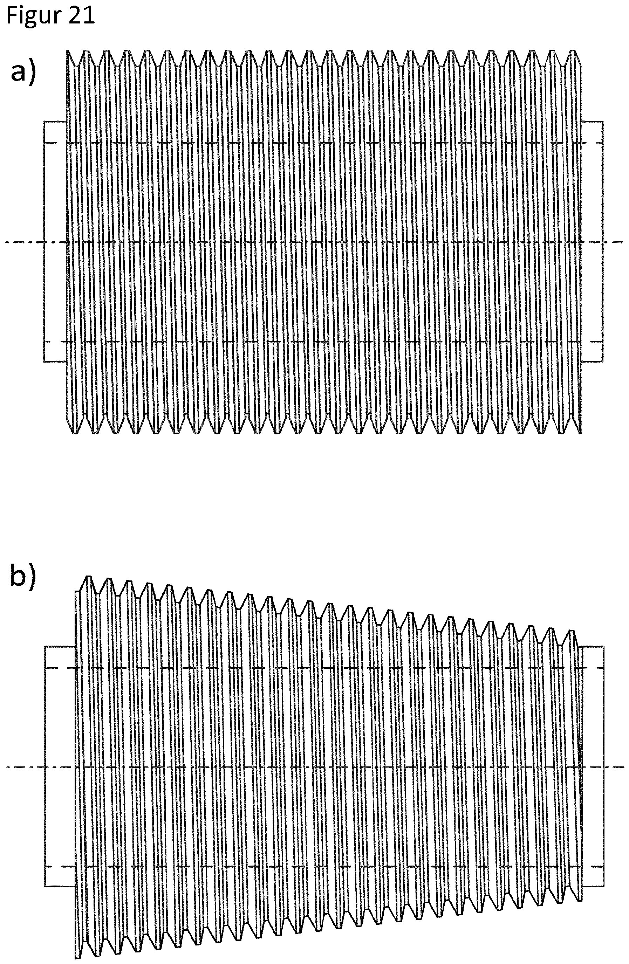

Figur 21     zeigt a) als Beispiel für ein zylindrisches Werkzeug eine zylindrische Schleifschnecke b) als Beispiel für ein konisches Werkzeug eine konische Schleifschnecke

Figur 22     zeigt schematisch ein konisches Werkstück 30 mit freiem Verlauf des Fußkreisradius und sie zeigt die Lage des Werkzeugs für drei verschiedene Axialvorschubpositionen 33, 34, 35.

Figur 23     zeigt die Abhängigkeit der Abweichung $f$ eines näherungsweise gefertigten Werkstücks von dem Sollwerkstück in Abhängigkeit von $\hat{\beta}_2$ und $\hat{\vartheta}_2$.

Figur 24     zeigt den Stirnschnitt einer Verzahnung mit Evolvente 80 und zwei Varianten 81 und 82 einer Fußgeometrie.

Figur 25     zeigt die Abhängigkeit des Profilwinkels $\alpha_{tw}$ im Stirnschnitt der theoretischen generierenden Zahnstange des Werkstücks von der Achsabstandsänderung $\Delta d$, die nötig ist, um die Zahndicke des Werkstücks bei verändertem Achskreuzwinkel konstant zu halten, für $\Delta\gamma > 0$ und $\Delta\gamma < 0$.

Figur 26     zeigt schematisch eine Verzahnmaschine mit dem hier als Beispiel aufgeführtem Bewegungsapparat.

**Detaillierte Darstellung der Erfindung**

Die Erfindung beschreibt ein Verfahren zur Fertigung von Verzahnungen. Die Fertigung erfolgt dabei mit einem verzahnten Werkzeug, welches mit dem Werkstück ein Schraubwälzgetriebe, d.h. ein Getriebe mit gekreuzten Achsen bildet. Werkstück und Werkzeug können jeweils sowohl zylindrisch als auch konisch sein. Konische Werkzeuge bzw. Werkstücke zeichnen sich durch unterschiedliche Steigungshöhen auf linker und rechter Flanke aus und werden häufig auch als Beveloids bezeichnet. Im zylindrischen Falle sind die Steigungshöhen auf beiden Flanken identisch. Die Profile der Werkstücke und Werkzeuge können sowohl symmetrisch als auch asymmetrisch sein, das heißt, die Profilwinkel auf linker und rechter Flanke können verschieden sein. Das Werkzeug kann sowohl definierte als auch nicht definierte Schneide haben. Im Falle einer nicht definierten Schneide ist die Hüllverzahnung des Werkzeugs in den folgenden Berechnungen zu betrachten. Die Fertigungsverfahren, auf die das hier beschriebene Verfahren unter anderem angewandt werden kann, sind insbesondere kontinuierliches Wälzschleifen, Wälzfräsen und Schälwälzfräsen. Die Werkzeuge können sowohl eingängig als auch mehrgängig sein. Bevorzugt wird das Verfahren während einer zweiflankigen Bearbeitung des Werkstücks angewendet, eine einflankige Bearbeitung ist jedoch ebenfalls möglich.

Die Idee der Erfindung liegt darin, den Achskreuzwinkel γ gezielt einzustellen und/oder während der Bearbeitung zu verändern. Dabei kann der Achskreuzwinkel zwischen zwei Bearbeitungshüben verändert werden und dann während der einzelnen Bearbeitungshübe konstant gehalten werden, der Achskreuzwinkel kann jedoch in einer weiteren Ausführungsform auch während eines Bearbeitungshubs abhängig von der Axialvorschubposition $z_{V2}$ des Werkstücks verändert werden.

Der Erfindung liegt die Erkenntnis zu Grunde, dass eine Änderung des Achskreuzwinkels auf die linken und rechten Flanken des Werkstücks einen vergleichbaren Effekt hat, wie eine Änderung des Achsabstandes. So kann beispielsweise in der Variante in der der Achskreuzwinkel während der Bearbeitung nicht verändert wird, die Zahnweite des gefertigten Werkstücks über den Achskreuzwinkel verändert werden. Das Profil des Werkstückes bleibt dadurch unbeeinflusst. Eine solche Änderung der Zahnweite war bisher bei einem gegebenen Werkzeug nur durch eine Änderung des Achsabstandes möglich. Eine solche Änderung des Achsabstandes führt jedoch automatisch auch zu einer Änderung des Fußkreisdurchmessers des Werkstücks, sofern der Zahnfuß mitbearbeitet wird. Eine solche Änderung des Fußkreisdurchmessers ist jedoch oft nicht gewünscht oder kann sich, insbesondere beim Wälzschleifen, technologisch negativ auswirken.

In der Variante der Erfindung, in der der Achskreuzwinkel während eines Bearbeitungshubs verändert wird, können auf linker und rechter freie Flankenlinienmodifikationen erzeugt werden, wenn zusätzlich eine Korrektur der Wälzkopplung vorgenommen wird. Solche freien Flankenlinienmodifikationen konnten bisher nur über eine Änderung des Achsabstands und des Drehwinkels des Werkstücks erzeugt werden (siehe DE10208531). Wird der Zahnfuß mitbearbeitet, führt diese Änderung des Achsabstands zu einem nicht konstanten Fußkreisradius des Werkstücks über die Werkstückbreite, was im Allgemeinen nicht gewünscht ist. Wird speziell beim Wälzschleifen der Zahnfuß mitgeschliffen, so führt eine solche Achsabstandsänderung zu stark unterschiedlichen Abträgen im Zahnfuß, was sich technologisch negativ auswirken kann und in bestimmten Fällen zu Schleifbrand im Zahnfuß führen kann. Soll der Zahnfuß nicht mitgeschliffen werden, so kann die Achsabstandsänderung zu einem ungewollten teilweisen Anschleifen des Zahnfußes führen, welche sich negativ auf die Zahnfußtragfähigkeit auswirken kann. Mit der Bearbeitung des Zahnfußes ist eine Bearbeitung des nicht evolventischen Bereichs unterhalb der Fußformkreisradien oder zumindest eines Teils dieses Bereichs gemeint.

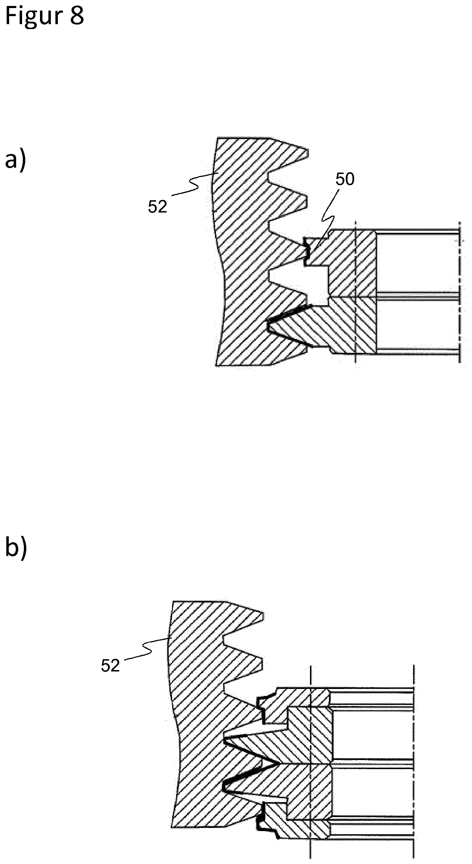

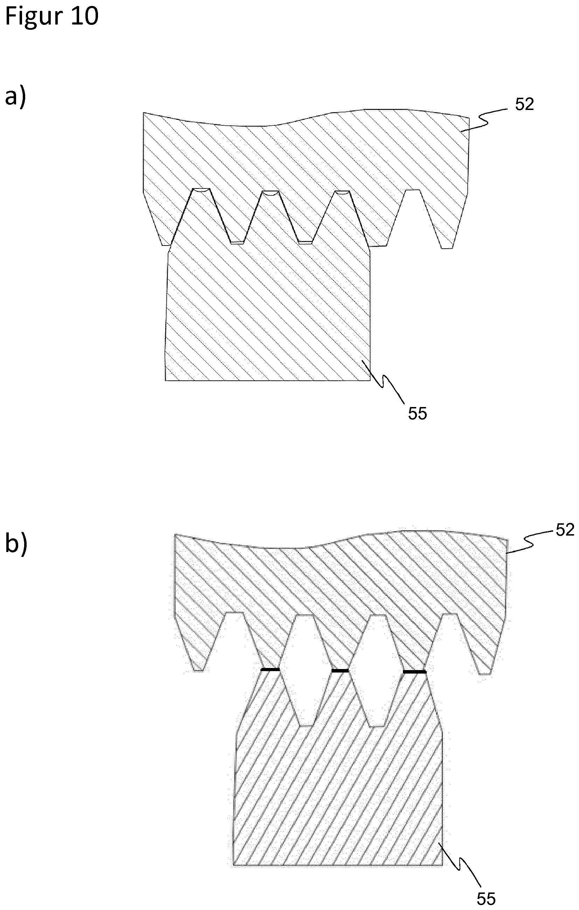

Ist das verwendete Verfahren ein kontinuierliches Wälzschleifen, im Folgenden nur noch als Wälzschleifen bezeichnet, so können bei diesem sowohl abrichtbare als auch nicht abrichtbare Schleifschnecken eingesetzt werden. Werden die Schnecken abgerichtet, so können verschiedene Abrichtertypen und Abrichtverfahren zum Einsatz kommen. So zeigt Figur 8 Abrichtscheiben in einer Ausführungsform mit Kopfabrichtrolle. Es können auch mehrrippige Abrichter eingesetzt werden, welche mindesten zwei linke und/oder mindestens zwei rechte Flanken gleichzeitig abrichten. Ein solcher mehrrippiger Abrichter ist in einer speziellen Ausführungsform in Figur 10 gezeigt. Eine weitere Möglichkeit Schnecken abzurichten ist das Abrichten mit Abrichtzahnrädern. Solche aus dem Stand der Technik bekannten Abrichtzahnrädern sind mit einem abrasiven Belag versehen Zahnräder. Die Abrichtkinematik entspricht der Kinematik des Wälzschleifens, wobei über den Axialvorschub $z_{V1}$ der Schnecke ein Abrichten über die ganze Schneckenlänge realisiert wird. Optional können über den Axialvorschub $z_{V2}$ des Abrichtzahnrads verschiedene Bereiche des Abrichtzahnrads mit der Schnecke in Kontakt gebracht werden, um so beispielsweise topologische Modifikationen auf der Schnecke aufzubringen.

Das Abrichten kann in den hier beschriebenen Varianten sowohl einflankig als auch zweiflankig ausgeführt werden. Bei einem zweiflankigen Abrichten werden mindesten eine linke und mindestens eine und mindestens eine rechte Flanke gleichzeitig, das heiß in einem Abrichthub abgerichtet.

In dieser Anmeldung sind mit Abrichtern, wenn nicht näher spezifiziert alle zum Abrichten einer Schleifschnecke geeigneten Werkzeuge, insbesondere Abrichtfliesen, ein- oder mehrrippige Abrichtrollen und Abrichtzahnräder gemeint. Mit Abrichten ist, wenn nicht näher spezifiziert der Prozess des Abrichtens einer Schleifschnecke mit einem dieser Abrichter gemeint.

Im Folgenden werden die mathematischen Grundlagen beschrieben:

Größen, die für linke und rechte Flanken unterschiedlich sind bzw. sein können, werden mit dem Index F versehen. F kann *l* (links) oder r (rechts) sein. Gleichungen, in den der Index F vorkommt, gelten immer für linke und rechte Flanken.

Die im Folgenden diskutierten Evolventenverzahnungen werden, abhängig von den Grundkreisradien ($r_{br}$, $r_{bl}$) und den Grundschrägungswinkeln ($\beta_{br}$, $\beta_{bl}$) in folgende vier Typen unterteilt.

1. Zylindrisch symmetrisch: $r_b := r_{br} = r_{bl}$ und $\beta_b := \beta_{br} = \beta_{bl}$

2. Zylindrisch asymmetrisch: $r_{br} \neq r_{bl}$ und $\dfrac{\tan \beta_{br}}{r_{br}} = \dfrac{\tan \beta_{bl}}{r_{bl}}$

3. Konisch symmetrisch: $\beta_{br} \neq \beta_{bl}$ und $r_{br} \cos \beta_{br} = r_{bl} \cos \beta_{bl}$

4. Konisch asymmetrisch: $\beta_{br} \neq \beta_{bl}$ und $r_{br} \cos \beta_{br} \neq r_{bl} \cos \beta_{bl}$ und $\dfrac{\tan \beta_{br}}{r_{br}} \neq \dfrac{\tan \beta_{bl}}{r_{bl}}$

Größen, welche sich auf das Werkzeug beziehen, werden mit Index 1 versehen und solche, die sich auf das Werkstück beziehen mit Index 2.

Für das Fertigen evolventischer Verzahnungen wird ein Werkzeug verwendet, welches ebenfalls eine Evolventenverzahnung, in der Regel mit großem Schrägungswinkel ist. Während des Bearbeitungsprozesses gibt es theoretischen Punktkontakt zwischen dem Werkzeug und der Endgeometrie der zu fertigenden Verzahnung. Die Oberflächen der Zahnflanken, sowohl des Werkstücks als auch des Werkzeugs, werden typischerweise über den Wälzweg (w) und die Position in Breitenlinienrichtung (z) parametrisiert.

$$E_F(w,z)$$

$$= \begin{pmatrix} r_{bF} \cdot \sin\left(s_F \cdot \left(\dfrac{w}{r_{bF}} + \eta_{bF}\right) - \dfrac{z \cdot \tan(\beta_{bF})}{r_{bF}}\right) - s_F \cdot w \cdot \cos\left(s_F \cdot \left(\dfrac{w}{r_{bF}} + \eta_{bF}\right) - \dfrac{z \cdot \tan(\beta_{bF})}{r_{bF}}\right) \\ r_{bF} \cdot \cos\left(s_F \cdot \left(\dfrac{w}{r_{bF}} + \eta_{bF}\right) - \dfrac{z \cdot \tan(\beta_{bF})}{r_{bF}}\right) + s_F \cdot w \cdot \sin\left(s_F \cdot \left(\dfrac{w}{r_{bF}} + \eta_{bF}\right) - \dfrac{z \cdot \tan(\beta_{bF})}{r_{bF}}\right) \\ z \end{pmatrix}$$

$$(1)$$

$s_F$ dient dazu, Gleichungen für linke und rechte Flanken in einer kompakten Form zu schreiben und ist definiert durch:

$$s_F := \begin{cases} +1, \text{ für linke Flanken} \\ -1, \text{ für rechte Flanken} \end{cases}$$

Diese Parametrisierung erlaubt es einfache Beziehungen für den Verlauf des Kontaktpunkts (Kontaktpfad) auf Werkzeug und Werkstück zu berechnen. Dieser Verlauf wird auf dem Werkstück durch seinen Axialvorschub kontinuierlich verschoben. Die Kenntnis über diese Verläufe ermöglicht es, einem Punkt auf dem Werkzeug eindeutig einen Punkt auf dem Werkstück zuzuordnen und umgekehrt.

Um die Zusammenhänge mathematisch zu formulieren werden folgende Definitionen gemacht:
Für Transformationen werden folgende Bezeichnungen verwendet:

- $R_x(\varphi)$ Rotation um den Winkel $\varphi$ um die x-Achse. Analog für $y$ und $z$
- $T_x(\nu)$ Translation um die Strecke $\nu$ in x-Richtung. Analog für $y$ und $z$
- $H(A_1, \ldots, A_N)$ allgemeine Transformation beschreibbar durch eine homogene Matrix mit insgesamt $N$ Koordinaten $A_1$ bis $A_N$.

Der Begriff "Koordinaten" wird hier für generalisierte, nicht notwendigerweise unabhängige Koordinaten verwendet.

Die Rotationsachse einer Verzahnung fällt in ihrem Ruhesystem immer mit der z-Achse zusammen. Die Verzahnungsmitte liegt bei z = 0. Für die hier betrachteten im Allgemeinen asymmetrischen Verzahnungen ist die Zahndicke durch die Summe $\Sigma \eta_b := \eta_{bl} + \eta_{br}$ der Grundlückenhalbwinkel $\eta_{bF}$ der linken und rechten Flanke gegeben. Diese Summe wird hier als Grundlückenwinkel bezeichnet. Die Zahndicke wird hier synonym für die Größen Kugelmaß, Zahnweite, $\Sigma \eta_b$ oder ein anderes Prüfmaß verwendet.

Weiterhin wichtig für die Formulierung der Zusammenhänge ist es, die kinematischen Ketten, welche die Relativstellungen zwischen Werkstück und Werkzeug beschreiben, zu definieren. Diese hängt davon ab, ob Werkzeug bzw. Werkstück zylindrisch oder konisch ausgeführt sind. Betrachtet werden hier alle vier möglichen Kombinationen.

**Kinematische Kette für zylindrisches Werkzeug und Werkstück**

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_z(\varphi_2) \tag{2}$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Axialvorschub des Werkstücks.
- d: Achsabstand (Werkzeug/Werkstück)
- y: Achskreuzwinkel (Werkzeug/Werkstück)

**Kinematische Kette für konisches Werkzeug und zylindrisches Werkstück**

Die relative Lage zwischen Werkzeug und Werkstück wird durch die folgende kinematische Kette $K_R$ beschrieben:

$$K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_z(\varphi_2) \tag{3}$$

- $\varphi_1$. Drehwinkel Werkzeug.
- $\varphi_2$: Drehwinkel Werkstück.
- $z_{V1}$: Vorschub des Werkzeug (auch Shiftposition genannt).
- $z_{V2}$: Axialvorschub des Werkstücks.
- d: Maß für Achsabstand (Werkzeug/Werkstück)
- y: Achskreuzwinkel (Werkzeug/Werkstück)
- $\upsilon_1$: Konuswinkel Werkzeug
- $r_{w1}$: Wälzkreisradius des Werkzeugs

Kinematische Kette für zylindrisches Werkzeug und konisches Werkstück

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_x(-\vartheta_2) \cdot T_y(-r_{w2}) \cdot R_z(\varphi_2) \tag{4}$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Vorschub des Werkstücks.
- $d$: Maß für Achsabstand (Werkzeug/Werkstück)
- $\gamma$. Achskreuzwinkel (Werkzeug/Werkstück)
- $\vartheta_2$: Konuswinkel Werkstück
- $r_{w2}$: Wälzkreisradius des Werkstücks

**Kinematische Kette für konisches Werkzeug und konisches Werkstück**

Die relative Lage zwischen Werkzeug und Werkstück wird durch die folgende kinematische Kette $K_R$ beschrieben:

$$K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_x(-\vartheta_2) \cdot$$
$$T_y(-r_{w2}) \cdot R_z(\varphi_2) \tag{5}$$

- $\varphi_1$: Drehwinkel Werkzeug.
- $\varphi_2$: Drehwinkel Werkstück.
- $z_{V1}$: Vorschub des Werkzeugs (auch Shiftposition genannt).
- $z_{V2}$: Vorschub des Werkstücks.
- d: Maß für Achsabstand (Werkzeug/Werkstück)
- y: Achskreuzwinkel (Werkzeug/Werkstück)
- $\vartheta_1$: Konuswinkel Werkzeug
- $\vartheta_2$: Konuswinkel Werkstück
- $r_{w1}$: Wälzkreisradius des Werkzeugs
- $r_{w2}$: Wälzkreisradius des Werkstücks

Ist das Werkzeug und/oder Werkstück konisch, so wird im Folgenden das Maß für Achsabstand auch nur als Achsabstand bezeichnet.

Diese kinematischen Ketten dienen zunächst erst einmal nur der mathematischen Beschreibung der hier beschriebenen Erfindung. Sie müssen nicht mit den physikalischen Achsen der Maschine, auf der die Erfindung angewendet wird, übereinstimmen. Verfügt die Maschine über einen Bewegungsapparat, der Relativstellungen zwischen Werkzeug und Werkstück gemäß einer Transformation

$$H(A_1, \ldots, A_{N_s}) \text{ mit } N_s \geq 1 \tag{6}$$

ermöglicht, so kann die Erfindung auf dieser Maschine angewendet werden, wenn zu jedem Satz an Koordinaten aus den gerade beschriebenen kinematischen Ketten, welcher in dieser Erfindung berechnet wird, Koordinaten $A_1, \ldots, A_{N_s}$ existieren, mit

$$H\left(A_1, \ldots, A_{N_s}\right) = K_R \tag{7}$$

Die Berechnung der Koordinaten $A_1, \ldots, A_{N_s}$ kann mittels einer Koordinatentransformation durchgeführt werden.

Typische Bewegungsapparate, die alle geforderten Relativstellungen ermöglichen sind beispielsweise durch folgende kinematischen Ketten beschrieben:

$$H_{Bsp1} = R_z(\phi_{B1}) \cdot T_z(-v_{V1}) \cdot R_x(90° - \phi_{A1}) \cdot T_z(-v_{Z1}) \cdot T_x(-v_{X1}) \cdot R_z(\phi_{C2}) \tag{8}$$

$$H_{Bsp2} = R_z(\phi_{B1}) \cdot R_x(90° - \phi_{A1}) \cdot T_z(-v_{Y1}) \cdot T_z(-v_{Z1}) \cdot T_x(-v_{X1}) \cdot R_z(\phi_{C2}) \tag{9}$$

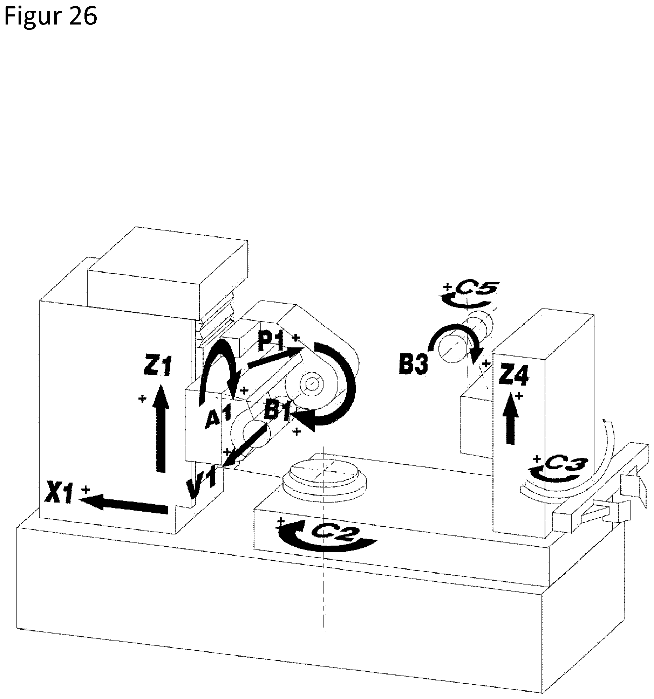

Figur 26 zeigt schematisch eine Verzahnmaschine mit einem durch $H_{Bsp1}$ beschriebenen Bewegungsapparat.

Figur 26 zeigt eine perspektivische Ansicht einer Verzahnmaschine mit einer Abrichtmaschine, welche zur Durchführung der erfindungsgemäßen Verfahren einsetzbar ist. Die Verzahnmaschine weist einen links dargestellten Bearbeitungskopf mit einer Werkzeugaufnahme, eine mittig dargestellte Werkstückaufnahme und eine rechts schematisch dargestellte Abrichteraufnahme auf. Zur Durchführung einer Verzahnbearbeitung kann ein in der Werkstückaufnahme eingespanntes Werkstück durch ein in der Werkzeugaufnahme eingespanntes Werkzeug bearbeitet werden. Zur Durchführung eines Abrichtverfahrens kann das in der Werkzeugaufnahme eingespannte Werkzeug durch einen in der Abrichteraufnahme eingespannten Abrichter bearbeitet werden. Dies hat den Vorteil, dass das Werkzeug zum Abrichten in der Werkzeugaufnahme verbleiben kann. Weiterhin können die Bewegungsachsen des Bearbeitungskopfes zur Einstellung der Relativposition von Werkzeug und Abrichter beim Abrichter eingesetzt werden. Für die Durchführung eines erfindungsgemäßen Verfahrens zur Wälzbearbeitung eines Werkstücks ist die Abrichtfunktionalität jedoch nicht notwendig, so dass bei der hierfür eingesetzten Verzahnmaschine auch auf diese verzichtet werden kann.

Die Verzahnmaschine weist zur Durchführung der Verzahnbearbeitung eines Werkstücks die Bewegungsachsen A1, B1, V1, X1, Z1 zum Bewegen der Werkzeugaufnahme und C2 zum Bewegen der Werkstückaufnahme auf.

Im Einzelnen ermöglicht B1 eine Rotation des Werkzeugs um seine Drehachse, X1 eine translatorische Bewegung des Werkzeugs senkrecht zur Drehachse des Werkzeugs bzw. Werkstücks, Z1 eine translatorische Bewegung des Werkzeugs in vertikaler Richtung bzw. parallel zur Drehachse des Werkstücks, A1 eine Schwenkbewegung des Werkzeugs, V1 eine Tangentialbewegung bzw. Shiftbewegung des Werkzeugs in Richtung seiner Drehachse, C2 eine Drehbewegung des Werkstücks.

Die Verzahnmaschine weist zur Durchführung eines Abrichtverfahrens weiterhin die Bewegungsachsen B3, C5 zum Bewegen des Abrichters auf. Die Achse B3 ermöglicht eine Rotationsbewegung des Abrichtwerkzeugs um seine Drehachse, sowie C5 eine Schwenkbewegung des Abrichtwerkzeugs zur Änderung des Eingriffswinkels $\alpha$ am Werkzeug.

Die Schwenkachse C5 ist jedoch für die hier diskutierten Verfahren nicht zwingend notwendig. Wird eine Abrichtfliese eingesetzt, ist auch die Drehachse B5 nicht notwendig.

Es können weiterhin auch andere Verzahn- und/oder Abrichtmaschinen zur Durchführung der erfindungsgemäßen Verfahren eingesetzt werden.

In der in Fig. 26 dargestellten Ausführung einer Verzahnmaschine, wird eine Änderung des Achskreuzwinkels y über die A1-Achse realisiert.

Während des Bearbeitungsprozesses wird die $z_{V2}$-Koordinate verfahren und so der Vorschub des Werkstücks realisiert. Bei zylindrischen Rädern ist dies der Axialvorschub, bei konischen Rädem ist dieser Vorschub nicht axial, sondern um den Konuswinkel $\vartheta_2$ gegenüber der Achse der Verzahnung verkippt.

Im weiteren Verlauf wird jedoch auch für zylindrische Werkzeuge bzw. Werkstücke für zvl bzw. $z_{V2}$ der Begriff Vorschub verwendet.

In einigen Ausgestaltungsformen dieser Erfindung kommt ein Diagonalwälzverfahren zum Einsatz, bei dem während der Bearbeitung die Axialvorschubposition $z_{V1}(z_{V2})$ des Werkzeugs in Abhängigkeit von der Axialvorschubposition $z_{V2}$ geändert wird. $z_{V1}(z_{V2})$ ist eine stetige, bevorzugt stetig differenzierbare Funktion. Die Ableitung von $z_{V1}(z_{V2})$ nach $z_{V2}$ wird als Diagonalverhältnis bezeichnet und ist im Allgemeinen nicht konstant. Wird mit einem konstanten Diagonalverhältnis bearbeitet, so gilt folgender Zusammenhang:

$$z_{V1}(z_{V2}) = K_{Z_{V1}} \cdot z_{V2} + z_{V01} \tag{10}$$

$K_{Z_{V1}}$ ist hierbei das Diagonalverhältnis und $z_{V01}$ ein fixer Offset, der es ermöglicht, den Bereich auf dem Werkzeug auszuwählen, der genutzt werden soll. Ist $K_{Z_{V1}} = 0$ wird vom Axialwälzverfahren gesprochen.

Wie sich die Drehzahl des Werkstücks und/oder des Werkzeugs und/oder der Vorschub des Werkzeugs und/oder des Werkstücks während der Bearbeitung zeitlich und/oder relativ zu einander verhalten, spielt bei diesem Verfahren keine Rolle, da allein die Kopplung zwischen $z_{V1}$ und $z_{V2}$ betrachtet wird. Die Drehzahlen und Vorschübe können während der Bearbeitung verändert werden, solange die geforderten Kopplungen eingehalten werden.

Die vier möglichen Kombinationen aus zylindrischen bzw. konischen Werkzeugen und Werkstücken werden separat betrachtet. Ausgangspunkt ist jeweils die mathematische Beschreibung des Verlaufs des Kontaktpunkts auf Werkzeug und Werkstück beim Wälzschleifen als Relation zwischen dem Wälzweg (w) und der Position in Breitenlinienrichtung (z) in Abhängigkeit der Vorschubpositionen $z_{V1}$ und $z_{V2}$.

## Zylindrisches Werkzeug und zylindrisches Werkstück

Im Folgenden wird der Verlauf des Kontaktpunkts zwischen Werkstück und Werkzeug, abhängig von den Axialvorschüben $z_{V1}$ und $z_{V2}$ beschrieben. Dieser Verlauf hängt von den Grundkreisradien und Grundschrägungswinkeln des Werkstücks und des Werkzeugs sowie vom Achsabstand d und dem Achskreuzwinkel y ab. Die Relative Lage von Werkstück zu Schnecke wird bei dieser Betrachtung durch Gleichung (2) beschrieben. Mathematisch beschrieben werden kann dieser Verlauf als Relation (R6) zwischen Position in Breitenlinienrichtung ($z_F$) und Wälzweg ($w_F$) für Werkzeug (Index 1) und Werkstück (Index 2) wie folgt:

$$z_{F1} = C_{Fw1} \cdot w_{F1} - z_{V1} + C_{Fc1} \tag{11}$$

$$z_{F2} = C_{Fw2} \cdot w_{F2} - z_{V2} + C_{Fc2} \tag{12}$$

Die hier eingeführten Koeffizienten $C_{Fw1}$, $C_{Fc1}$, $C_{Fw2}$ und $C_{Fc2}$ haben folgende Abhängigkeiten:

$$C_{Fw1} = C_{Fw1}(\beta_{bF1}) \tag{13}$$

$$C_{Fc1} = C_{Fc1}(\beta_{bF1}, \beta_{bF2}, r_{bF1}, d, \gamma) \tag{14}$$

$$C_{Fw2} = C_{Fw2}(\beta_{bF2}) \tag{15}$$

$$C_{Fc2} = C_{Fc2}(\beta_{bF1}, \beta_{bF2}, r_{bF2}, d, \gamma) \tag{16}$$

Diese Relation zeigt auf, dass es einen linearen Zusammenhang zwischen $z_F$, $w_F$ und $z_V$ sowohl für Werkzeug als auch für Werkstück gibt.

Betrachtet man im Herstellprozesses alle Punkte auf dem Werkstück mit einen festen Wälzweg $w_{F2}$, so berühren all diese Punkte auf der Schnecke nur Punkte mit einem daraus resultierenden Wälzweg $w_{F1}$. Die Relation (R7) zwischen den Wälzwegen sich berührender Punkte auf Werkzeug und Werkstück ist gegeben durch:

$$\hat{C}_{Fw1} \cdot w_{F1} + \hat{C}_{Fw2} \cdot w_{F2} + \hat{C}_{Fc} = 0 \tag{17}$$

Die hier eingeführten Koeffizienten $C_{Fw1}$, $\hat{C}_{Fw2}$ und $\hat{C}_{Fc}$ haben folgende Abhängigkeiten:

$$\hat{C}_{Fw1} = \hat{C}_{Fw1}(\beta_{bF1}) \tag{18}$$

$$\hat{C}_{Fw2} = \hat{C}_{Fw2}(\beta_{bF2}) \tag{19}$$

$$\hat{C}_{Fc} = \hat{C}_{Fc}(\beta_{bF1}, r_{bF1}, \beta_{bF2}, r_{bF2}, d, \gamma) \tag{20}$$

Die gerade vorgestellten Relationen folgen direkt aus einer analytischen Berechnung der Berührpunkte zweier Evolventenverzahnungen, welche gemäß der kinematischen Kette aus Gleichung (2) zueinander orientiert sind.

Mit den Gleichungen (11), (12) und (17) ist es möglich für gegebene Axialvorschübe $z_{V1}$ und $z_{V2}$, jedem Punkt $(w_{F2}, z_{F2})$ auf dem Werkstück einen Punkt $(w_{F1}, z_{F1})$ auf dem Werkzeug zuzuordnen und umgekehrt, jedem Punkt auf dem Werkzeug ein Punkt auf dem Werkstück.

Konisches Werkzeug und zylindrisches Werkstück

Bisher sind die hier betrachteten Bearbeitungsverfahren nur mit zylindrischen Werkzeugen bekannt. Es ist jedoch auch möglich, konische Werkzeuge einzusetzen. Die Kinematik dieses Prozesses kann durch ein Schraubwälzgetriebe mit einem konischen und einem zylindrischen Rad beschrieben werden. Diese Kinematik wird durch die in Gleichung (3) angegebene kinematische Kette beschrieben. Wie beim Schraubwälzgetriebe, bestehend aus zwei zylindrischen Rädern, gibt es auch hier zwischen beiden Rädern einen theoretischen Punktkontakt. Dies erlaubt es, denselben Ansatz wie für zylindrische Werkzeuge zu verwenden. Der Verlauf des Kontaktpunkts zwischen Werkstück und Werkzeug kann wie folgt mathematisch beschrieben werden.

$$z_{F1} = C_{Fw1} \cdot w_{F1} + C_{Fz_{V1}1} \cdot z_{V1} + C_{Fc1} \tag{21}$$

$$z_{F2} = C_{Fw2} \cdot w_{F2} + C_{Fz_{V1}2} \cdot z_{V1} - z_{V2} + C_{Fc2} \tag{22}$$

Die hier eingeführten Koeffizienten $C_{Fw1}$, $C_{Fc1}$, $C_{Fw2}$, $C_{Fzv11}$, $C_{Fzv12}$ und $C_{Fc2}$ haben folgende Abhängigkeiten:

$$C_{Fw1} = C_{Fw1}(\beta_{bF1}) \tag{23}$$

$$C_{Fc1} = C_{Fc1}(\beta_{bF1}, \beta_{bF2}, r_{bF1}, d, \gamma, \vartheta_1) \tag{24}$$

$$C_{Fw2} = C_{Fw2}(\beta_{bF2}) \tag{25}$$

$$C_{Fc2} = C_{Fc2}(\beta_{bF1}, \beta_{bF2}, r_{bF2}, d, \gamma, \vartheta_1) \tag{26}$$

$$C_{Fz_{V_1}1} = C_{Fz_{V_1}1}(\beta_{bF1}, \beta_{bF2}, r_{bF1}, d, \gamma, \vartheta_1) \tag{27}$$

$$C_{Fz_{V_1}2} = C_{Fz_{V_1}2}(\beta_{bF1}, \beta_{bF2}, r_{bF2}, d, \gamma, \vartheta_1) \tag{28}$$

Gleichung (17) wird ersetzt durch:

$$\hat{C}_{Fw1} \cdot w_{F1} + \hat{C}_{Fw2} \cdot w_{F2} + \hat{C}_{Fz_{V_1}} \cdot z_{V1} + \hat{C}_{Fc} = 0 \tag{29}$$

Die hier eingeführten Koeffizienten $C_{Fw1}$, $\hat{C}_{Fw2}$, $\hat{C}_{Fz_{V1}}$ und $\hat{C}_{Fc}$ haben folgende Abhängigkeiten:

$$\hat{C}_{Fw1} = \hat{C}_{Fw1}(\beta_{bF1}) \tag{30}$$

$$\hat{C}_{Fw2} = \hat{C}_{Fw2}(\beta_{bF2}) \tag{31}$$

$$\hat{C}_{Fz_{V1}} = \hat{C}_{Fz_{V1}}(\beta_{bF1}, r_{bF1}, \beta_{bF2}, r_{bF2}, \gamma, \vartheta_1) \tag{32}$$

$$\hat{C}_{Fc} = \hat{C}_{Fc}(\beta_{bF1}, r_{bF1}, \beta_{bF2}, r_{bF2}, d, \gamma, \vartheta_1) \tag{33}$$

Mit der Kenntnis dieser Beziehungen kann analog zum Fall zylindrischer Werkzeuge und Werkstücke eine Abbildung von Punkten auf dem Werkzeug zu Punkten auf dem Werkstück und umgekehrt berechnet werden.

**Zylindrisches Werkzeug und konisches Werkstück**

Das hier beschriebene Verfahren lässt sich direkt auf das Fertigen konischer Werkstücke übertragen. Zunächst wird hier der Fall eines zylindrischen Werkzeugs betrachtet. Werkzeug und Werkstück bilden wieder ein Schraubwälzgetriebe, dessen Kinematik durch Gleichung (4) gegeben ist. Auch hier liegt wieder theoretischer Punktkontakt zwischen Werkzeug und Werkstück vor. Der Verlauf des Kontaktpunkts zwischen Werkstück und Werkzeug kann wie folgt mathematisch beschrieben werden.

$$z_{F1} = C_{Fw1} \cdot w_{F1} - z_{V1} + C_{Fz_{V_2}1} \cdot z_{V2} + C_{Fc1} \tag{34}$$

$$z_{F2} = C_{Fw2} \cdot w_{F2} + C_{Fz_{V_2}2} \cdot z_{V2} + C_{Fc2} \tag{35}$$

Die hier eingeführten Koeffizienten $C_{Fw1}$, $C_{Fc1}$, $C_{Fw2}$, $C_{Fz_{V2}2}$, $C_{Fz_{V2}1}$ und $C_{Fc2}$ haben folgende Abhängigkeiten:

$$C_{Fw1} = C_{Fw1}(\beta_{bF1}) \tag{36}$$

$$C_{Fc1} = C_{Fc1}(\beta_{bF1}, \beta_{bF2}, r_{bF1}, d, \gamma, \vartheta_2) \tag{37}$$

$$C_{Fw2} = C_{Fw2}(\beta_{bF2}) \tag{38}$$

$$C_{Fc2} = C_{Fc2}(\beta_{bF1}, \beta_{bF2}, r_{bF2}, d, \gamma, \vartheta_2) \tag{39}$$

$$C_{Fz_{V2}2} = C_{Fz_{V2}2}(\beta_{bF1}, \beta_{bF2}, r_{bF2}, d, \gamma, \vartheta_2) \tag{40}$$

$$C_{Fz_{V2}1} = C_{Fz_{V2}1}(\beta_{bF1}, \beta_{bF2}, r_{bF1}, d, \gamma, \vartheta_2) \tag{41}$$

Gleichung (17) wird ersetzt durch:

$$\hat{C}_{Fw1} \cdot w_{F1} + \hat{C}_{Fw2} \cdot w_{F2} + \hat{C}_{Fz_{V2}} \cdot z_{V2} + \hat{C}_{Fc} = 0 \tag{42}$$

Die hier eingeführten Koeffizienten $\hat{C}_{Fw1}$, $\hat{C}_{Fw2}$, $\hat{C}_{Fz_{V2}}$ und $\hat{C}_{Fc}$ haben folgende Abhängigkeiten:

$$\hat{C}_{Fw1} = \hat{C}_{Fw1}(\beta_{bF1}) \tag{43}$$

$$\hat{C}_{Fw2} = \hat{C}_{Fw2}(\beta_{bF2}) \tag{44}$$

$$\hat{C}_{Fz_{V2}} = \hat{C}_{Fz_{V2}}(\beta_{bF1}, r_{bF1}, \beta_{bF2}, r_{bF2}, \gamma, \vartheta_2) \tag{45}$$

$$\hat{C}_{Fc} = \hat{C}_{Fc}(\beta_{bF1}, r_{bF1}, \beta_{bF2}, r_{bF2}, d, \gamma, \vartheta_2) \tag{46}$$

Mit der Kenntnis dieser Beziehungen kann analog zum Fall zylindrischer Werkzeuge und Werkstücke eine Abbildung von Punkten auf dem Werkzeug zu Punkten auf dem Werkstück und umgekehrt berechnet werden.

Konisches Werkzeug und konisches Werkstück

Die Berechnung für ein konisches Werkzeug und ein konisches Werkstück erfolgt analog zu den bisher behandelten Kombinationen. Werkzeug und Werkstück bilden wieder ein Schraubwälzgetriebe, dessen Kinematik durch Gleichung (5) gegeben ist. Auch hier liegt wieder theoretischer Punktkontakt zwischen Werkzeug und Werkstück vor. Der Verlauf des Kontaktpunkts zwischen Werkstück und Werkzeug kann wie folgt mathematisch beschrieben werden.

$$z_{F1} = C_{Fw1} \cdot w_{F1} + C_{Fz_{V1}1} \cdot z_{V1} + C_{Fz_{V2}1} \cdot z_{V2} + C_{Fc1} \tag{47}$$

$$z_{F2} = C_{Fw2} \cdot w_{F2} + C_{Fz_{V1}2} \cdot z_{V1} + C_{Fz_{V2}2} \cdot z_{V2} + C_{Fc2} \tag{48}$$

Die hier eingeführten Koeffizienten $C_{Fw1}$, $C_{Fc1}$, $C_{Fw2}$, $C_{Fz_{V2}2}$, $C_{Fz_{V2}1}$, $C_{Fz_{V1}2}$, $C_{Fz_{V1}1}$ und $C_{Fc2}$ haben folgende Abhängigkeiten:

$$C_{Fw1} = C_{Fw1}(\beta_{bF1}) \tag{49}$$

$$C_{Fc1} = C_{Fc1}(\beta_{bF1}, \beta_{bF2}, r_{bF1}, d, \gamma, \vartheta_1, \vartheta_2) \tag{50}$$

$$C_{Fw2} = C_{Fw2}(\beta_{bF2}) \tag{51}$$

$$C_{Fc2} = C_{Fc2}(\beta_{bF1}, \beta_{bF2}, r_{bF2}, d, \gamma, \vartheta_1, \vartheta_2) \tag{52}$$

$$C_{Fz_{V2}2} = C_{Fz_{V2}2}(\beta_{bF1}, \beta_{bF2}, r_{bF2}, d, \gamma, \vartheta_1, \vartheta_2) \tag{53}$$

$$C_{Fz_{V2}1} = C_{Fz_{V2}1}(\beta_{bF1}, \beta_{bF2}, r_{bF1}, d, \gamma, \vartheta_1, \vartheta_2) \tag{54}$$

$$C_{Fz_{V1}2} = C_{Fz_{V1}2}(\beta_{bF1}, \beta_{bF2}, r_{bF2}, d, \gamma, \vartheta_1, \vartheta_2) \tag{55}$$

$$C_{Fz_{V1}1} = C_{Fz_{V1}1}(\beta_{bF1}, \beta_{bF2}, r_{bF1}, d, \gamma, \vartheta_1, \vartheta_2) \tag{56}$$

Gleichung (17) wird ersetzt durch:

$$\hat{C}_{Fw1} \cdot w_{F1} + \hat{C}_{Fw2} \cdot w_{F2} + \hat{C}_{Fz_{V1}} \cdot z_{V1} + \hat{C}_{Fz_{V2}} \cdot z_{V2} + \hat{C}_{Fc} = 0 \tag{57}$$

Die hier eingeführten Koeffizienten $C_{Fw1}$, $\hat{C}_{Fw2}$, $\hat{C}_{Fz_{V1}}$, $\hat{C}_{Fz_{V2}}$ und $\hat{C}_{Fc}$ haben folgende Abhängigkeiten:

$$\hat{C}_{Fw1} = \hat{C}_{Fw1}(\beta_{bF1}) \tag{58}$$

$$\hat{C}_{Fw2} = \hat{C}_{Fw2}(\beta_{bF2}) \tag{59}$$

$$\hat{C}_{Fz_{V1}} = \hat{C}_{Fz_{V1}}(\beta_{bF1}, r_{bF1}, \beta_{bF2}, r_{bF2}, \gamma, \vartheta_1, \vartheta_2) \tag{60}$$

$$\hat{C}_{Fz_{V2}} = \hat{C}_{Fz_{V2}}(\beta_{bF1}, r_{bF1}, \beta_{bF2}, r_{bF2}, \gamma, \vartheta_1, \vartheta_2) \tag{61}$$

$$\hat{C}_{Fc} = \hat{C}_{Fc}(\beta_{bF1}, r_{bF1}, \beta_{bF2}, r_{bF2}, d, \gamma, \vartheta_1, \vartheta_2) \tag{62}$$

Mit der Kenntnis dieser Beziehungen kann analog zum Fall zylindrischer Werkzeuge und Werkstücke eine Abbildung von Punkten auf dem Werkzeug zu Punkten auf dem Werkstück und umgekehrt berechnet werden.

Berechnungsansatz zur Berechnung der Kontaktpfade auf Werkzeug und Werkstück

Im Folgenden wird ein Berechnungsansatz aufgezeigt, mit dem sich die oben verwendeten Kontaktpfade, abhängig von den Vorschüben berechnen lassen. Diese Berechnung der Berührung zwischen Werkstück und Werkzeug wird mit Hilfe zweier theoretischer Zahnstangen (auch Planverzahnungen genannt), je einer für Werkstück und Werkzeug, jeweils mit trapezförmigen im Allgemeinen asymmetrischen Profilen, welche die Verzahnungen generieren können, durchgeführt. Da sowohl Werkzeug als auch Werkstück Evolventenverzahnungen sind, ist diese Betrachtung symmetrisch gegen Vertauschen von Werkzeug und Werkstück.

Figur 3 zeigt beispielhaft die Berührung einer rechten evolventischen Flanke mit einer generierenden Zahnstange mit Profilwinkel $\alpha_{twr}$ im Stirnschnitt. Die Verzahnung ist um den Drehwinkel $\varphi$ gedreht. Die Berührung zwischen Flanke und Zahnstange findet in der Eingriffsebene $P_r$ statt, welche um $\alpha_{twr}$ geneigt ist. Der Berührpunkt zwischen Flanke und Zahnstange ergibt sich für alle Drehwinkel $\varphi$ als Schnittpunkt zwischen Flanke und Eingriffsebene. Während die Verzahnung dreht, wird die Zahnstange waagerecht verschoben, so dass sie schlupffrei auf dem Wälzkreis mit Radius $r_w$ abrollt. Dadurch bleiben Flanke und Zahnstange in Berührung. Um die Verzahnung in ihrer ganzen Breite zu beschreiben, muss die relative Lage der Zahnstange zur Verzahnung in 3D betrachtet werden. Für zylindrische Verzahnungen wird diese um den Schrägungswinkel $\beta_w$ geschwenkt. Für den Fall einer konischen Verzahnung ist die Lage der Zahnstange zur Verzahnung in [Zierau] (Die geometrische Auslegung konischer Zahnräder und Paarungen mit parallelen Achsen, Bericht Nr. 32, Institut für Konstruktionslehre, Technische Universität Braunschweig) ausführlich beschrieben. Zusätzlich zum Schwenken um den Schrägungswinkel $\beta_w$ erfolgt ein Kippen um den Konuswinkel $\vartheta$ (siehe Figur 2). In beiden Fällen hat die Zahnstange im Normalschnitt die Profilwinkel $\alpha_{nwF}$. Welche Kombinationen von Winkeln $\alpha_{twF}$, $\alpha_{nwF}$ und $\beta_w$ sowie Normalmodul $m_n$ und Stirnmodul $m_t$ möglich sind, um eine gegebene Verzahnung zu erzeugen, ergibt sich für zylindrische Verzahnungen aus dem Formelwerk der DIN3960 und für konische zusätzlich aus dem Formelwerk aus [Zierau]. Die hierzu nötigen Formeln lassen sich durch Einführung unterschiedlicher Profilwinkel auf linker und rechter Seite direkt auf asymmetrische Verzahnungen übertragen.

Sind Geometrie und relative Lage der Zahnstange zur Verzahnung bekannt, so können die Stirnschnitte für beliebige Breitenpositionen bestimmt werden und in ihnen der Berührpunkt zwischen Zahnstange und Flanke. All diese Berührpunkte in den einzelnen Stirnschnitten bilden für einen Drehwinkel $\varphi$ eine Gerade (Berührgerade) in der Eingriffsebene. Beschreibt man diese Berührpunkte über $w$ und $z$ aus der Parametrisierung in Gleichung (1), so erhält man einen linearen Zusammenhang (R1) zwischen w, z und $\varphi$. Wird die Zahnstange im Raum festgehalten, so ist es für zylindrische Verzahnungen möglich, diese in axialer Richtung zu verschieben. Dieser Axialvorschub $z_V$ wird typischerweise für das Werkstück eingestellt, um dieses über die ganze verzahnte Breite zu bearbeiten und für das Werkzeug eingestellt, um das Diagonalverhältnis einzustellen. Damit die Verzahnung weiterhin, in der Regel zweiflankig die Zahnstange berührt, muss die Verzahnung zusätzlich zur Verschiebung um ihre Achse gedreht werden. Der Betrag der Drehung ergibt sich aus der Steigungshöhe der Verzahnung und dem Betrag der Verschiebung, der Drehsinn aus der Steigungsrichtung. Bei konischen Verzahnungen erfolgt der Vorschub $z_V$ nicht in axialer Richtung, sondern gegenüber dieser um den Konuswinkel $\vartheta$ gekippt. Die für die Berechnung der Drehwinkelkorrektur nötige Steigunsghöhe errechnet sich nach derselben Formel wie für zylindrische Verzahnungen aus $\beta_w$ und $m_t$. Zur Berechnung der Berührpunkte in den einzelnen Stirnschnitten sind die Stirnschnitte, abhängig vom Axialvorschub bzw. Vorschub mit den entsprechend korrigierten Drehwinkeln zu betrachten. Für die Beschreibung der Berührpunkte ergibt sich aus (R1) ein linearer Zusammenhang (R2) zwischen w, z, $z_V$ und $\varphi$.

Werden zwei Verzahnungen in einem Schraubwälzgetriebe gepaart, so müssen deren beiden Zahnstangen zu jeder Zeit deckungsgleich sein, wie in Figur 1 gezeigt. Das impliziert, dass die Profilwinkel $\alpha_{nwF}$ für beide Verzahnungen gleich sein müssen. Des Weiteren ergibt sich daraus (R3): $y + \beta_{w1} + \beta_{w2} = 0$. Diese Bedingung erlaubt es, aus einem gegebenen Achskreuzwinkel für zwei gegebene Verzahnungen, welche mit einander kämmen können, die Profilwinkel im Normal- bzw. Stirnschnitt der beiden Zahnstangen zu ermitteln. Eine Änderung der Grundkreisradien und der Grundschrägungswinkel der Schnecke ist somit gleichbedeutend mit einer Änderung des Profilwinkel und/oder des Konuswinkels und/oder des Achskreuzwinkels.

Damit die Zahnstangen zu jeder Zeit deckungsgleich sind, ergibt sich eine lineare Zwangsbedingung (R4) zwischen den beiden Drehwinkel und den beiden Vorschüben.

Sind die beiden Drehwinkel und die beiden Vorschübe bekannt, so lässt sich der Berührpunkt der beiden Verzahnungen direkt durch Berechnung des Schnittpunkts der beiden Berührgeraden bestimmen. Die Parameter $z_{F1}$ und $w_{F1}$ bzw. $z_{F2}$ und $w_{F2}$, welche den Berührpunkt auf Verzahnung 1 bzw. Verzahnung 2 beschreiben, hängen linear von $\varphi_1$, $\varphi_2$, $z_{V1}$ und $z_{V2}$ ab (R5). Eliminiert man in diesen Relationen die Drehwinkel, so folgen die gesuchten Kontaktpfade (R6).

Aus (R4) und (R2) für beide Verzahnungen ergibt sich durch Eliminieren von $\varphi_1$ und $\varphi_2$ ein linearer Zusammenhang (R7) zwischen $w_{F1}$, $w_{F2}$, $z_{V1}$ und $z_{V2}$, welche, abhängig vom Vorschub beschreibt, welcher Wälzweg auf Verzahnung 1 welchen Wälzweg auf Verzahnung 2 berührt.

Damit Werkzeug und Werkstück miteinander kämmen, muss gelten:

$$m_{bF1} \cdot \cos \beta_{bF1} = m_{bF2} \cdot \cos \beta_{bF2} \tag{63}$$

Die lineare Zwangsbedingung (R4) hat folgende Form:

$$a_F + b_1 \cdot z_{V1} + s_F \cdot z_1 \cdot \eta_{bF1} - z_1 \cdot \varphi_1 + b_2 \cdot z_{V2} + s_F \cdot z_2 \cdot \eta_{bF2} - z_2 \cdot \varphi_2 + e_F \cdot d = 0 \tag{64}$$

Hierbei sind die Koeffizienten

$$a_F, e_F \tag{65}$$

sowohl von den Grundgrößen der Verzahnungen als auch von y und bei konischen Verzahnungen von den Konuswinkeln abhängig. Die Koeffizienten

$$b_1, b_2 \tag{66}$$

sind bei zylindrischen Verzahnungen nur von den Grundgrößen abhängig, bei konischen Verzahnungen ist der entsprechende Koeffizient zusätzlich von y und dem entsprechenden Konuswinkel abhängig.

Mit den Grundgrößen sind hier die Grundkreisradien, die Grundschrägungswinkel und die Zähne-/ Gangzahlen ($z_1$ und $z_2$) gemeint.

Sind Werkzeug und/oder Werkstück konisch, so ist zu beachten, dass die aufgezeigte Berechnung eine Abhängig von $r_w$ von y liefert. Dies ist bei den beschriebenen kinematischen Ketten zu berücksichtigen, insbesondere dann, wenn der Achskreuzwinkel y während eines Bearbeitungshubs verändert wird.

Alternativ zum gerade beschriebenen Ansatz für Evolventenverzahnungen ist es auch möglich, die Kontaktpfade (R6) und den Zusammenhang zwischen den Wälzwinkeln (R7) mit Hilfe einer Simulationsrechnung durchzuführen. Mit solchen Simulationen ist es möglich, aus einem gegebenen Werkzeug, insbesondere einer Schnecke und einer gegebenen Kinematik, insbesondere einer gegebenen Relativstellung zwischen Werkzeug und Werkstück, die exakte Geometrie des Werkstücks zu berechnen. Solche Simulationen lassen sich dahingehend erweitern, dass mit ihnen auch ermittelt werden kann, welcher Punkt auf dem Werkzeug welchen Punkt auf dem Werkstück fertigt, abhängig vom Vorschub des Werkzeugs und des Werkstücks. Bei diesem Weg werden keine Evolventeneigenschaften genutzt, so dass dieser auch für nicht-evolventische Profile genutzt werden kann. Ein dazu geeigneter Algorithmus wird im Folgenden beschrieben.

Hierzu wird zunächst ein, in der Regel nicht modifiziertes Werkstück betrachtet. Auf einzelnen Punkten mit den Koordinaten ($w_{F2}, z_{F2}$) auf den Zähnen dieses Werkstücks werden Vektoren in Normalenrichtung mit einer zuvor festgelegten Länge platziert. Die Länge der Vektoren entspricht dem Aufmaß des Werkstücks vor dem Schleifen, bezogen auf das nicht modifizierte Werkstück. Das Aufmaß wird typischerweise so groß gewählt, dass jeder Vektor während der nachfolgend beschriebenen Simulation mindestens einmal gekürzt wird. Die Anzahl der Punkte auf den Zähnen bestimmt die Genauigkeit des Ergebnisses. Bevorzugt werden diese Punkte äquidistant gewählt. Die relative Lage des Werkstücks zur Schnecke wird zu jedem Zeitpunkt vorgegeben, beispielsweise durch die kinematischen Ketten $K_r$. Zu jedem der diskreten Zeitpunkte wird der Schnitt aller Vektoren mit der Schnecke berechnet. Schneidet ein Vektor die Schnecke nicht, bleibt dieser unverändert. Schneidet er jedoch die Schnecke, so wird der Schnittpunkt berechnet und der Vektor soweit gekürzt, dass er gerade an dem Schnittpunkt endet. Weiterhin wird der Abstand des Schnittpunkts von der Schneckenachse, das heißt, der Radius auf der Schnecke $r_{F1}$ des Schnittpunkts berechnet und als zusätzliche Information zum gerade gekürzten Vektor abgespeichert. Da die Korrekturen der Koordinaten hier während des Schleifens nicht verändert werden, haben, nachdem die Simulation über die ganze Breite der Schnecke durchgeführt wurde, alle Vektoren auf einem gegebenen Radius des Werkstücks $r_{F2}$ bzw. einem gegebenen Wälzweg $w_{F2}$ annährend dieselbe Länge.

Die geringfügen Unterschiede in den Längen rühren daher, dass der hier beschriebene Algorithmus aufgrund der Diskretisierung der Zeit Markierungen, ähnlich den Hüllschnitten beim Wälzfräsen verursacht. Diese Markierungen und somit auch die Unterschiede in den Längen der Vektoren auf einem gegebenen Radius des Werkstücks können durch eine feinere Diskretisierung der Zeit, gleichbedeutend mit einer Verkürzung der Zeitschritte reduziert werden. Wird die Simulation nicht über die gesamte Breite des Werkstücks durchgeführt, sondern bei einer gegebenen axialen Shiftposition $z_{V2}$ des Werkstücks abgebrochen, so haben, für einen gegebenen Radius auf der Schnecke nur die Vektoren annährend dieselbe Länge, die von dem Kontaktpfad bereits überstrichen wurden. Die übrigen Vektoren haben entweder noch die ursprünglich gewählte Länge oder wurden bereits mindestens einmal gekürzt, haben jedoch noch nicht die endgültige Länge, da sie zu einem späteren Zeitpunkt erneut gekürzt werden (siehe Figur 4). Diese Tatsache kann genutzt werden, um den Kontaktpfad für die aktuellen Vorschübe des Werkstücks und der Schnecke sehr genau zu bestimmen. Dazu werden alle Vektoren auf einen gegebenen Radius auf dem Werkstück $r_{F2}$ bzw. Wälzweg $w_V$ betrachtet und bestimmt, an welcher Breitenlinienposition der Übergang von Vektoren mit annährend gleicher Länge zu solchen mit davon abweichender Länger ist. Da das Schraubwälzgetriebe symmetrisch gegen Vertauschen von Werkstück und Schnecke ist, kann auf dieselbe Weise der Kontaktpfad auf der Schnecke bestimmt werden. Sind im evolventischen Fall Werkstück und Schnecke beide zylindrisch, lassen sich aus den so berechneten Punkten auf dem Kontaktpfad die Koeffizienten aus Gleichung (11) bzw. (12), beispielsweise mittels einer Ausgleichsrechung bestimmen. Sind die Vektoren bestimmt, entlang derer der Kontaktpfad verläuft, können die zu diesen zuvor gespeicherten Radien auf der Schnecke $r_{F1}$ ausgelesen werden und so zu jedem Radius auf dem Werkstück $r_{F2}$ ermittelt werden, von welchem Radius auf der Schnecke $r_{F1}$ dieser geschliffen wurde. Diese Radien können in Wälzwege umgerechnet werden. Aus diesen Wertepaaren lassen sich für zylindrische Werkstücke und zylindrische Schnecken die Koeffizienten aus Gleichung (17), beispielsweise mittels einer Ausgleichsrechnung bestimmen.

Ist im evolventischen Fall die Schnecke konisch und das Werkstück zylindrisch, so muss der Kontaktpfad für mindestens zwei verschiedene Vorschübe $z_{V1}$ bestimmt werden, um zusätzlich die Koeffizienten vor $z_{V1}$ in den Gleichungen (21), (22) und (29) zu bestimmen. Analog müssen mindestens zwei verschiedene Vorschübe $z_{V2}$ betrachtet

werden, wenn Werkstück konisch und Schnecke zylindrisch sind. Sind Werkstück und Schnecke konisch, so müssen die Kontakpfade für mindestens zwei Vorschübe $z_{V1}$ und mindestens zwei Vorschübe $z_{V2}$ betrachtet werden, um alle Koeffizienten aus den Gleichungen (47), (48) und (57) zu bestimmen.

Die unbekannten Koeffizienten aus Gleichung (64) lassen sich ebenfalls mit dieser Simulation bestimmen. Wird eine Lücke vollständig für einen Satz an Werten für $z_{V1}$, $\varphi_1$, $z_{V2}$, $\varphi_2$, $d$, $\gamma$ und $\eta_{bF1}$ simuliert, so kann die erzeugte Lückengeometrie mit Hilfe einer Ausgleichsrechnung an eine Evolvente nach Gleichung (1) angenähert werden. Auf diese Weise lassen sich die $\eta_{bF2}$ für linke und rechte Flanke bestimmen. Wählt man zunächst ein festes y, so können für dieses die gesuchten 6 Koeffizienten dadurch berechnet werden, dass für 3 verschiedene Sätze an Werten für $z_{V1}$, $\varphi_1$, $z_{V2}$, $\varphi_2$ und d die zugehörigen $\eta_{bF2}$ mit Hilfe der Simulation bestimmt werden und aus den sich daraus ergebenden $2 \times 3$ Gleichungen (64), welche linear in den gesuchten Koeffizienten sind, diese berechnet werden. Um die Abhängigkeit der Koeffizienten von y zu bestimmen, kann diese Berechnung für verschiedene y durchgeführt werden.

Fester Achskreuzwinkel pro Bearbeitungshub

Im Folgenden wird der erste Aspekt der Erfindung detailliert beschrieben. Bei diesem wird der Achskreuzwinkel für einen Bearbeitungshub gezielt vorgegeben. Primäres Ziel dabei ist es, die Zahndicke und den Fußkreisradius, welche sich nach diesem Hub ergeben, unabhängig von einander gezielt einzustellen. Im Falle eines konischen Werkstückes ist mit Fußkreisradius hier immer der Fußkreisradius in einem gegebenen festen Stirnschnitt gemeint, welcher zusammen mit dem Fußkegelwinkel den Fußkegel des Werkstücks definiert. Analog ist im Falle eines konischen Werkzeugs mit Kopfkreisradius hier immer der Kopfkreisradius in einem gegebenen festen Stirnschnitt gemeint, welcher zusammen mit dem Kopfkegelwinkel den Kopfkegel des Werkzeugs definiert. Sind Werkzeug und Werkstück beide konisch, so ergibt sich eine Relation zwischen Kopfkreisradius der Werkzeugs, Fußkreisradius des Werkstücks und dem Achsabstand d aus der Forderung, dass sich beide Kegelmäntel berühren müssen und die Relativstellung beider zueinander durch die oben gegebene kinematische Kette gegeben ist. Für zylindrische Werkzeuge bzw. Werkstücke ist der Kegelmantel durch einen Zylindermantel zu ersetzten. Für zylindrische Werkstücke ist er Fußkegelwinkel null.

Mathematische Grundlage für die unabhängige Einstellung der Zahndicke und des Fußkreisradius ist die Relation:

$$a_l - a_r + z_1 \cdot \Sigma\eta_{b1} + z_2 \cdot \Sigma\eta_{b2} + (e_l - e_r) \cdot d = 0 \qquad (67)$$

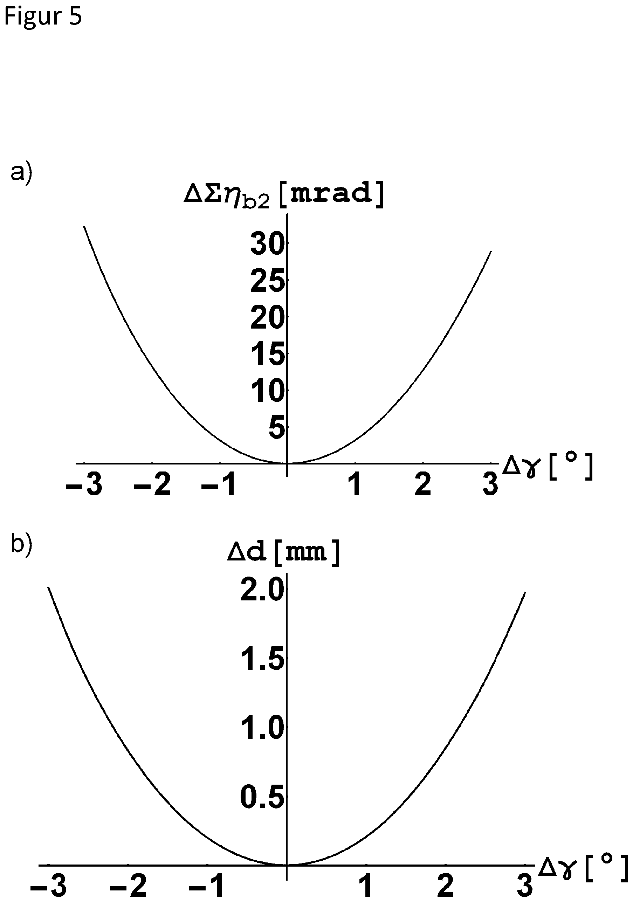

Der Fußkreisradius des Werkstückes ergibt sich aus dem Kopfkreisradius des Werkzeugs und aus d. Für einen gegeben Kopfkreisradius des Werkzeugs ergibt sich so d. Gemäß dem Stand der Technik ergibt sich daraus bei einem Werkzeug mit gegebener Zahndicke auch automatisch die Zahndicke des Werkstücks. Mit der Erkenntnis, dass der Achskreuzwinkel das Profil der Verzahnung nicht beeinflusst und mit Gleichung (67), kann nun jedoch der Achskreuzwinkel so bestimmt werden, dass zusätzlich zum gewünschten Fußkreisradius auch die gewünschte Zahndicke erreicht wird. Dazu ist y so zu bestimmen, dass Gleichung (67) erfüllt ist. Zu beachten ist hierbei, dass es im Allgemeinen zwei Lösungen für den Achskreuzwinkel y zu einer gewünschten Zahndicke gibt, welche beide zum gewünschten Ergebnis führen (siehe Figur 5a). Ist eine Zahndicke des Werkstücks vorgegeben, so kann diese mit verschiedenen Achskreuzwinkel und dazugehörigen Achsabständen erreicht werden. Figur 5b zeigt die dazu nötigen Änderungen des Achskreuzwinkels und des Achsabstandes gegen über dem Stand der Technik. Mit Achskreuzwinkel gemäß dem Stand der Technik ist der Achskreuzwinkel y' gemeint, welcher sich aus $\gamma' + \beta_1 + \beta_2 = 0$ errechnet, wobei $\beta_1$ und $\beta_2$ die Schrägungswinkel des Werkzeugs bzw. des Werkstücks sind. In den hier in den Figuren dargestellten Beispielen, wird bei diesem Achskreuzwinkel die maximal mögliche Zahndicke für einen gegebenen Achsabstand erreicht. Eine Änderung des Achskreuzwinkels führt zu einer Reduktion der Zahndicke bzw. einer Vergrößerung des Grundlückenwinkels, wie in Figur 5a zu sehen.

Der praktische Nutzen dieser Erkenntnis wird nun an einigen Anwendungsbeispielen aufgezeigt.

Wird eine Werkstück mit einem der hier betrachteten Verfahren mit Zahnfuß gefertigt, so wird typischerweise ein Werkzeug verwendet, welches bei einer vorgegebenen Tauchtiefe eine Lücke mit der richtigen Zahndicke und dem richtigen Fußkreisradius erzeugt. Ist das Werkzeug jedoch so gefertigt worden, dass dies mit dem Achskreuzwinkel gemäß dem Stand der Technik nicht gleichzeitig erreicht werden kann, gab es bisher keine Möglichkeit einer Korrektur. Durch die richtige Wahl des Achskreuzwinkels lässt sich dies nun korrigieren. Der Fall nicht passender Werkzeuge kann sich aus Fertigungsabweichungen ergeben, aber auch daraus, dass ein Werkzeug verwendet werden muss, das für eine andere Verzahnung oder zumindest für einen anderen Fußkreisradius und/oder eine andere Zahndicke ausgelegt wurde.

Werden zur Bearbeitung abrichtbare Schleifschnecken verwendet, so kann diese Problematik dann auftreten, wenn die Schnecke zweiflankig zusammen mit dem Schneckenkopf (Kopfbereich der Schneckengänge oberhalb des evolventischen Bereichs) mit einem Abrichter im selben Abrichthub abgerichtet wird. Ist der Abrichter eine Abrichtscheibe, so kann diese beispielsweise mit einer Kopfabrichtrolle ausgestattet. Zwei mögliche Varianten solcher Abrichtscheiben sind in Figur 8 dargestellt. Ein solcher Abrichter kann auch als mehrrippiger Abrichter mit mehreren Abrichtscheiben ausgeführt sein, welcher mehr als eine linke und/oder mehr als eine rechte Flanke sowie einen oder mehr Schneckenköpfe im selben Abrichthub abrichten. Der Abrichter kann jedoch auch als Abrichtzahnrad ausgeführt sein, welches dafür geeignet ist, auch die Schneckenköpfe im selben Abrichthub abzurichten, wie diese aus dem Stand der Technik bekannt sind.

Werden solche Abrichter verwendet, können Zahndicke der Schnecke und Kopfkreisradius der Schnecke nicht mehr unabhängig voneinander beim Abrichten vorgegeben werden. Für einen gegebenen Kopfkreisradius der Schnecke hat diese somit eine nicht beeinflussbare Zahndicke. Wird mit dieser Schnecke mit dem Achskreuzwinkel gemäß dem Stand der Technik mit einem Achsabstand geschliffen, der zum gewünschten Fußkreisradius auf dem Werkstück führt, ergibt sich eine nicht beeinflussbare Zahndicke auf dem Werkstück. Mit dem hier vorgestellten Verfahren, können nun auch in diesem Fall Fußkreisradius und Zahndicke auf dem Werkstück unabhängig voneinanderfrei vorgegeben werden. Diese Problematik kann beispielsweise dann auftreten, wenn es zu Fertigungsabweichungen am Abrichter kam, wenn der Abrichter für verschiedene Verzahnungen verwendet werden soll und/oder wenn zwischen der Bearbeitung mit und ohne Zahnfuß gewechselt werden soll.

Soll der Zahnfuß nicht mit bearbeitet werden, so kann das Verfahren auch genutzt werden, um das Kopfspiel des Werkzeugs präzise einzustellen. Dazu wird in der Berechnung statt des tatsächlichen Fußkreisradius ein um das Kopfspiel vergrößerter Fußkreisradius verwendet. Das Kopfspiel des Werkzeugs ist der Abstand den der Kopf des Werkzeugs vom Fuß des Werkstücks während der Bearbeitung hat. Typischerweise wird das Kopfspiel mindestens so groß eingestellt, dass es unter Berücksichtigung der Fertigungsabweichungen von Werkstück und Werkzeug und der Korrekturbewegungen während der Bearbeitung insbesondere einer Korrektur des Achsabstands zu keiner Bearbeitung des Zahnfußes kommt. Es kann jedoch maximal so groß eingestellt werden, dass die Fußformkreise noch erreicht werden.

Wird eine Verzahnung in mehreren Bearbeitungshüben, welche nicht alle notwendigerweise auf derselben Maschine und nicht notwendigerweise mit demselben Verfahren durchgeführt werden müssen, bearbeitet, so wird in jedem Folgehub ein bestimmter Abtrag $A_a$ im Fuß und ein bestimmter Abtrag $A_l$ bzw. $A_r$ auf der linken bzw. rechten Flanke zerspant. Wird zwischen den Bearbeitungshüben gemäß dem Stand der Technik nur der Achsabstand verkleinert, so gilt:

$$A_a = \frac{1}{2}\left(\frac{A_l}{\sin\alpha_{twl}} + \frac{A_r}{\sin\alpha_{twr}}\right) \tag{68}$$

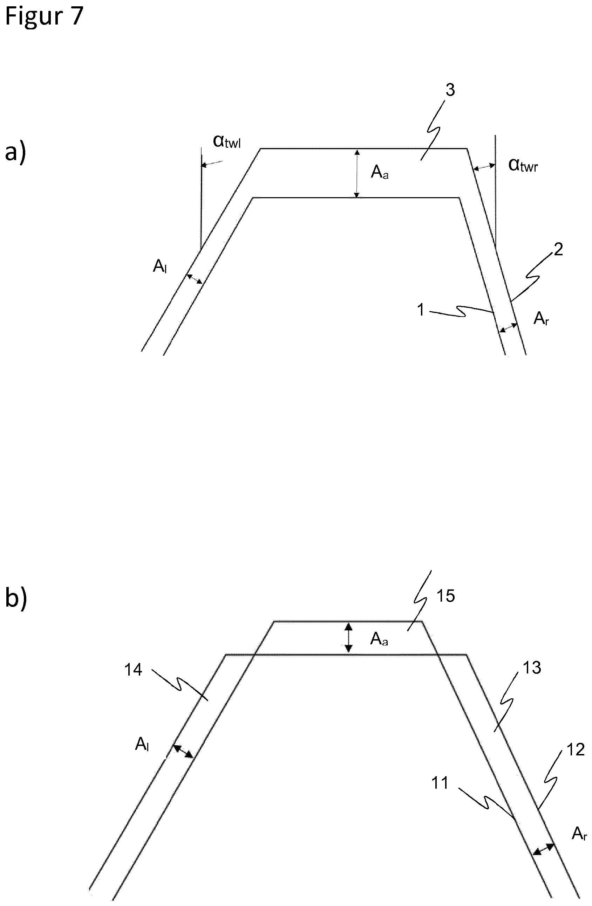

Der Abtrag im Fuß ist somit durch die beiden Abträge an den Flanken fix gegeben und ist im Allgemeinen deutlich größer als diese. Für ein symmetrisches Werkstück mit $\alpha_t = 20°$ gilt beispielsweise: $A_a \approx 2.9 A_l = 2.9 A_r$ Mit kleiner werdendem $\alpha_t$ wird dieser Effekt zunehmend stärker, so gilt für $\alpha_t = 10°$ bereits $A_a \approx 5.8 A_l = 5.8 A_r$. Figur 7a zeigt die Lücke 1 nach dem ersten und die Lücke 2 nach dem zweiten Hub. 3 Markiert den zusammenhängenden zerspanten Bereich. Der große zerspante Abtrag im Zahnfuß kann sich technologisch negativ auswirken. Beim Wälzfräsen beispielsweise entstehen dadurch dickere Späne im Zahnfußbereich, welche insbesondere dann problematisch sind, wenn es sich um Drei-Flanken-Späne handelt, die zu einem erhöhten Verschleiß des Wälzfräsers führen können. Wird beim Wälzschleifen der Zahnfuß mit geschliffen, so kann das größere zerspante Volumen im Zahnfuß zu Schleifbrand führen, welcher bisher nur durch geringeren Vorschub oder geringere Zustellung vermieden werden konnte, was jedoch beides zu einer längeren Bearbeitungszeit führt.

Mit der Möglichkeit Fußkreisradius und Zahndicke nach jedem Hub unabhängig voneinander vorgeben zu können, können die Abträge $A_a$, $A_l$ und $A_r$ ebenfalls unabhängig voneinander vorgegeben werden und so die beschriebenen technologischen Probleme gelöst werden. So kann es beispielsweise beim Wälzschleifen vorteilhaft sein, die Abträge im Zahnfuß und auf den Flanken für einen Hub gleich zu wählen oder sogar den Abtrag im Zahnfuß kleiner zu wählen, als die auf den Flanken. Dies kann insbesondere beim letzten Schlichthub von Vorteil sein, da ein Schleifen des Zahnfußes zu Abweichungen auf den Flanken führen kann.

Die freie Wahl des Abtrags im Zahnfuß erlaubt es auch, diesen für einen Hub negativ zu wählen, was bedeute, dass in diesem Hub der Zahnfuß nicht mitbearbeitet wird, obwohl die Flanken bearbeitet werden. Eine solche Situation ist in Figur 7b dargestellt. 11 markiert die Lücke nach dem ersten Hub, 12 nach dem zweiten. Die zerspanten Bereiche 13 und 14 sind nun nicht mehr zusammenhängend. Der Bereich 15 wurde bereits im vorherigen Hub bearbeitet. Damit kann eine Bearbeitung des Zahnfußes im letzten Schnitt vermieden werden, was die Qualität der Flanken verbessern kann. Ein weiterer Anwendungsfall ergibt sich beim Fertigen von Verzahnungen mit Flankenlinienmodifikationen, beispielsweise Flankenlinienballigkeiten. Solche Flankenlinienmodifikationen werden bisher über eine Veränderung des Achsabstandes abhängig von der Vorschubposition realisiert. Diese Veränderung des Achsabstandes führt jedoch zu einem nicht konstanten Fußkreisradius über die Breite des Werkstücks, was im Allgemeinen nicht gewünscht ist. Wird jedoch beispielsweise im vorletzten Hub bereits der finale Fußkreis erzeugt und noch keine Flankenlinienmodifikation erzeugt, und werden anschließend im letzten Hub nur noch die Flanken mit der gewünschten Flankenlinienmodifikation bearbeitet werden, so ergibt sich ein konstanter Fußkreisradius über die Breite der Verzahnung. Auch ein Vertauschen der beiden Hübe ist möglich, sodass im letzten Hub nur noch der Zahnfuß bearbeitet wird.

In bestimmten Anwendungsfällen ist es gewünscht, den Kopf der Verzahnung mit dem Fuß des Werkzeugs zu überschneiden bzw. zu überschleifen. In dem Fall ist es wünschenswert, Zahndicke und Kopfkreisradius des Werkstücks unabhängig voneinander einzustellen und Abträge an den Flanken und dem Kopf des Werkstücks für einen Hub unabhängig voneinander vorzugeben. Dies ist mit dem hier vorgestellten Verfahren ebenso möglich und alle Überlegen und Berechnungen können direkt übernommen, es sind lediglich der Werkzeugfußkreis statt des Werkzeugkopfkreis und der Werkstückkopfkreis statt des Werkstückfußkreis zu betrachten. Im Falle des zweiflankigen Abrichtens wird der Werkzeugfußkreisradius durch den Außendurchmesser des Abrichters bestimmt, sodass dieser Durchmesser anstelle des Außendurchmessers des Kopfabrichters zu betrachten ist.

Die für die Erzielung der drei gewünschten Abträge nötigen Maschineneinstellungen, insbesondere der Achskreuzwinkel, der Achsabstand und die Änderung der Wälzkopplung ergeben sich direkt als Spezialfall der später in dieser Erfindung beschriebenen Vorgabe einer Flankenlinenmodifikation auf linker und/oder rechter Flanke und einem freien verlauf der Fuß-oder Kopfkreisradien des Werkstücks.

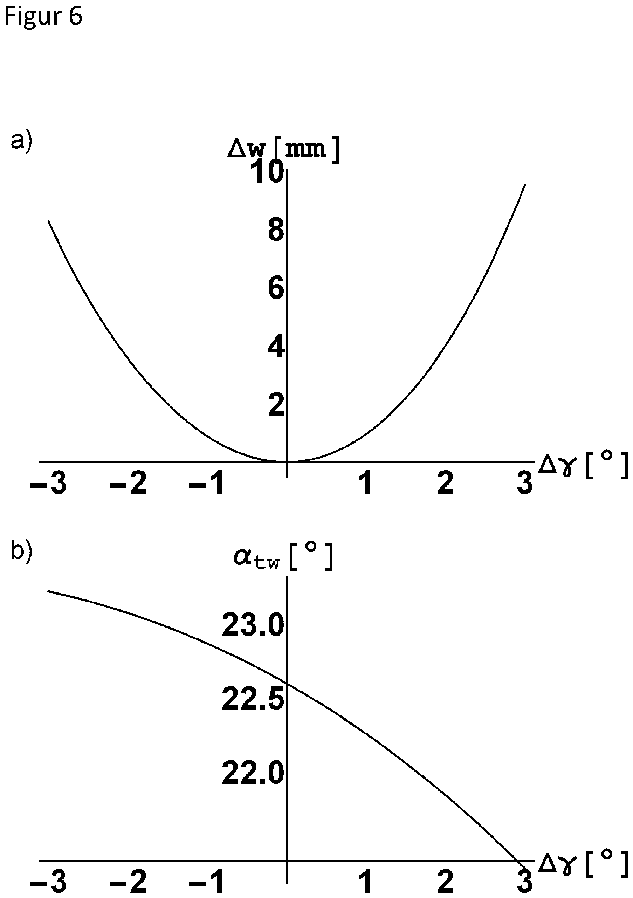

Wie aus Relation (R7) ersichtlich, beeinflussen d und y die Zuordnung von Wälzwinkeln auf dem Werkzeug zu Wälzwinkeln auf dem Werkstück. Diese Zuordnung ist dann von besonderer Bedeutung, wenn durch ein Werkzeug mit einem modifizierten Profil ein modifiziertes Profil auf dem Werkstück erzeugt werden soll. Solche Profilmodifikationen sind beispielsweise Profilwinkelmodifikationen, Profilballigkeiten oder Kopf- und Fußrücknahmen. Während bei Profilwinkelmodifikationen die Zuordnung von Wälzwinkeln auf dem Werkzeug zu Wälzwinkeln auf dem Werkstück keinen Einfluss auf die erzeugte Modifikation hat, beeinflusst die Zuordnung bei den anderen Profilmodifikationen deren Lage. So wird beispielsweise die Lage des Knicks einer Kopfrücknahme durch die Zuordnung beeinflusst. Gemäß dem Stand der Technik konnte bisher nur der Einfluss des Achsabstands d genutzt werden, um die Lage der Profilmodifikation auf dem Werkstück zu beeinflussen. Dies führt jedoch bei zweiflankiger Bearbeitung automatisch zu einer Änderung der Zahndicke. Mit der Kenntnis der Relation (R7) und Gleichung (67), welche zusammen ein Gleichungssystem in den Variablen d und y bilden, ist es nun möglich, über y die Lage der Profilmodifikation und die Zahndicke des Werkstücks unabhängig voneinander einzustellen. Da die Koeffizienten $\hat{C}_{Fw1}$ und $\hat{C}_{Fw2}$ nicht von d und $y$ abhängen, führt eine Änderung von d und y nur zu einer Verschiebung der Profilmodifikation auf dem Werkstück, nicht jedoch zu einer Streckung oder Stauchung. Figur 6a zeigt die Verschiebung der Profilmodifikation auf dem Werkstück, gemessen als Verschiebung im Wälzwinkel, in Abhängigkeit von y, wobei die Zahndicke konstant gehalten wurde, das heißt, der Achsabstand d verläuft in Abhängigkeit von y wie in Figur 5b gezeigt. Es gibt auch hier wieder im Allgemeinen zwei Achskreuzwinkel, welche zu einer gewünschten Verschiebung der Profilmodifikation führen. Die Möglichkeit der unabhängigen Einstellung der Verschiebung der Profilmodifikation und der Zahndicke ist beispielsweise beim Wälzfräsen und Schälwälzfräsen sowie beim Wälzschleifen mit nicht abrichtbaren Werkzeugen von besonderer Bedeutung. So können nun Werkzeuge verwendet werden, die die Profilmodifikation für die gewünschte Zahndicke falsch platzieren würden. Dies kann beispielsweise dann der Fall sein, wenn die Werkzeuge falsch ausgelegt und/oder gefertigt wurden oder wenn diese für andere, insbesondere ähnliche Werkstücke ausgelegt wurden.

Ein zweiter Anwendungsfall ist das Wälzschleifen in Verbindung mit einem zweiflankigen Abrichten der Schleifschnecke. Zum Abrichten von Schnecken, welche am Werkstück eine Profilmodifikation erzeugen sollen, werden modifizierte Abrichter verwendet, welche die benötigte Modifikation auf der Oberfläche der Schnecke erzeugen. Beim zweiflankigem Abrichten wird die Zahndicke der Schnecke über den Achsabstand zwischen Schnecke und Abrichter eingestellt. Dieser Achsabstand bestimmt jedoch gleichzeitig auch die Lage der Profilmodifikation auf der Oberfläche der Schnecke. Wird nun die Schnecke mit der gemäß dem Stand der Technik nötigen Zahndicke abgerichtet, so ergibt sich eine feste Lage der Profilmodifikation auf der Schnecke, welche beim Wälzschleifen gemäß dem Stand der Technik zu einer festen Lage der Profilmodifikation auf dem Werkstück führt. Das hier beschriebene Verfahren erlaubt es nun, auch in diesem Anwendungsfall die Lage der Profilmodifikation auf dem Werkstück zu beeinflussen und somit gezielt einzustellen und/oder zu korrigieren, unabhängig von der gewünschten Zahndicke.

Alle bisher beschriebenen Aspekte zum festen Achskreuzwinkel pro Bearbeitungshub bilden Spezialfälle der nun folgenden Aspekte, in denen der Achskreuzwinkel während eines Bearbeitungshubs verändert wird.

Variabler Achskreuzwinkel pro Bearbeitungshub

Der zweite wesentliche Aspekt der Erfindung sieht vor, den Achskreuzwinkel während eines Bearbeitungshubs abhängig von der Axialvorschubposition $z_{V2}$ des Werkstücks gemäß einer stetigen Funktion $\mathcal{X}(z_{V2})$ zu verändern. Dies erlaubt es, die Zahndicke und mindestens eine der Größen Fußkreisradius auf dem Werkstück, Kopfkreisradius auf dem Werkstück, Lage der Profilmodifikation auf der linken Flanke, Lage der Profilmodifikation auf der rechten Flanke abhängig von der Werkstückbreitenposition vorzugeben. Für die Ausführung dieses Aspektes der Erfindung ist es entscheidend zu wissen wie und vor allem wo sich diese Vorgaben, abhängig von der Axialvorschubposition $z_{V2}$ auf der Verzahnung

auswirken. Dies wird im Folgenden für die beeinflussbaren Größen für den Fall eines konischen Werkzeugs und eines konischen Werkstückes diskutiert. Die Fälle in denen ein zylindrisches Werkstück und/oder ein zylindrisches Werkzeug verwendet werden, ergeben sich als Spezialfälle durch Verwendung der entsprechenden Relationen und Betrachtung der Zylindermantelflächen anstatt der Kegelmantelflächen.

Eine Änderung der Zahndicke über die Breite des Werkstücks wird als Flankenlinienmodifikation bezeichnet. Bei den hier betrachteten Herstellprozessen liegt ein theoretischer Punktkontakt zwischen Werkzeug und Werkstück vor. Der Berührpunkt bewegt sich entlang der Berührspur, welche auf dem Werkstück für gegebene Axialvorschubpositionen des Werkzeugs $z_{V1}$ und des Werkstücks $z_{V2}$ unter Vernachlässigung des Axialvorschubs durch Gleichung (48) gegeben ist. Diese Gleichung zeigt, dass die Berührspur in $w_{F2}$ und $z_{F2}$ durch eine Gerade gegeben ist. Da der Koeffizient $C_{Fw2}$ nur von den Grundgrößen des Werkstücks abhängt, bleibt die Richtung der Gerade bei einerÄnderung des Achsabstands d und/oder des Achskreuzwinkels y unverändert. Eine Änderung der Bearbeitungskinematik, insbesondere das Ändern von y und/oder d und/oder ein Aufbrechen der Wälzkopplung durch eine Änderung der Drehwinkel des Werkzeugs und/oder des Werkstücks und/oder der Axialvorschubpositionen des Werkzeugs $z_{V1}$ und/oder des Werkstücks $z_{V2}$ führen zu einer Modifikation $f_{KFt}(w_F, z_F)$ auf dem Werkstück, welche entlang der aktuellen Berührspur einen konstanten Wert annimmt und sich mathematisch wie folgt beschreiben lässt.

$$f_{KFt}(w_F, z_F) = F_{KFt}(w_F \tan \rho_{KF} + z_F) = F_{KFt}(X_F) \qquad (69)$$

mit

$$X_F = w_F \tan \rho_{KF} + z_F.$$

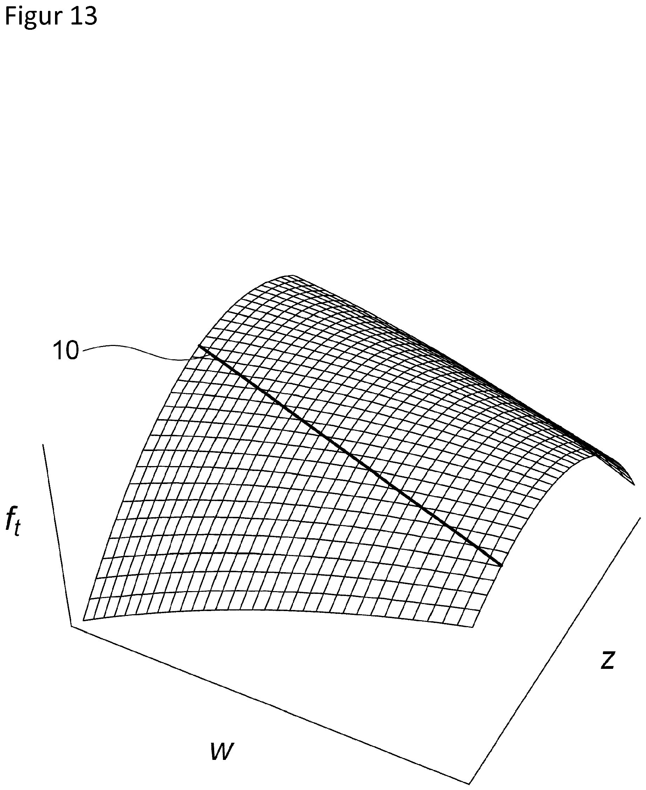

Hierbei können die Funktionen $F_{KFt}$ in gewissen Grenzen beliebige stetige Funktionen sein. $\rho_{KF}$ ergibt sich direkt durch Gleichung (48) aus der Richtung der Berührspur. Figur 13 zeigt am Beispiel einer natürlich verschränkten Flankenlinienballigkeit eine Modifikation gemäß Gleichung (69). Die Gerade 20 entspricht dem Verlauf der Berührspur zu einem Zeitpunkt der Bearbeitung. Die Modifikation hat entlang 20 einen konstanten Wert.

Im Folgenden wird aufgezeigt, wie sich aus gegebenen Funktionen $F_{Klt}$ und $F_{Krt}$ für linke und rechte Flanke unter Berücksichtigung einer Zusatzbedingung in y und/oder d und/oder $z_{V2}$ (beispielsweise Kopf- /Fußkreisradius, Lage der Profilmodifikation, Werkzeugkopfspiel, Werkzeugfußspiel) die benötigte Änderung der Bearbeitungskinematik berechnen lässt. Ausgangspunkt hierfür ist die folgende Gleichung

$$\hat{a}_F - a_F + \hat{b}_1 \cdot \hat{z}_{V1} - b_1 \cdot z_{V1} - z_1 \cdot \Delta\varphi_1 + \hat{b}_2 \cdot \hat{z}_{V2} - b_2 \cdot z_{V2} + s_F \cdot z_2 \cdot \Delta\eta_{bF2} - z_2 \cdot$$
$$\Delta\varphi_2 + \hat{e}_F \cdot \hat{d} - e_F \cdot d = 0 \qquad (70)$$

welche direkt aus Gleichung (64) folgt, wobei sich die Größen mit Dach ( *) auf die geänderte Kinematik beziehen, die ohne Dach auf die nicht geänderte Bearbeitungskinematik. Für die Drehwinkel gilt dabei:

$$\Delta\varphi_1 = \hat{\varphi}_1 - \varphi_1 \ \text{ und } \ \Delta\varphi_2 = \hat{\varphi}_2 - \varphi_2 \qquad (71)$$

Mit der nicht korrigierten Bearbeitungskinematik ist hier die aus dem Stand der Technik bekannte Kinematik zur Bearbeitung nicht modifizierter Werkstücke gemeint. Diese nicht korrigierte Kinematik beinhaltet jedoch noch nicht die bei Schrägverzahnungen nötige Differentialdrehung, sowie die bei der Diagonalwälzbearbeitung nötige Differentialdrehung. Diese Differentialdrehungen sind ebenfalls aus dem Stand der Technik bekannt und sind bei der herkömmlichen Bearbeitung nötig, damit die Zwangsbedingung (R4) zu jeder Zeit erfüllt ist. Wird der Achskreuzwinkel während der Bearbeitung verändert, sind die Differentialdrehung zusammen mit den für die Flankenlinienmodifikationen nötigen Drehwinkelkorrekturen zu bestimmen, was im Folgenden aufgezeigt wird.

$\Delta\eta_{bF2}$ ist die durch die korrigierte Kinematik verursachte Änderung des Grundlückenhalbwinkel $\eta_{bF2}$ des Werkstücks. Diese Änderung steht über

$$\Delta\eta_{bF2} = -\frac{f_{tF}}{r_{bF2}} \qquad (72)$$

in direkter Relation zur erzeugten Modifikation $f_{tF}$ im Stirnschnitt auf dem Werkstück. Zu beachten ist dabei, dass sich diese Modifikation auf beiden Flanken jeweils entlang der aktuellen unter anderem von $z_{V1}$ und $z_{V2}$ abhängigen Lage der Berührspur ausbildet. Der Wert der Modifikation ist entlang der aktuellen Berührspur konstant. Wird nun die Lage der Berührspur insbesondere über den Axialvorschub des Werkstücks über das gesamte Werkstück verschoben, so überstreicht die Berührspur die komplette Flanke und fertigt diese vollständig. Die Lage der Berührspur kann durch $X_F$ aus Gleichung (69) beschrieben werden. $X_F$ kann direkt mittels Gleichung (48) unter anderem abhängig von den Koordinaten der kinematischen Kette, insbesondere des Axialvorschubs $z_{V2}$ berechnet werden. Hier sei angemerkt, dass $X_F$ auch von y abhängig ist. Es gilt:

$$X_F = X_F(z_{V1}, z_{V2}, \hat{\gamma}, d) \tag{73}$$

woraus mit Gleichung (72) folgt:

$$F_{KFt}(X_F(z_{V1}, z_{V2}, \hat{\gamma}, \hat{d})) = -\Delta\eta_{bF2} \cdot r_{bF2} \tag{74}$$

Zusammen mit Gleichung (70) steht somit eine Relation zwischen der Bearbeitungskinematik und den Funktionen $F_{Klt}$ und $F_{Krt}$ zur Verfügung. Da das Verschieben der Berührspür typischerweise durch den Axialvorschub $z_{V2}$ des Werkstücks realisiert wird, kann diese Koordinate als Leitkoordinate betrachtet werden und die nötigen Korrekturen der anderen Koordinaten als Funktion von $z_{V2}$. Des Weiteren kann $\hat{z}_{V2} = z_{V2}$ gesetzt werden.

Die Änderungen, $\Delta\varphi_1$ und $\Delta\varphi_2$ und $\hat{z}_{V1}$ bewirken alle, dass der Wert der Modifikation auf der einen Flanke größer und auf der anderen Flanke kleiner wird. Welche der Werte verändert werden, spielt dabei keine Rolle, so dass diese zu einer neu eingeführten Änderung

$$\Delta A(z_{V2}) := \hat{b}_1(z_{V2}) \cdot \hat{z}_{V1}(z_{V2}) - b_1 \cdot z_{V1} - z_1 \cdot \Delta\varphi_1(z_{V2}) - z_2 \cdot \Delta\varphi_2(z_{V2}) + \left(\hat{b}_2(z_{V2}) - b_2\right) \cdot z_{V2} \tag{75}$$

zusammen gefasst werden können. Gleichung (70) vereinfacht sich dann zu:

$$\Delta A(z_{V2}) + s_F \cdot z_2 \cdot \Delta\eta_{bF2}(z_{V2}) + \hat{e}_F(z_{V2}) \cdot \hat{d}(z_{V2}) - e_F \cdot d + \hat{a}_F(z_{V2}) - a_F = 0 \tag{76}$$

Aus Gleichung (74) folgt dann:

$$F_{KFt}\left(X_F\left(z_{V1}(z_{V2}), z_{V2}, \hat{\gamma}(z_{V2}), \hat{d}(z_{V2})\right)\right) = s_F \cdot \frac{r_{bF2}}{z_2}\left(\Delta A(z_{V2}) + \hat{e}_F(z_{V2}) \cdot \hat{d}(z_{V2}) - e_F \cdot d + \hat{a}_F(z_{V2}) - a_F\right) \tag{77}$$

Zusammen mit der zu berücksichtigenden Zusatzbedingung für $\hat{d}$ und/oder y bilden die beiden Varianten dieser Gleichung für linke und rechte Flanke für ein gegebenes $z_{V2}$ ein Gleichungssystem in den Größen $\hat{\gamma}(z_{V2})$, $\hat{d}(z_{V2})$ und $\Delta A(z_{V2})$ welches zur Bestimmung dieser gelöst werden kann, und so die gesuchten Größen als Funktion von $z_{V2}$ liefert. $\Delta A(z_{V2})$ ist anschließend für jedes $z_{V2}$ mittels Gleichung (75) in Korrekturen der Koordinaten $\Delta\varphi_1$ und/oder $\Delta\varphi_2$ und/oder $\hat{z}_{V1}$ umzurechnen, wobei zu beachten ist, dass diese Umrechnung nicht eindeutig ist. Typischerweise werden diese Korrekturen jedoch über $\Delta\varphi_1$ oder $\Delta\varphi_2$, das heißt über eine Korrektur des Drehwinkels des Werkzeugs oder des Werkstücks realisiert. Werden diese Korrekturen beispielsweise über eine Korrektur des Drehwinkels des Werkstücks realisiert, so kann für diesen Fall $\Delta\varphi_1 = 0$ und $\hat{z}_{V1} = z_{V1}$ gewählt werden.

Während der Bearbeitung mit einem der hier betrachteten Verfahren, laufen Werkzeug und Werkstück wälzgekoppelt in einem Schraubwälzgetriebe. Die Korrektur $\Delta A(z_{V2})$ führt zu einem Aufbrechen dieser Wälzkopplung, wodurch, wie beschrieben, der Wert der Modifikation auf einer Flanke vergrößert und auf der anderen verkleinert wird.

Im Folgenden werden die hier betrachteten, im Allgemeinen von der Axialvorschubposition $z_{V2}$ des Werkzeugs abhängigen Zusatzbedingungen für $\hat{d}$ und/oder y diskutiert.

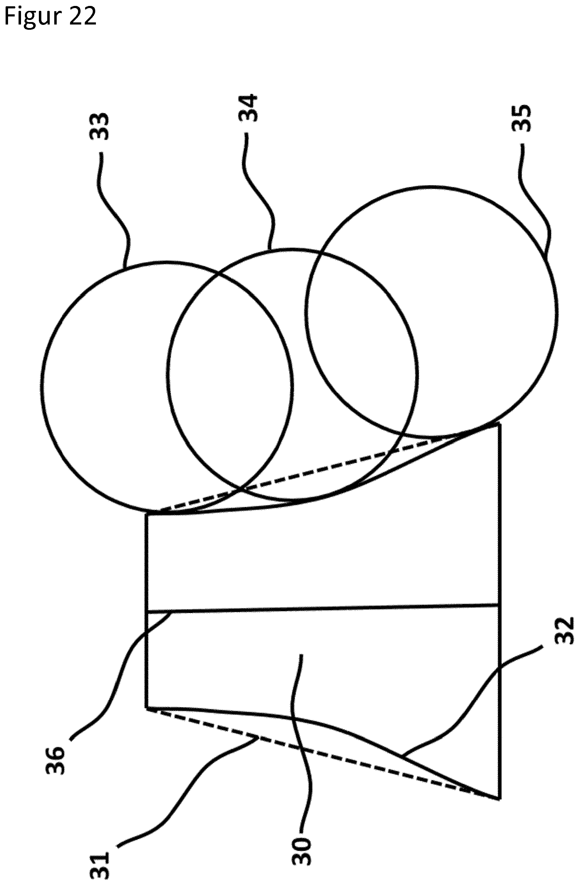

Figur 22 zeigt schematisch ein konisches Werkstück 30. Die Gerade 31 markiert den Verlauf des Fußkreisradius (Verlauf des Zahngrunds) bei einem konischen Werkstück gemäß dem Stand der Technik. Die Gerade ist gegenüber der Drehachse um den Fußkegelwinkel gekippt. Ein solcher Verlauf des Fußkreisradius ergibt sich bei einer nicht modifizierten Bearbeitungskinematik. Mit dem hier beschriebenen Verfahren kann nun der Fußreisradius für jede Breitenposition des konischen Werkstücks frei vorgegeben werden. 32 zeigt einen solchen freien Verlauf des Fußkreisradius über die Breite des Werkstücks. Rotiert dieser Verlauf um die Drehachse 36 des Werkstücks, so beschreibt der entstehende Rotationskörper den Verlauf des Fußkreises dreidimensional. Um einen solchen freien Verlauf des Fußkreisradius mit einem im Allgemeinen konischen Werkzeug zu erzeugen, muss der Achsabstand $\hat{d}$ abhängig von der Axialvorschubposition $z_{V2}$ unter Berücksichtigung des Achskreuzwinkels y so eingestellt werden, dass der Kegelmantel, welcher den Kopfkreis des Werkzeugs einhüllt, zu jeder Zeit tangential an dem Rotationskörper anliegt. Daraus ergibt sich direkt die gesuchte Zusatzbedingung für $\hat{d}$ und/oder y. Figur 22 zeigt schematisch im Schnitt die tangential an den Rotationskörper anliegenden einhüllenden Kegelmäntel 33, 34 und 35 des Werkzeugs für drei verschiedene Axialvorschubpositionen $z_{V2}$ vereinfacht als Kreise dargestellt. Der Verlauf des Fußkreisradius kann in weiten Grenzen frei gewählt werden. So sind Abweichungen von dem geraden Verlauf im Bereich von wenigen $\mu$m möglich, aber auch im Bereich vom 0.5 bis zum einfachen des Modul des Werkstücks. Wesentliche Einschränkung was die Form des Verlaufs betrifft ist, dass bei nach innen gewölbten Verläufen, wie im Beispiel in Figur 22 gezeigt, der Krümmungsradius des Verlaufs größer sein muss, als der Krümmungsradius des Werkzeugs. Der Außendurchmesser des Werkzeugs ist in diesem Fall hinreichend klein zu wählen. Bei nach außen gewölbten oder geraden Verläufen gibt es keine solche Einschränkung und die Werkzeugdurchmesser können beliebig gewählt werden. Verläufe können auch stellenweise nach innen und stellenweise nach außen gewölbt sein und so beispielsweise wellenartig ausgestaltet sein. Die Möglichkeit solche freien Verläufe zu fertigen, erlaubt es die Zahnfußfestigkeit weiter zu optimieren und/oder für einen besseren Ölfluss im verbauten Zustand zu sorgen. Die freien Verläufe können insbesondere auch geradlinig gewählt werden. Die Gerade ist dabei gegenüber der Drehachse um einen vom Konuswinkel abweichenden Winkel gekippt. So können beispielsweise konische Verzahnungen mit parallel zur Drehachse verlaufenden Fußkreisradien gefertigt werden, so dass der Verlauf der Fußkreisradien dem eines zylindrischen Rades entspricht. Ebenso ist es aber auch möglich, zylindrische Verzahnungen mit einem gegenüber der Drehachse gekippten Verlauf der Fußkreisradien zu fertigen.

Soll statt des Zahnfußes der Zahnkopf mit bearbeitet werden, so kann auch hier ein freier Verlauf des Kopfkreisradius gefertigt werden. Die Berechnung verläuft analog, es muss lediglich der Fußkegel des Werkzeugs den freien Verlauf des Kopfkreises für jede Axialvorschubposition $z_{V2}$ tangential berühren. Der Rotationskörper der sich aus der Rotation des Verlaufs des Kopfkreises um die Drehachse 36 des Werkstücks, wird als Hüllkörper des Werkstücks bezeichnet.

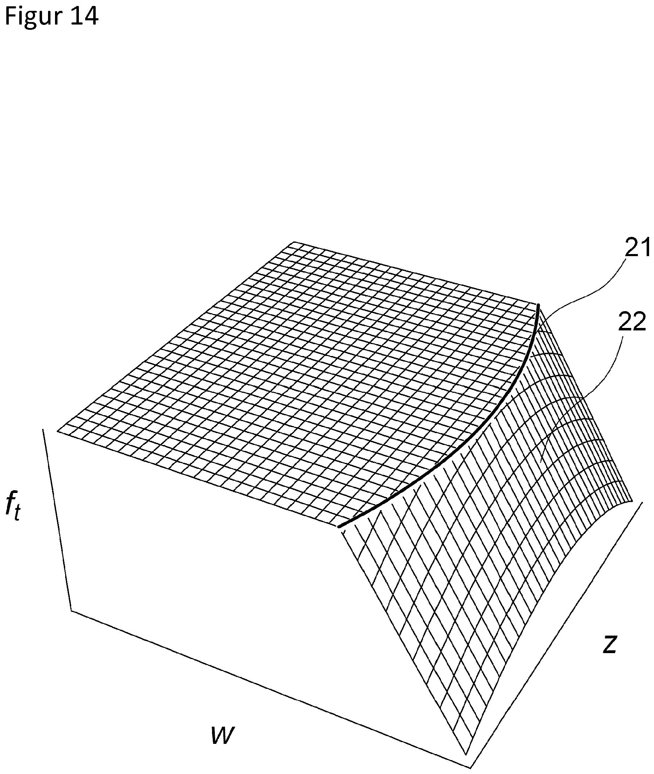

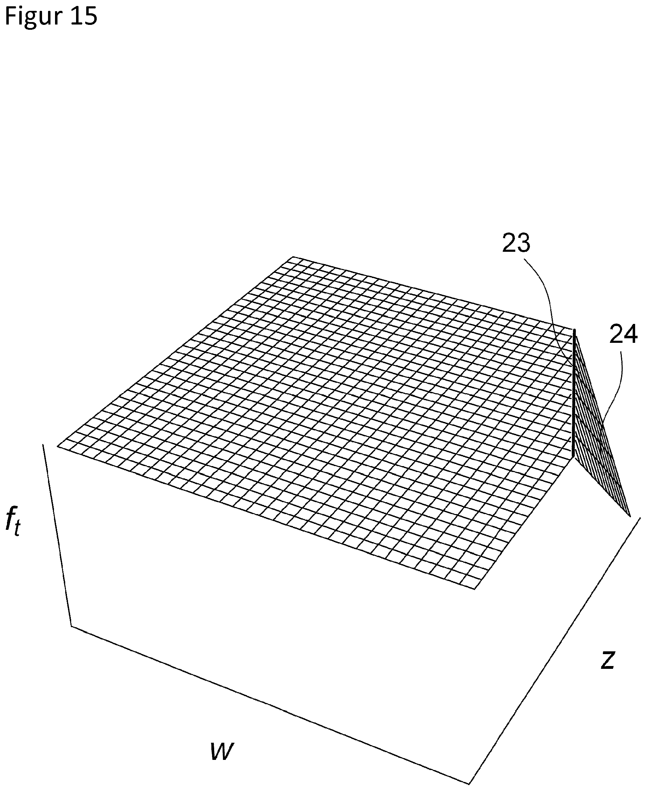

Eine alternative Zusatzbedingung kann formuliert werden, wenn die Lage der Profilmodifikation auf den linken oder den rechten Flanken über die Breite der Verzahnung variiert werden soll. Hier kann analog zum Fall des während eines Bearbeitungshubs konstanten Achskreuzwinkels vorgegangen werden. Relation (R7) liefert direkt die gesuchte Bedingung. Soll beispielsweise ein Punkt auf dem Profil des Werkzeugs am Wälzweg $w_{F1}$ einem von $z_{F2}$ abhängigen Wälzweg $w_{F2}(z_{F2})$ auf dem Werkstück zugeordnet werden, so kann in Gleichung (57) $w_{F2}$ durch $w_{F2}(z_{F2})$ ersetzt werden. Diese Gleichung bildet zusammen mit Gleichung (48) die neue Zusatzbedingung mit der neu hinzugekommen Unbekannten $z_{F2}$, welche durch Lösen des gesamten Gleichungssystems mit bestimmt werden muss. Figur 14 zeigt beispielhaft die Modifikation einer Verzahnung mit Kopfrücknahme 22, bei der die Lage der Kopfrücknahme über der Verzahnbreite variiert. In diesem Beispiel ist die Kopfrücknahme oben und unten länger und hat damit auch einen größeren Betrag, in der Mitte hingegen ist sie kürzer ausgeführt und hat dadurch einen kleineren Betrag. Die Linie 21 markiert den variablen Beginn der Kopfrücknahme. Die Verschiebung der Profilmodifikation kann in gewissen Grenzen freie Formen annehmen. So kann beispielsweise auch eine Verschiebung gewählt werden, bei der die Länge der Kopfrücknahme von einem Ende der Verzahnung bis zum anderen Ende kontinuierlich zu oder abnimmt. So kann beispielsweise eine dreiecksförmige Endrücknahme 24 erzeugt werden, wie diese in Figur 15 gezeigt wird. Da die Form der Profilmodifikation (z.B. Balligkeit, Kopf-/Fußrücknahme) allein durch das Werkzeug bestimmt ist, kann dieses Verfahren zur Verschiebung beliebiger Profilmodifikationen angewendet werden. Zu beachten ist, dass sich die Verschiebung der Profilmodifikation immer entlang der aktuellen Berührspur auswirkt.

Da nur ein Freiheitsgrad zur Verschiebung der Profilmodifikation zur Verfügung steht, kann diese nur für die linken oder die rechten Flanken exakt vorgegeben werden. Für die jeweils anderen ergibt sich automatisch eine Verschiebung. Diese Verschiebung kann mit den Gleichungen (57) und (48) bestimmt werden.

Wo sich die Verschiebung der Profilmodifikation auf der anderen Flanke auswirkt, wird durch die Lage der Berührspur auf der Flanke beeinflusst und kann mit Gleichung (48) berechnet werden. Die unterschiedliche Lage der Berührspur auf linker und rechter Flanke für gegebene Axialvorschubpositionen $z_{V1}$ und $z_{V2}$ kann unter anderem durch den Profilwinkel des verwendeten Werkzeugs aber auch durch den eingestellten Achskreuzwinkel beeinflusst werden.

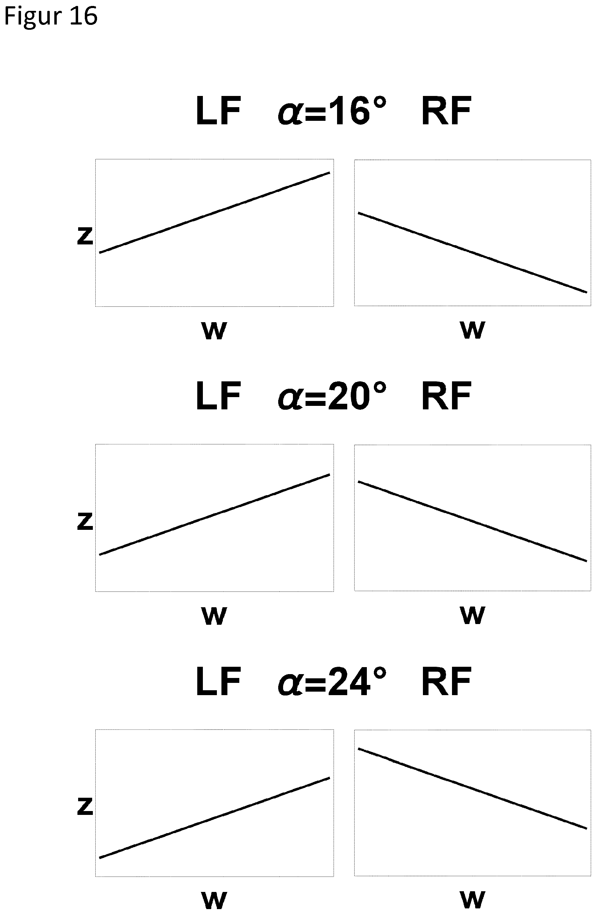

Bei den hier betrachteten Verfahren ist es möglich verschiedene Werkzeuge mit unterschiedlichen Profilwinkeln zur Fertigung eines gegebenen Werkstücks zu nutzen, solange diese die Wälzbedingung (63) erfüllen. Die Wahl des Profilwinkels dieses Werkzeugs beeinflusst dabei die Lage der Berührspur auf linker und rechter Flanke zueinander. Figur 16 zeigt für drei verschiedene Profilwinkel $\alpha$ des verwendeten Werkzeugs, wie die Berührspuren auf linker und rechter Flanke für festgehaltene Axialvorschubpositionen verlaufen. Im dargestellten Beispiel bewirkt ein größerer Profilwinkel des Werkzeugs eine Verschiebung der Berührspur auf der rechten Flanke in Breitenrichtung nach oben, auf

der linken Flanke in Breitenrichtung nach unten.

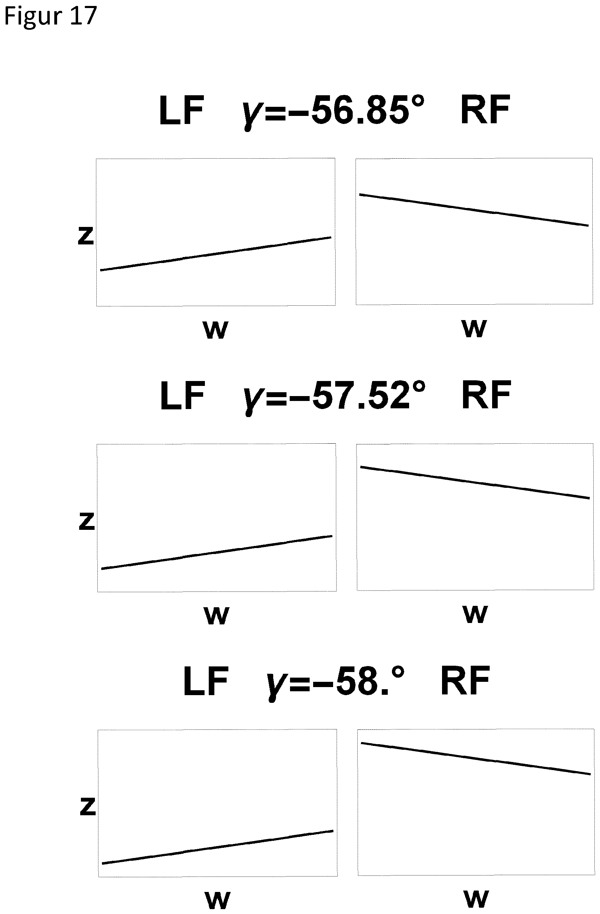

Der zur Bearbeitung eingestellte Achskreuzwinkel γ beeinflusst ebenfalls die Lage der Berührlinien auf linker und rechter Flanke zueinander. Figur 17 zeigt für drei verschiedene Achskreuzwinkel γ, wie die Berührspuren auf linker und rechter Flanke für festgehaltene Axialvorschubpositionen verlaufen. Im dargestellten Beispiel bewirkt ein größerer Achskreuzwinkel eine Verschiebung der Berührspur auf der rechten Flanke in Breitenrichtung nach oben, auf der linken Flanke in Breitenrichtung nach unten. Dieser Effekt ist generell immer zu beachten, wird durch Gleichung (48) jedoch automatisch berücksichtigt. Der für einen gegebenen Achsabstand einzustellender Achskreuzwinkel bei der Bearbeitung eines vorgegebenen Werkstückes ist durch die Zahndicke des Werkzeugs gegeben und lässt sich mit Gleichung (67) berechnen, wobei es hierbei im Allgemeinen zwei Lösungen für γ gibt. Umgekehrt lässt sich zu einem gegebenen Achskreuzwinkel auch die Zahndicke des Werkzeugs berechnen.

Es stehen somit zwei Parameter zur Verfügung, die einzeln oder zusammen genutzt werden können, um über die Geometrie des Werkzeugs die relative Lage der Berührspuren auf linker und rechter Flanke zu beeinflussen. Diese relative Lage der Berührspuren beeinflusst, wie sich eine, mit dem hier beschriebenen Verfahren realisierten Verschiebung der Profilmodifikation auf einer Flanke, auf die andere Flanke auswirkt. Soll beispielsweise auf beiden Flanken eine Verschiebung der Profilmodifikation realisiert werden und die Verläufe sind in Breitenrichtung ähnlich, jedoch in Breitenrichtung gegeneinander verschoben, so kann die Verschiebung der Berührlinien so eingestellt werden, dass eine Verschiebung der Profilmodifikation auf der einen Flanke automatisch, zumindest näherungsweise, zur richtigen Verschiebung der Profilmodifikation auf der anderen Flanke führt. Bevorzugt werden die Lage der Berührspuren zueinander und der zu erzielende Verlauf der Verschiebung der Profilmodifikation auf einer Flanke, beispielsweise mittels einer Ausgleichsrechnung so optimiert, dass sich auf beiden Flanken ein möglichst optimaler Verlauf der Verschiebung der Profilmodifikation ergibt. Als Maß für die Qualität der erzielten Lösung kann dazu beispielsweise der Abstand der gewünschten Verschiebung der Profilmodifikation zur erzielten Verschiebung über die Verzahnbreite auf beiden Flanken herangezogen werden. Sollte die gewünschte Verschiebung der Profilmodifikation über die Verzahnbreite und/oder auf linker und rechter unterschiedlich toleriert sein, so kann zusätzlich eine Abstandsfunktion gewählt werden, welche die verschiedenen Breitenpositionen und/oder Flanken unterschiedlich gewichtet.

Ein noch besseres Ergebnis kann erzielt werden, wenn in die Ausgleichrechnung direkt die Geometrie des Werkszeugs, insbesondere Profilwinkel und Zahndicke und die Funktionen $\Delta A(z_{V2})$, $\hat{d}(z_{V2})$ und $\hat{\chi}(z_{V2})$ einbezogen werden. Unter Berücksichtigung der zu erzielenden Flankenlinienmodifikation können diese so bestimmt werden, dass die Abweichung der Verschiebungen der Profilmodifikationen auf linker und rechter Flanke, optional unter Berücksichtig einer Abstandsfunktion, optimal sind.

Die Möglichkeit die Lage der Berührspuren zu beeinflussen, insbesondere in Breitenrichtung den Abstand zwischen den Berührspuren auf linker und rechter Flanke zu vergrößern, kann auch genutzt werden, um gezielt am oberen und unteren Ende der Verzahnung nur einflankig zu bearbeiten. Eine solche Situation ist im letzten Beispiel in Figur 17 gezeigt. Geht die rechte Flanke oben außer Kontakt mit dem Werkzeug, so muss das Werkzeug noch ein Stück verfahren werden, bis auch die linke Flanke außer Eingriff geht. Dies erhöht zwar die Ein- und Außlaufwege und damit auch die Bearbeitungszeit, erlaubt es aber im konkreten Beispiel, die Verschiebung der Profilmodifikation im oberen Bereich der linken Flanke und im unteren Bereich der rechten Flanke frei zu wählen, ohne die Verschiebung der Profilmodifikation auf der jeweils anderen Flanke zu beeinflussen. Ein konkretes Anwendungsbeispiel für diese Ausgestaltung des Verfahrens ist die dreiecksförmige Endrücknahme aus Figur 15. Soll hier auf beiden Flanken eine solche dreiecksförmige Endrücknahme gefertigt werden, so müsste auf der ersten Flanke oben, auf der zweiten Flanke unten die Profilmodifikation verschoben werden. Wären immer beide Flanken im Eingriff, so würde automatisch auch die Profilmodifikation der ersten Flanke unten und der zweiten Flanke oben verschoben werden. Um dies zu vermeiden, können die Berührspuren nun soweit in Breitenrichtung auseinandergeschoben werden, dass ab der Breitenposition, ab der die Profilmodifikation auf der ersten Flanke oben verschoben werden muss, die zweite Flanke bereits nicht mehr im Eingriff ist und umgekehrt.

Ist eine Bearbeitung des Zahnfuß nicht gewünscht, so ist der maximal mögliche Betrag um den die Profilmodifikation zum Zahnfuß verschoben werden kann, lediglich dadurch begrenzt, wieviel Kopfspiel des Werkzeugs bei der Bearbeitung zur Verfügung steht. Eine Verschiebung der Profilmodifikation zum Zahnfuß hin, wird durch eine Verringerung des Achsabstands realisiert und führt so zu einer Reduzierung des Kopfspiels des Werkzeugs.

Wird eine Profilmodifikation zum Zahnkopf hin verschoben, so wird der Achsabstand vergrößert. Dies führt dazu, dass der kleinste noch am Werkstück gefertigte Durchmesser vergrößert wird. Wird der zu fertigende Fußformkreis überschritten, so ist die maximal mögliche Verschiebung in Richtung Zahnkopf erreicht.

Wird der Fuß mitbearbeitet, so führt eine Verschiebung der Lage der Profilmodifikation zwangsläufig zu einem veränderten Verlauf des Fußkreisradius. Ist diese Änderung des Fußkreisradius noch innerhalb einer gegebenen Toleranz oder sogar gewünscht, so kann das Verfahren auch in diesem Fall angewendet werden.

Ist eine Verschiebung der Profilmodifikation auf Grund der gerade beschriebenen Einschränkungen nicht im gewünschten Maße möglich, so kann ein Werkzeug mit einem über die Werkzeugbreite entsprechend angepasstem Kopfkreisradius verwendet werden und das Verfahren als Diagonalwälzverfahren ausgeführt werden. Durch das Verschieben des Werkzeugs in axialer Richtung, abhängig von der Axialvorschubposition $z_{V2}$ des Werkstücks, kommen über die Breite des Werkstücks unterschiedliche Bereich des Werkzeugs und somit auch unterschiedliche Bereiche des Hüllkörpers des Werkzeugs in Eingriff und somit auch Bereiche des Werkzeugs, mit unterschiedlichen Kopfkreisradien. Die Kopfkreise des Werkzeugs und der Axialvorschub des Werkzeugs $z_{V1}(z_{V2})$ sind so abzustimmen, dass an jeder Werkstückbreitenposition ein Kopfkreisradius des Werkzeugs wirkt, der sowohl ein ungewolltes Bearbeiten des Zahnfußes des Werkstücks verhindert bzw. den Zahnfuß mit dem gewünschten Fußkreisradius bearbeitet als auch eine Bearbeitung des Fußformkreises des Werkstücks sicherstellt. Zu beachten ist dabei, dass diese Anpassung des Werkzeugs nur am Kopfkreis vorgenommen werden muss. Die Form der Flanken bleibt dadurch unverändert.

Ist ein Werkstück mit gewünschten Verlauf des Fußformkreises gegeben und wurden zur Erzielung der gewünschten Verschiebung der Profilmodifikation bereits $\hat{\gamma}(z_{V2})$, $\hat{d}(z_{V2})$ und $\Delta A(z_{V2})$ und aus $\Delta A(z_{V2})$ die Koordinaten $\Delta\varphi_1$, $\Delta\varphi_2$ und $\hat{z}_{V1}$ bestimmt, so kann zu einem gegebenen Axialvorschub des Werkzeugs $z_{V1}(z_{V2})$ der Verlauf des Kopfkreisradius des Werkstücks bestimmt werden. Dazu wird zunächst der Rotationskörper betrachtet, der sich aus dem Verlauf des Fußkreisradius des Werkstücks ergibt. Man bestimmt dann unter Berücksichtigung der vollständig bekannten Kinematik, an jeder in Eingriff kommenden Breitenposition des Werkstücks den Kopfkreis so, dass der sich aus dem Verlauf des Kopfkreisradius ergebende Rotationskörper zu jeder Zeit tangential an den Rotationskörper des Verlauf des Fußkreisradius des Werkstücks anliegt. Diese Rechnung zeigt, dass es nicht zu jedem Axialvorschub des Werkzeugs $z_{V1}(z_{V2})$ eine Lösung gibt. Abhilfe schafft hier eine Erhöhung des Diagonalverhältnisses, welches zu einem längeren Shiftweg und somit zu einem längeren genutzten Bereich auf dem Werkzeug führt. Das Diagonalverhältnis ist dazu solange betragsmäßig zu erhöhen, bis eine Lösung gefunden werden kann. In einer bevorzugten Variante kann hierbei ein nicht konstantes Diagonalverhältnis angenommen werden und dieses für jede Axialvorschubposition des Werkstücks $z_{V2}$ so bestimmt werden, dass gerade eine Lösung gefunden werden kann. Dieses Berechnungsverfahren liefert den kürzest möglichen Shiftweg und somit auch den kürzest möglichen genutzten Bereich auf dem Werkzeug. Ein weiter bevorzugtes Berechnungsverfahren berücksichtigt nicht nur den gewünschten Verlauf des Fußkreisradius auf dem Werkstück, sondern zusätzlich die erlaubte Toleranz des Verlauf des Fußkreisradius und führt so zu weiter verkürzten Shiftwegen.

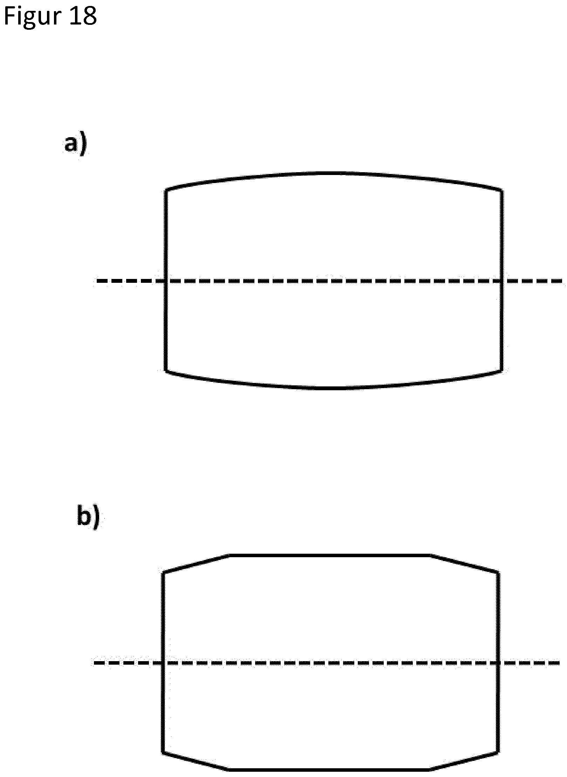

Figur 18a zeigt beispielhaft den Hüllkörper eins zylindrisches Werkzeug mit einem sich bogenförmig über die Werkzeugbreite veränderndem Kopfkreisradius. Ein solches Werkzeug kann verwendet werden, um mit einem konstanten Diagonalverhältnis mit dem hier beschriebenen Verfahren eine über die Werkstückbreite bogenförmige Verschiebung der Profilverschiebung, wie diese beispielsweise in Figur 14 gezeigt ist, zu erzeugen. Werden das obere bzw. untere Ende des Werkstücks gefertigt, so muss der Achsabstand reduziert werden, um die Profilmodifikation in Richtung Zahnfuß zu verschieben. Zu diesen Zeitpunkten müssen dann die Bereiche des Werkzeugs mit den verkleinerten Kopfkreisradien in Kontakt kommen um den Fußkreisradius des Werkstücks nicht zu verletzen. Wird die Mitte der Verzahnung gefertigt, muss der Achsabstand vergrößert werden, um die Profilmodifikation Richtung Zahnkopf zu verschieben. Um dabei die Fußformkreise des Werkzeugs noch zu erreichen, muss der Bereich des Werkzeugs mit großem Kopfkreisradius in Kontakt kommen.

Figur 18b zeigt den Hüllkörper eins zylindrisches Werkzeug mit an den beiden Enden linear über die Breite verkleinertem Kopfkreisradius, welches beispielsweise genutzt werden kann, um mit konstantem Diagonalverhältnis eine Modifikation wie in Figur 15 gezeigt zu fertigen.

Eine Modifikation wie in Figur 15 gezeigt kann jedoch auch mit einem Werkzeug wie in Figur 18a gefertigt werden. Dazu ist jedoch der Axialvorschub $z_{V1}(z_{V2})$ des Werkzeugs so in Abhängigkeit von $z_{V2}$ zu wählen, dass zu jeder Zeit ein Bereich des Werkzeugs in Kontakt kommt, dessen Kopfkreisradius gerade dem benötigten Kopfkreis entspricht. So würde das Diagonalverhältnis zunächst kontinuierlich kleiner werden, während der nicht modifizierte Bereich gefertigt wird Null sein und anschließend wieder kontinuierlich zunehmen.

Eine weitere Variante ist ein Werkzeug, dessen Kopfkreis monoton von einem Ende zum anderen Ende, beispielsweise linear ansteigt. Mit einem solchen Werkzeug wäre für die beiden beispielhaft betrachteten Modifikationen aus Figur 14 und 15 eine Richtungsumkehr des Diagonalverhältnisses nötig.

Figur 18 zeigt beispielhaft nur zylindrische Werkzeuge. Werden konische Werkzeuge verwendet, so ist die Anpassung der Kopfkreisradien gegenüber der Kegelmantelfläche anstatt gengenüber der Zylindermantelfläche vorzunehmen.

Sollen mit einem Werkzeug verschiedene Teile gefertigt werden, welche mit demselben Bezugsprofil gefertigt werden können, jedoch unterschiedliche Verläufe der Kopfkreisradien erfordern, so können auf einem Werkzeug verschiedenen Bereiche mit den jeweils erforderlichen Bereichen vorgesehen werden.

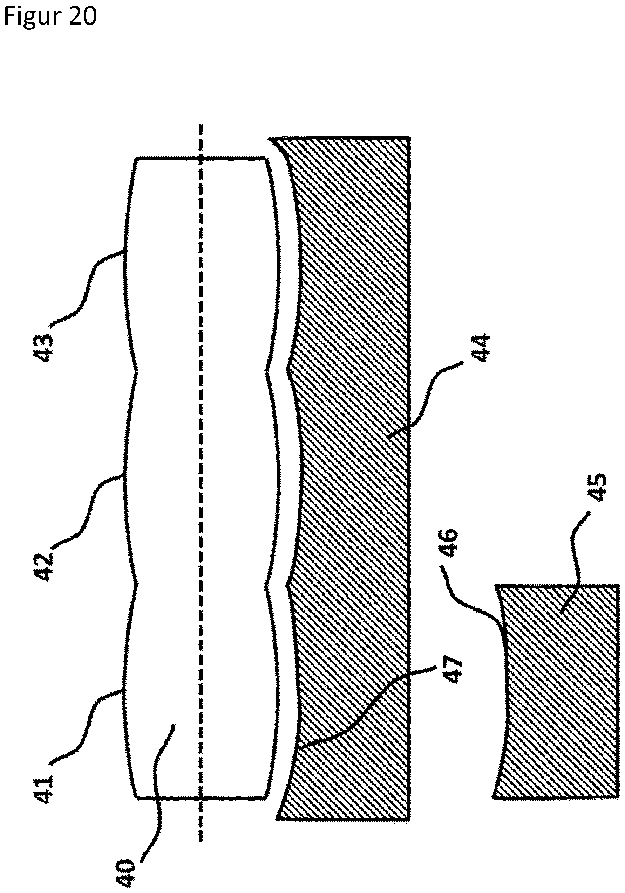

Auf dem Werkzeug können auch periodisch wiederkehrende Verläufe der Kopfkreisradien vorgesehen werden. Ein solches Werkzeug 40 ist beispielhaft in Figur 20 gezeigt. Dieses weist drei periodisch wiederkehrende Bereiche 41, 42, 43 auf. Jeder dieser Bereiche hat einen Verlauf des Kopfkreisradius ähnlich dem in Figur 18a gezeigten Werkzeug. Eine Aufteilung in solche Bereiche ist beispielsweise dann sinnvoll, wenn Schrupp- und Schlichtbearbeitungen auf unterschiedlichen Bereichen durchgeführt werden sollen.

Die Breite der verschiedenen Bereiche auf dem Werkzeug können in weiten Grenzen frei gewählt werden und wird bevorzugt so gewählt, dass das Werkzeug optimal ausgenutzt wird und/oder der Verschleiß möglichst minimal ist. So ist es beim Wälzschleifen beispielsweise von Vorteil, möglichst viele identische Bereiche auf der Schnecke aufzubringen und jeden dieser Bereiche zunächst zum Schlichten und wenn dieser verschlissen ist, noch weiter zum Schruppen zu verwenden.

Ist das Werkzeug eine Schleifschnecke, so können die verschiedenen Bereiche beispielsweise zur Schrupp-/Schlicht- oder auch Polierbearbeitung genutzt werden und dazu können auf diesen Bereichen jeweils unterschiedliche Schleifstoffe oder Spezifikationen der Schleifstoffe Verwendung finden.

Ein weiterer Anwendungsfall sieht vor, dass Bereiche zunächst, wenn diese noch nicht verschlissen sind und damit in der Lage sind ein gutes Profil zu erzeugen, zur Schlichtbearbeitung genutzt werden, wenn diese dann verschlissen sind, diese zur Schruppbearbeitung genutzt werden. Insbesondere in diesem Fall ist eine Aufteilung in bis zu 20 oder mehr Bereiche denkbar.

Wird das Verfahren beim Wälzschleifen mit abrichtbaren Schnecken eingesetzt, so stehen verschiedenen Möglichleiten zur Verfügung, die Schneckenköpfe abzurichten. Soll mit der Schnecke der Zahnfuß mitbearbeitet werden, so ist es im Allgemeinen gewünscht, die Schneckenköpfe gezielt zu verrunden, um so die gewünschte Fußgeometrie zu erzeugen. Dazu ist ein Abrichten der Schneckenköpf mit einer Kopfabrichtrolle nötig. Eine solche Kopfabrichtrolle 50 ist in Figur 8 als Teil eines Kombiabrichters zu sehen und aus dem Stand der Technik bekannt. Mit einer solchen Kopfabrichtrolle wird jeder Schneckengang einzeln abgerichtet. Dazu wird die Schnecke in axialer Richtung an der Kopfabrichtrolle vorbeigeführt und gemäß ihrer Steigungshöhe gekoppelt um ihre Drehachse gedreht. Bei konischen Schnecken wird zusätzlich gemäß der Konizität der Schnecke der Achsabstand zwischen Schnecke und Kopfabrichtrolle angepasst. Soll nun eine Schnecke mit einem vorgegebenen Verlauf des Kopfkreisradius abgerichtet werden, so ist beim Abrichten der Achsabstand zwischen Kopfabrichtrolle und Schnecke, abhängig von der axialen Position der Schnecke, so anzupassen, dass sich der gewünschte Verlauf des Kopfkreisradius über die Breite der Schnecke ausbildet. Auf diese Weise können Schnecken mir nur einem Bereich (Figur 18), Schnecken mit mehreren unterschiedlichen Bereichen oder auch Schnecken mit periodisch wiederkehrend Bereichen (Figur 20) abgerichtet werden. Da der Verlauf des Kopfkreisradius rein über die Abrichtkinematik realisiert wird, kann eine solche Kopfabrichtrolle sehr universell und für beliebige Verläufe des Kopfkreisradius eingesetzt werden.

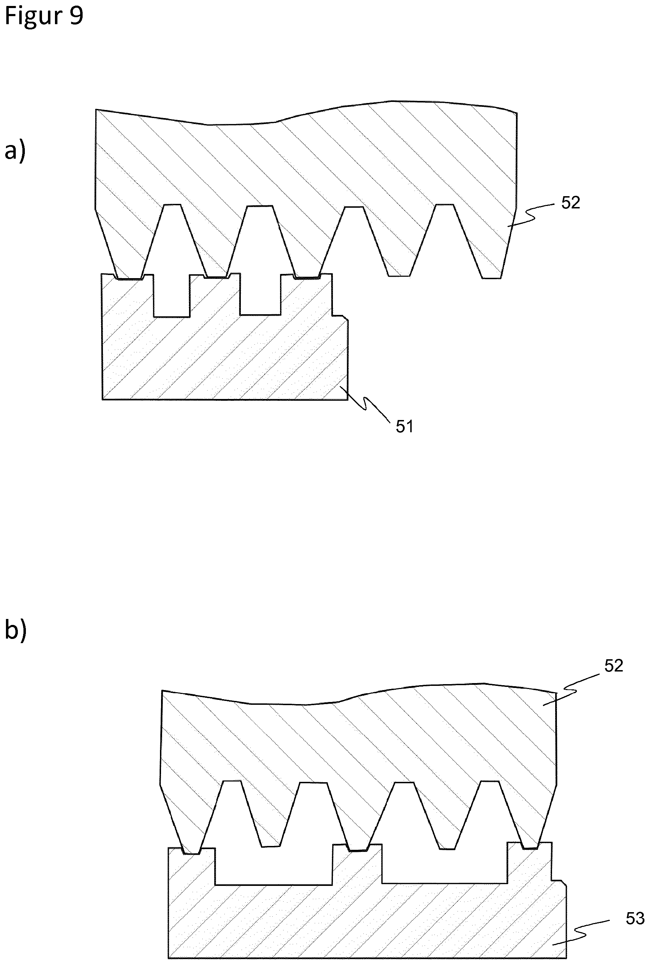

Um die Abrichtzeit der Schneckenköpfe bei mehrgängigen Schnecken deutlich zu reduzieren, kann bei periodisch wiederkehrenden Bereichen eine mehrrippige Kopfabrichtrolle 51 eingesetzt werden (Figur 9a). Mit einer solchen mehrrippigen Kopfabrichtrolle werden die Zahnköpfe mehrere, bevorzugt alle Gänge einer Schnecke in einem Abrichthub abgerichtet. Die Kinematik beim Abrichten ist beim Einsatz einer solchen mehrrippige Kopfabrichtrolle identisch mit der einer herkömmlichen Kopfabrichtrolle 50. Es ist lediglich ein längerer Einlaufweg und/oder ein längeres Auslaufweg zu wählen, damit alle Schneckengänge abgerichtet werden, so dass der insgesamt benötiget Shiftweg beim Abrichten zunimmt. Soll mit einer solchen mehrrippigen Kopfabrichtrolle eine Schnecke mit einem vorgegebenen Verlauf des Kopfkreisradius abgerichtet werden, so wirken sich die Änderungen des Achsabstands zwischen Schnecke und Kopfabrichtrolle auf alle Schneckengänge, welche zeitgliche in Kontakt sind, gleichermaßen aus, jedoch auf unterschiedlichen Breitenpositionen. Ist die Periode der wiederkehrenden Bereiche in Breitenrichtung der Schnecke gerade so gewählt worden, dass sie dem Abstand zweier benachbarter Kontaktpunkte zwischen Kopfabrichtrolle und Schnecke in Schneckenbreitenrichtung entspricht, so bildet sich der periodische Verlauf des Kopfkreisradius auf allen Gängen über die Breite der Schnecke gleich ab und der gewünschte periodische Verlauf des Kopfkreisradius auf dem Hüllkörper wird erreicht. Entspricht die Periode der wiederkehrenden Bereiche gerade einem ganzzahligen Vielfachen V des Abstands zweier benachbarter Kontaktpunkte zwischen Kopfabrichtrolle und Schnecke in Schneckenbreitenrichtung, so kann eine mehrrippige Kopfabrichtrolle verwendet werden, deren Abstand der einzelnen Rippen gerade so gewählt ist, dass nur jeder Vte Schneckengang, betrachtet in einem Stirnschnitt, in Kontakt ist. In Figur 9b ist beispielhaft eine solche mehrrippige Kopfabrichtrolle für $V = 2$ im Eingriff mit einer Schnecke zu sehen. Ist in diesem Beispiel die Schnecke beispielsweise 3-gängig, so werden auch hier alle Gänge gleichzeitig in einem Hub abgerichtet. Ist die Schnecke beispielsweise hingegen 6-gängig, so werden nur drei Schneckengänge, also nur jeder zweite Schneckengang abgerichtet. Um alle Schneckengänge abzurichten, sind die Abrichthübe, sowohl zum Abrichten der Flanken als auch zum Abrichten der Schneckenköpfe zu wiederholen, wobei der Abrichter um einen Schneckengang versetzt mit der Schnecke in Eingriff gebracht wird. Die Gangzahl der Schnecke muss jedoch kein ganzzahliges Vielfaches der Zahn der Rippen auf dem Abrichter sein. Ist dies nicht der Fall, so wird mindestens ein Scheckengang während zwei Abrichthüben abgerichtet.

Da die Flanken der Schnecke, bis auf die benötigten Profilmodifikationen, nicht weiter modifiziert sind und insbesondere nicht über die Breite modifiziert sind, können sie mit allen aus dem Stand der Technik bekannten Abrichtverfahren abgerichtet werden. Dies schließt insbesondere Profilrollensätze, Doppelkegelscheiben, mehrrippige Abrichter und Abrichtzahnräder mit ein. Die nötigen Profilmodifikationen sind durch das verwendetet Abrichtwerkzeug auf der Schnecke zu realisieren.

Das wirtschaftlichste Verfahren ist hierbei der Einsatz von mehrrippigen Abrichtern. Diese richten gleichzeitig mindestens zwei linke und/oder mindestens zwei rechte Flanken ab, bevorzugt jedoch die linken und rechten Flanken aller Schneckengänge. Solche Abrichter können als Vollprofilrollen ausgeführt sein und so zum simultanen Abrichten der Flanken der Schnecke und der Schneckenköpfe verwendet werden. In diesem Fall ist es jedoch nicht mehr möglich, einen freien Verlauf des Kopfkreisradius auf der Schnecke vorzugeben, da eine Änderung des Achsabstandes zwischen Schnecke und Abrichter auch die Form der Flanken der Schnecke beeinflussen würde.

Diese Erfindung schlägt daher einen Abrichter 55 mit Kopfabrichtfunktion vor, der so ausgestaltet ist, dass er genutzt werden kann, um mit dem Außendruchmesser die Köpfe der Schneckengänge abzurichten. Der Abrichter kann sowohl mehrrippig ausgeführt sein, wie in Figur 10 beispielhaft an einem dreirippigen Abrichter gezeigt, er kann jedoch auch einrippig ausgeführt sein. Um die Flanken der Schnecke abzurichten, wird der Abrichter mit Kopfabrichtfunktion, wie in Figur 10a gezeigt mit der Schnecke in Eingriff gebracht und es werden in einem oder mehreren Hüben die Flanke abgerichtet, wie dies aus dem Stand der Technik bekannt ist. In einem oder mehreren vorangehenden oder nachfolgenden Hüben werden die Rippen des Abrichters an ihrem Außendurchmesser mit den Köpfen der Schneckengänge in Kontakt gebracht. Die Abrichtkinematik entspricht dabei der beim Abrichten der Flanken. Die Schnecke wird axial verfahren und gemäß ihrer Steigungshöhe um ihre Drehachse gedreht, im Falle konischer Schnecken wird zusätzlich der Achsabstand zwischen Abrichter und Schnecke gemäß dem Konuswinkel verändert. Abhängig von der gewünschten Form der Köpfe der Schneckengänge, kann der Abrichter am Außendurchmesser entsprechende Profile aufweisen.

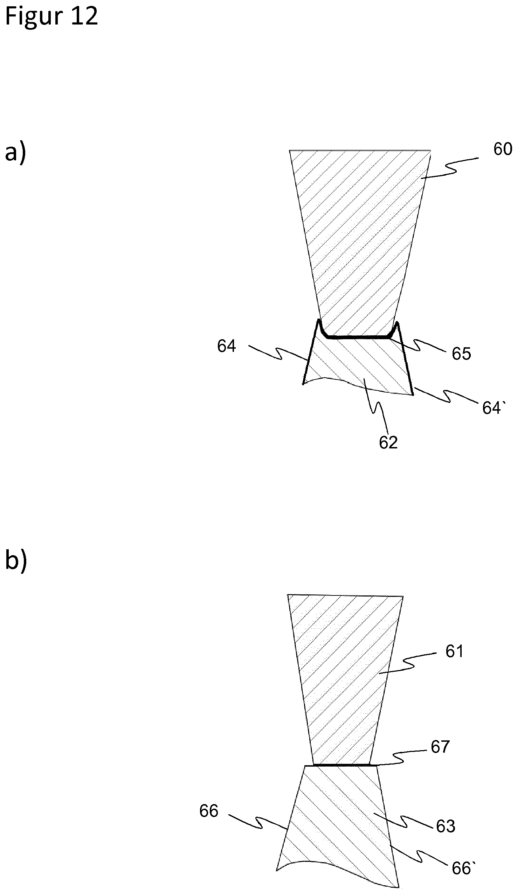

Figur 12a zeigt einen Schneckengang 60 mit einem zu den Flanken hin verrundeten Schneckenkopf im Eingriff mit einem Abrichter 62 mit Kopfabrichtfunktion mit einem, am Außendurchmesser verrundeten mit einem abrasiven Stoff versehenen Profil 65. Ein solcher Abrichter mit Kopfabrichtfunktion eignet sich insbesondere dann, wenn der Zahnfuß des Werkstückes geschliffen werden soll. Die Verrundung am Abrichter kann so gewählt werden, dass die gewünschte Form, insbesondere Verrundung am Zahnfuß des Werkstücks ausgebildet wird. Eine Variante hiervon wären vollverrundete Schneckenköpfe. 64 und 64' sind die mit einem abrasiven Stoff belegten Profile zum Abrichten der linken bzw. rechten Flanken der Schnecke.

Figur 12b zeigt einen Schneckengang 61 mit nicht verrundetem Kopf im Eingriff mit einem Abrichter 63 mit Kopfabrichtfunktion mit einem, am Außendurchmesser flachen mit einem abrasiven Stoff versehenen Profil 67. Ein solcher Abrichter eignet sich insbesondere dann, wenn der Zahnfuß des Werkstückes nicht geschliffen werden soll. Um den Kopf des Schneckengangs bei dieser Variante vollständig abzurichten, genügt hier ein am Außendurchmesser schmalerer Abrichter im Vergleich zur Variante aus Figur 12a. 66 und 66' sind die mit einem abrasiven Stoff belegten Profile zum Abrichten der linken bzw. rechten Flanken der Schnecke.

Ist ein Abrichter mit Kopfabrichtfunktion einrippig ausgeführt, so lassen sich mit ihm freie Verläufe des Kopfkreisradius realisieren.

Ist ein Abrichter mit Kopfabrichtfunktion mehrrippig ausgeführt, kann, so kann dieser, wie die mehrrippigen Kopfabrichtrollen 51 und 53 genutzt werden, um über die Schneckenbreite einen frei vorgegebenen periodisch wiederkehrenden Verlauf der Kopfkreisradien zu erzielen. Der Vorteil gegenüber den mehrrippigen Kopfabrichtrollen besteht jedoch darin, dass der Abrichter mit Kopfabrichtfunktion sowohl zum Abrichten der Flanken als auch zum Abrichten der Köpfe der Schneckengänge genutzt werden kann. Somit sind nur ein Werkzeug und auch nur eine Abrichterspindel in der Verzahnmaschine nötig. Entspricht die Periode der wiederkehrenden Bereiche in Breitenrichtung der Schnecke gerade dem Abstand zweier benachbarter Kontaktpunkte zwischen dem mehrrippigen Abrichter mit Kopfabrichtfunktion und Schnecke in Schneckenbreitenrichtung, so kann ein Abrichter 55 mit Kopfabrichtfunktion verwendet werden, der benachbarte Lücken simultan abrichtet. Entspricht die Periode der wiederkehrenden Bereiche in Breitenrichtung der Schnecke gerade einem ganzzahligen Vielfachen V des Abstands zweier benachbarter Kontaktpunkte zwischen mehrrippiger Abrichter mit Kopfabrichtfunktion und Schnecke in Schneckenbreitenrichtung, so kann analog zur Kopfabrichtrolle 53 ein mehrrippiger Abrichter mit Kopfabrichtfunktion verwendet werden, dessen Abstand der einzelnen Rippen gerade so gewählt ist, dass nur jeder Vte Schneckengang in Kontakt ist.

Die Erfindung sieht weiter einen mehrrippigen Abrichter mit Kopfabrichtfunktion vor, bei dem nicht alle Rippen am Außendurchmesser mit einem Profil, welches zum Abrichten eines Schneckenkopfs geeignet ist, ausgestatte sind. Solche zurückgenommen Rippen haben dann einen Außendurchmesser, welcher kleiner ist als der der mit einem Profil am Außendurchmesser versehenen Rippen, so dass diese Rippen beim Abrichten der Schneckenköpfe keinen Kontakt mit der Schnecke haben. Bevorzugt ist nur jede Vte Rippe mit einem Profil am Außendurchmesser versehen. Ein solcher Abrichter erlaubt es dann, die Flanken der Schnecke in weniger Hüben abzurichten, als dies mit einem Abrichter nötig wäre, der nur jede Vte Rippe aufweist. Soll beispielsweise eine 6-gängige Schnecke abgerichtet werden und der periodisch wiederkehrende Verlauf des Kopfkreisradius auf der Schnecke erfordert, dass nur jeder zweite Schneckenkopf simultan mit einem mehrrippigen Abrichter mit Kopfabrichtfunktion abgerichtet werden kann, so kann ein 6-rippiger Abrichter mit Kopfabrichtfunktion eingesetzt werden, an dem nur jede zweite Rippe ein Profil zum Abrichten der Schneckenköpfe am Außendurchmesser aufweist. Mit einem solchen Abrichter können die Flanken aller Schneckengänge in einem Abrichthub, alle Schneckenköpfe in zwei Abrichthüben abgerichtet werden. Der Außendurchmesser der zurückgenommenen Rippen muss dabei so groß sein, dass beim Abrichten der Flanken der Schnecke, die Schnecke von diesen Rippen tief genug profiliert wird, so dass die Schnecke den Kopf des Werkstücks nicht ungewollt überschleift. Der Außendurchmesser muss jedoch gleichzeitig so klein gewählt werden, dass es beim Abrichten der Schneckenköpfe durch den sich ändernden Achsabstand zwischen Schnecke und Abrichter nicht zu einem ungewollten Kontakt einer zurückgenommenen Rippe mit einem Schneckenkopf kommt.

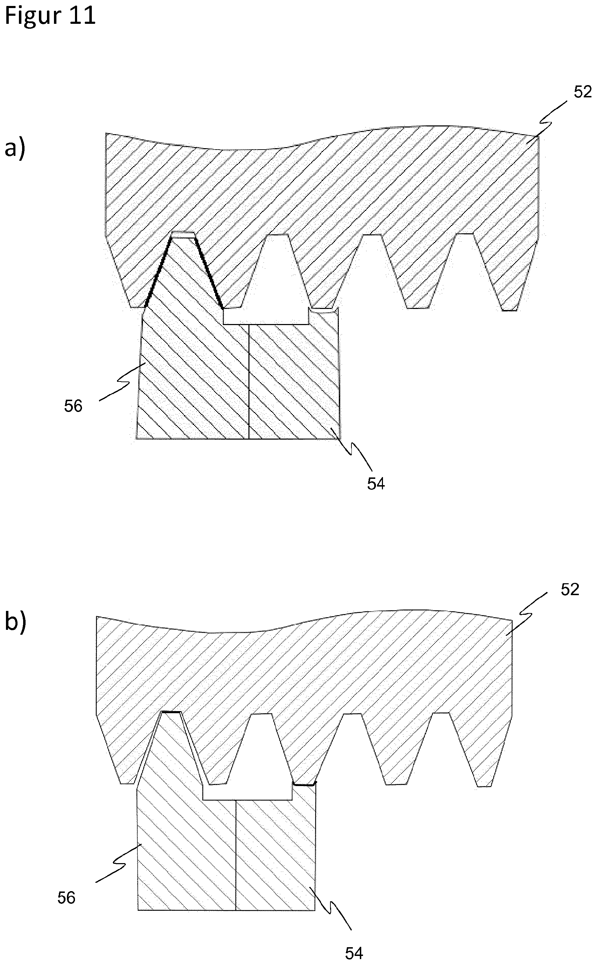

Bei der Auslegung eines Schleifprozesses, bei dem mit ein Abrichter mit Kopfabrichtfunktion abgerichtet werden soll, ist sicherzustellen, dass der Abrichter am Außendurchmesser breit genug ausgeführt ist, um die Schneckenköpf abrichten zu können. Die Breite des Abrichters am Außendurchmesser wird durch die Zahndicke der Schneckengänge bestimmt. Die benötigte Zahndicke der Schnecke kann durch die Wahl des Achskreuzwinkels y bei der Schleifbearbeitung beeinflusst werden und mit Gleichung (67) berechnet werden. Wie indirekt aus Figur 5 abgelesen werden kann, führt eine Änderung des Achskreuzwinkels y gegenüber dem aus dem Stand der Technik bekannten Achskreuzwinkels, zu einer Verkleinerung der Zahndicke der Schnecke und somit automatisch zu einer Vergrößerung der Lückenweite. Somit führt eine Änderung des Achskreuzwinkels zu einer kleineren Zahndicke am Kopf des Schneckengangs, wodurch die Mindestbreite des Abrichters am Außendurchmesser reduziert wird und dieser schmaler ausgeführt werden kann. Gleichzeitig nimmt, bedingt durch die vergrößerte Lückenweite die Breite es Abrichters zu. Ein weiterer Parameter der bei der Auslegung genutzt werden kann, ist der Profilwinkel der Schnecke. Wird dieser verkleinert, so ergibt sich bei gleicher Zahndicke am Kopf der Schneckengänge eine größere Lückenweite im Grund der Schnecke, wodurch der Abrichter am Außendurchmesser breiter auszuführen ist. Eine weitere Variante mit nur einem Abrichter sowohl die Flanken als auch die Schneckenköpfe abzurichten und dabei freie Verläufe der Kopfkreisradien zu realisieren, bietet der in Figur 11 gezeigte, aus Kopfabrichtrolle 54 und Doppelkegelscheibe 56 zusammengesetzte Kombiabrichter. Mit diesem Abrichter können in einem Hub entweder die Flanken oder die Schneckenköpfe abgerichtet werden. Dazu wird beim Abrichten de Schneckenköpfe ein kleiner Achsabstand zwischen Abrichter und Schnecke gewählt im Vergleich zum Abrichten der Flanken. Dadurch kommt die Kopfabrichtrolle 54 mit den Schneckenköpfen in Kontakt. Um zu vermeiden, dass bei diesem kleineren Achsabstand die Doppelkegelscheibe 56 die Flanken berührt und abrichtet, wird beim Abrichten der Flanken ein anderer Achskreuzwinkel zwischen Abrichterdrehachse und Schneckendrehachse im Vergleich zum Abrichten der Köpfe der Schneckengänge eingestellt. Üblicherweise wird beim Abrichten mit einer Doppelkegelscheibe der Achskreuzwinkel zwischen Abrichterdrehachse und Schneckendrehachse gleich dem Schrägungswinkel der Schnecke gewählt. Die Doppelkegelscheibe wird entsprechend für diesen Achskreuzwinkel ausgelegt. Es ist jedoch auch möglich mit von Schrägungswinkel der Schnecke verschiedenen Achskreuzwinkel eine Schnecke abzurichten, wobei dieser Achskreuzwinkel in beide Richtungen variiert werden kann. Wird eine Doppelkegelscheibe für einen solchen alternativen Achskreuzwinkel ausgelegt, so fällt die Doppelkegelscheibe schmäler aus. Dieser Effekt wird bei dem hier vorgeschlagenen Kombiabrichter und dem vorgeschlagenen Verfahren ausgenutzt. Dazu wird die Doppelkegelscheibe für einen vom Schrägungswinkel der Schnecke verschiedenen Achskreuzwinkel ausgelegt und unter diesem Achskreuzwinkel zum Abrichten der Flanken eingesetzt (Figur 11a), wobei das Abrichten sowohl einflankig als auch zweiflankig erfolgen kann. Zum Abrichten der Köpfe der Schneckengänge (Figur 11b) wird ein Achskreuzwinkel eingestellt, welcher näher am Schrägungswinkel der Schnecke ist und bevorzugt gleich dem Schrägungswinkel der Schnecke ist. Dadurch ist die Doppelkegelscheibe für diesen Achskreuzwinkel zu schmal zum Abrichten der Flanken und berührt diese nicht. Der alternative Achskreuzwinkel ist dabei so zu wählen, dass die Doppelkegelscheibe auch bei der zum Abrichten der Köpfe der Schneckengänge nötigen Verringerung des Achsabstands zwischen Schnecke und Kombiabrichter ausreichend Spiel zu den Flanken hat. Bevorzugt weicht der alternative Achskreuzwinkel zwischen 0.1° und 10° vom Schrägungswinkel der Schnecke ab.

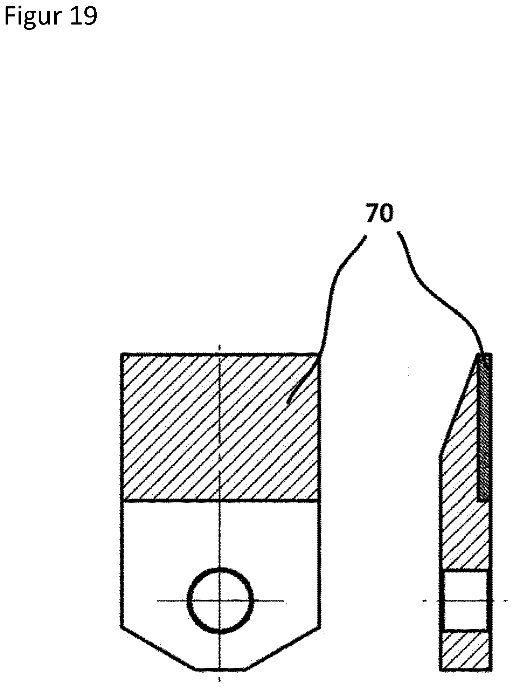

Alternativ zum Abrichten mit Kopfabrichtrollen können Schnecken auch mit Abrichtfliesen abgerichtet werden. Solche Abrichtfliesen werden fest in der Wälzschleifmaschine befestigt und die Schnecke wird, während sie sich mit ausreichend hoher Drehzahl dreht, um die nötige Schnittgeschwindigkeit zu erreichen, axial an der Abrichtfliese vorbeigeführt. Um einen freien Verlauf des Kopfradius zu erzielen, ist dabei der Abstand von Schnecke zu Abrichtfliese abhängig von der axialen Lage so zu verändern, dass sich der gewünschte Verlauf des Kopfradius auf der Schnecke ausbildet. Zur Anwendung dieses Verfahrens kann die Abrichtfliese beispielsweise, wie in Figur 19 gezeigt, mit einer ebenen abrasiven Fläche 70 ausgeführt sein. Eine weitere Ausführungsform sieht den Einsatz einer Nadelfliese vor, welche insbesondere dann bevorzugt ist, wenn der Verlauf des Kopfradius kleine Krümmungsradien aufweist. Solche Abricht- und Nadelfliesen sind auf Grund ihrer hohen Flexibilität insbesondere in bei der Fertigung von kleinen Stückzahlen bevorzugt einzusetzen. Eine, insbesondere für die Massenfertigung bevorzugte Ausführung sieht eine spezielle Abrichtfliese 44 vor, deren Form der abrasiven Fläche 47 genau dem Verlauf des Kopfkreisradius entspricht. Eine solche Abrichtfliese 44 ist in Figur 20 zusammen mit dem Hüllkörper 40 der Schnecke, für die die Abrichtfliese ausgelegt wurde, abgebildet. Die Schnecke muss so nur einmal drehend im richtigen Abstand an die Abrichtfliese hingefahren werden. Der gewünschte Verlauf bildet sich dabei ab, ohne dass die Schnecke an der Abrichtfliese vorbeigeführt werden muss, wodurch die Abrichtzeit deutlich verkürzt wird. Die Länge der Abrichtfliese entspricht vorzugsweise der Länge der Schnecke. Eine weitere Ausführungsform sieht eine kürzere und damit kostengünstigere Abrichtfliese 45 vor, welche zum gleichzeitigen Abrichten eines Teils der Schnecken geeignet ist. Deren Form der abrasiven Fläche 46 entspricht genau einem Teil des Verlaufs des Kopfkreisradius der Schnecke. Weist die Schnecke einen periodisch wiederkehrenden Verlauf des Kopfkreisradius auf, so kann die Schnecke in mehreren Bearbeitungsschritten über die ganze Länge abgerichtet werden. Dabei können pro Bearbeitungsschritt je nach Ausgestaltungsform entweder nur ein periodischer Bereich oder mehrere periodische Bereiche abgerichtet werden. Der Breite dieser speziellen Abrichtfliese, welche sich in Figur 20 in die Papierebene erstreckt, kann frei gewählt werden. Je Breiter sie ausgeführt ist, auf desto mehr Breitenpositionen kann sie genutzt werden und für desto mehr Abrichtzyklen kann sie genutzt werden, bis sie verschlissen ist.

Solle eine freie Flankenlinienmodifikation erzielt und sollen gleichzeitig mindestens zwei Zusatzbedingungen erfüllt werden, so ist dies im Allgemeinen mit dem hier vorgestellten Verfahren nicht möglich. Es ist jedoch möglich, beispielsweise mittels einer Ausgleichrechnung, Änderungen der Kinematik zu berechnen, mit denen die Zusatzbedingungen zumindest näherungsweise erreicht werden können, so dass es in bestimmten Fällen möglich ist, die Zusatzbedingungen innerhalb einer zulässigen Toleranz zu erfüllen. Hängen die zulässigen Toleranzen von Axialvorschubposition $z_{V2}$ ab, können optional die Zusatzbedingungen abhängig von der Axialvorschubposition $z_{V2}$ unterschiedlich gewichtet sein. Die Zusatzbedingungen können sein: Verlauf des Fuß- oder Kopfkreises des Werkstückes abhängig von der Werkstückbreitenposition oder Verschiebung der Profilmodifikation auf der linken oder rechten Flanke des Werkstückes abhängig von der Werkstückbreitenposition.

**Näherungsweise Herstellung mit nicht kämmendem Werkzeug**

Um eine Verzahnung mit einem der hier betrachteten Bearbeitungsverfahren exakt zu fertigen, muss ein Werkzeug verwendet werden, dass mit dem Werkstück kämmt, d.h. Gleichung (63) muss für linke und rechte Flanke erfüllt sein. Diese Gleichung kann mit den Relationen aus der DIN3960 wie folgt umgeschrieben werden:

$$m_{nF1} \cdot \cos \alpha_{nF1} = m_{nF2} \cdot \cos \alpha_{nF2} \tag{78}$$

Zur exakten Fertigung können somit nur Werkzeuge verwendet werden, deren Normalmodul $m_{nF1}$ und Normaleingriffswinkel $\alpha_{nF1}$ zur Herstellung des Werkstücks geeignet sind. Kämmt das Werkzeug nicht mit dem Werkstück, so kann das Werkstück nur noch näherungsweise gefertigt werden. Insbesondere beim Wälzfräsen als Vorverzahnverfahren, kann in bestimmten Fällen eine solche näherungsweise Fertigung jedoch schon ausreichend sein. Insbesondere in der Einzelteil- und Kleinserienfertigung bietet die Fertigung mit nicht kämmenden Werkzeugen den Vorteil, dass nicht neue teure Werkzeuge beschafft werden müssen und durch den Wegfall der Wartezeit kann früher gefertigt werden. Die beim Vorverzahnen entstandenen Abweichungen von der Sollgeometrie können durch die anschließende Feinbearbeitung wieder ausgeglichen werden. Ein weiterer Anwendungsfall wäre eine Schruppbearbeitung mit einem nicht kämmenden Werkzeug gefolgt von einer Schlichtbearbeitung mit einem kämmenden Werkzeug. Die Abweichungen aus der Schruppbearbeitung werden dann bei der Schlichtbearbeitung wieder ausgeglichen. Insbesondere bei der Fertigung von Großverzahnungen kann dadurch auf die Anschaffung eines weiteren teuren Schruppwerkzeugs verzichtet werden und es kann ein bereits vorhandenes verwendet werden.

Die in dieser Erfindung vorgestellte Möglichkeit, Werkstücke mit geradlinigen Verläufen des Fußkreisradius, welche um einen frei vorgebbaren Winkel gegenüber der Drehachse gekippt sind, kann genutzt werden, um die bei der Bearbeitung mit einem nicht kämmenden Werkzeug entstehenden Abweichungen deutlich zu reduzieren. Dazu werden ein gegebenes Werkstück mit Grundkreisradien $r_{bF2}$, Grundschrägungswinkeln $\beta_{bF2}$ und Fußkegelwinkel $\vartheta_2$ und ein gegebenes Werkzeug mit Normalmodul $m_{n1}$ und Normaleingriffswinkeln $\alpha_{nF1}$ betrachtet. Wird mit diesem Werkzeug eine im Allgemeinen konische Verzahnung mit zunächst frei gewähltem Schrägungswinkel $\hat{\beta}_2$ und frei gewähltem Konuswinkel $\hat{\vartheta}_2$ gefertigt, so lassen sich mit den folgenden Formeln die Grundkreisradien $\hat{r}_{bF2}$ und Grundschrägungswinkeln $\hat{\beta}_{bF2}$ des so erzeugten Werkstücks näherungsweise berechnen:

$$\tan \alpha_{tF2} = \tan \alpha_{nF1} \cdot \frac{\cos \hat{\vartheta}_2}{\cos \hat{\beta}_2} + s_F \cdot \tan \hat{\beta}_2 \cdot \sin \hat{\vartheta}_2 \tag{79}$$

$$\hat{r}_{bF2} = \frac{z_2 \cdot m_{n1}}{2 \cdot \cos \hat{\beta}_2} \cdot \cos \alpha_{tF2} \tag{80}$$

$$\tan \hat{\beta}_{bF2} = \left( \frac{\tan \hat{\beta}_2}{\cos \hat{\vartheta}_2} - s_F \cdot \tan \alpha_{tF2} \cdot \tan \hat{\vartheta}_2 \right) \cdot \cos \alpha_{tF2} \tag{81}$$

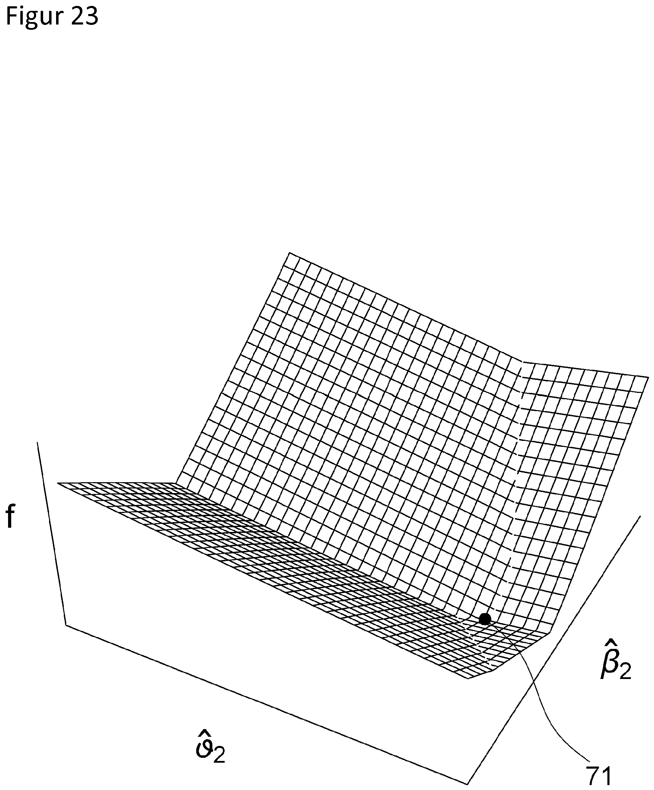

Aus $\hat{r}_{bF2}$ und $\hat{\beta}_{bF2}$ lässt sich die Abweichung von der Sollgeometrie bestimmten, bevorzugt wird diese Abweichung als maximale Abweichung der Sollgeometrie von der erzeugten Geometrie bestimmt, weiter bevorzugt als Summe aus Flankenlinienwinkelabweichung $f_{H\beta}$ und Profilwinkelabweichung $f_{H\alpha}$. Die Abweichung der Sollgeometrie in Abhängigkeit von $\hat{\beta}_2$ und $\hat{\vartheta}_2$ ist an einem Beispiel in Figur 23 gezeigt. Die Abweichung wird am Punkt 71 minimal. Im Allgemeinen liegt der Minimalwert bei einem Wert für $\hat{\vartheta}_2$ der vom Fußkegelwinkel $\vartheta_2$ des Werkstücks abweicht. Würde nun die Verzahnung mit den Werte für von $\hat{\beta}_2$ und $\hat{\vartheta}_2$ für die Abweichung minimal ist, gemäß dem Stand der Technik bearbeitet werden, würde das Werkstück mit einem falschen Fußkegelwinkel $\hat{\vartheta}_2$ gefertigt werden. Die Abweichungen von $\hat{\vartheta}_2$ gegenüber dem gewünschten Fußkegelwinkel können im Bereich von wenigen hundertstel Grad bis zu 5° oder mehr liegen, abhängig davon, wie weit das Werkzeug von einem kämmenden Werkzeug abweicht. Insbesondere größere Abweichungen von $\hat{\vartheta}_2$ führen zu Abweichungen der gewünschten Fußkreisradien, die weit außerhalb der üblicherweise zulässigen Toleranzen liegen. Die Erfindung sieht nun vor, den Bearbeitungsprozess so auszulegen, als sollte das Werkstück mit den ermittelten Werten für von $\hat{\beta}_2$ und $\hat{\vartheta}_2$ bearbeitet werden. Dieser Prozess würde ein Werkstück mit minimaler Abweichung zur Sollgeometrie liefern. Der Prozess wird dann jedoch so ausgeführt, dass als gewünschter Verlauf des Fußkreisradius ein geradliniger Verlauf, welcher durch eine Gerade beschrieben ist, die um den Fußkegelwinkel $\hat{\vartheta}_2$ gegenüber der Drehachse gekippt ist, vorgegeben wird. Dadurch wird weiterhin ein Werkstück mit minimaler Abweichung zur Sollgeometrie auf den Flanken erzeugt, jedoch mit exakt gefertigtem Fußkegelwinkel.

Wird das Verfahren auf zylindrische Werkstücke angewendet so ist im Allgemeinen der Fußkegelwinkel $\hat{\vartheta}_2 = 0$.

Dieses Verfahren bietet gegenüber einer Variante, in der nur $\hat{\beta}_2$ zur Optimierung herangezogen wird und $\hat{\vartheta}_2$ gleich dem Sollkonuswinkel des Werkstücks gewählt wird, insbesondere dann große Vorteile, wenn Werkzeug und/oder Werkstück asymmetrische Profile haben und/oder wenn das Werkstück konisch ist.

Wird dieses Verfahren bei Maschinen eingesetzt, die es auf Grund ihrer Bauart nicht erlauben, den Achskreuzwinkel $\gamma$ während der Bearbeitung kontinuierlich zu verändern, um das Verfahren zu Erzeugung freier Verläufe des Fußkreisradius anzuwenden, so kann, insbesondere bei Großverzahnungen der Achskreuzwinkel nur an mehreren bestimmten Axialvorschubpositionen des Werkstücks verstellt werden und zwischen diesen Axialvorschubpositionen des Werkstücks konstant gehalten werden. Dabei ist es auch denkbar, den Axialvorschub des Werkstücks während der Änderung des Achskreuzwinkels konstant zu halten oder sogar die Bearbeitung kurzzeitig zu unterbrechen oder das Werkzeug kurzzeitig außer Eingriff zu bringen. Das so ausgeführte Verfahren würde dann zu größeren, insbesondere sprunghaften Abweichungen auf dem erzeugten Werkstück führen.

Die Erfindung sieht weiter eine Software vor, welche aus einer Auswahl an Werkzeugen, deren Geometriedaten beispielsweise in einer Datenbank abgespeichert sind, das oder die Werkzeuge bestimmt, welches bzw. welche zur Anwendung des gerade beschriebenen Verfahrens am besten geeignet ist bzw. sind, insbesondere die geringste Abweichung von der Sollgeometrie erzeugt bzw. erzeugen.

**Einfluss des Achskreuzwinkels auf den Profilwinkel der generierenden Zahnstange**

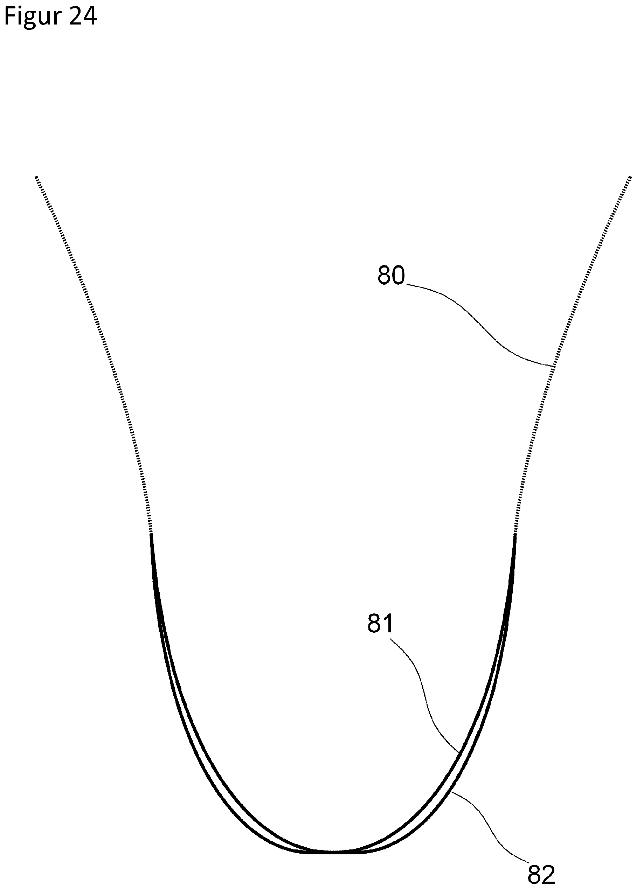

Aus der Relation (R3) und dem Formelwerk der DIN3960 und [Zierau] ergibt sich direkt, dass eine Änderung des Achskreuzwinkels automatisch zu einer Änderung des Profilwinkels $\alpha_{tw2}$ im Stirnschnitt der theoretischen, das Werkstück generierenden Zahnstange. In Figur 6a ist gezeigt, wie sich der Profilwinkels $\alpha_{tw2}$ der generierenden Zahnstange des Werkstücks in Abhängigkeit einer Änderung des Achskreuzwinkels verändert. Im gezeigten Beispiel zeigt sich ein streng monotoner Verlauf, welcher nach rechts immer steiler wird. Die Änderung des Profilwinkels hat keinen Einfluss auf die erzeugte Evolvente, das heißt, der Grundkreisradius und der Grundschrägungswinkel bleiben unverändert. Die Änderung des Profilwinkels hat jedoch Einfluss auf die erzeugten nicht evolventischen Bereiche der Zahnlücke, insbesondere auf die Fußgeometrie. Figur 24 zeigt diesen Einfluss am Beispiel einer im Stirnschnitt symmetrischen Zahnlücke. Die erzeugte Evolvente 80 ist bei verschiedenen Profilwinkeln identisch, die Fußgeometrie 81 und 82 unterscheiden sich jedoch. Im gezeigten Beispiel entspricht 81 einem im Vergleich zu 82 größeren Profilwinkel. Es zeigt sich, dass bei kleineren Profilwinkeln mehr Material abgetragen wird und eine Fußgeometrie mit größerer Krümmung erzeugt wird. Die tatsächlich erzeugte Fußgeometrie hängt neben der Kinematik auch von der Form des Zahnkopfs des Werkzeugs, der hier beschriebene qualitative Einfluss des Profilwinkels auf die Fußgeometrie ist jedoch von der tatsächlichen Form des Zahnkopfs unabhängig. Berechnet werden kann die tatsächlich erzeugte Fußgeometrie, sowohl im Falle eines konstanten als auch eines kontinuierlich veränderten Achskreuzwinkels, mit einer die Kinematik und die Zahnform des Werkzeugs berücksichtigenden Abtragsimulation.

Wie weiter oben bereits beschrieben und aus den Figuren 5 und 6a ersichtlich, gibt es bei den meisten der hier dargestellten Anwendungsfälle zwei Lösungen für den Achskreuzwinkel $\gamma$. Diese liegen im Allgemeinen ungefähr symmetrisch um einen nicht korrigierten Achskreuzwinkel gemäß dem Stand der Technik. Die Verfahren, in denen der Achskreuzwinkel während eines Bearbeitungshubs verändert wird, können sowohl mit steigendem als auch mit fallendem Achskreuzwinkel ausgeführt werden, das heißt, für die Funktion $\hat{\gamma}(z_{V2})$ gibt es im Allgemeinen mindestens zwei Lösungen. Der streng monotone Verlauf des Profilwinkels in 6b zeigt, dass die Wahl der Lösung Einfluss auf den Profiwinkel und somit, im Falle einer Bearbeitung des Zahnfuß, auch Einfluss auf die gefertigte Fußgeometrie hat. Dieser Effekt kann als Auswahlkriterium genutzt werden, welche Lösung zu wählen ist. So führt beispielsweise ein höherer Materialabtrag im Fuß zu einem schwächeren Zahnfuß und kann daher leichter zu einem Bruch des Zahnfußes führen. Auf der anderen Seite kann beispielsweise ein zu geringer Antrag zu einer Kollision mit dem Kopf des Gegenrades im eingebauten Zustand führen.

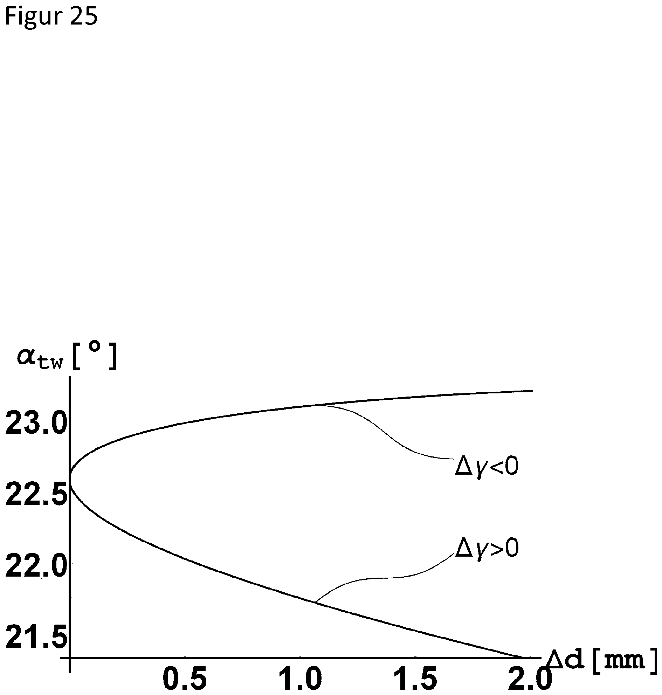

Der Einfluss des Profilwinkels auf die Fußgeometrie kann auch gezielt eingesetzt werden, insbesondere um bei konischen Werkstücken die Änderung der Fußgeometrie über die Werkstückbreite zu beeinflussen. Werden konische Verzahnungen mit einem der hier betrachteten Bearbeitungsverfahren gemäß dem Stand der Technik gefertigt, so ergibt sich eine über die Breite des Werkstücks sich stetig verändernde Fußgeometrie, welche aus dem sich stetig ändernden Profilverschiebungsfaktor folgt. Diese verändernde Fußgeometrie wird unter anderem durch die Form des Zahnkopfes des Werkzeugs und durch den Konuswinkel bestimmt. Insbesondere wenn der Zahnfuß mit bearbeitet werden soll, entspricht der Konuswinkel dem Fußkegelwinkel. Somit kann lediglich die Form des Zahnkopfes des Werkzeugs zur Beeinflussung der Fußgeometrie genutzt werden. Es gibt jedoch keine Möglichkeit mehr, die Änderung der Fußgeometrie über die Werkstückbreite zu beeinflussen. Um die Zahnfußfestigkeit des Werkstückes zu erhöhen und gleichzeitig eine Kollision des Gegenrades zu verhindern, kann es jedoch vorteilhaft sein, die Änderung der Fußgeometrie über die Breite des Werkstücks dahingehend zu beeinflussen, dass von Zehe zu Ferse mehr oder auch weniger Material im Zahnfuß abgetragen wird, im Vergleich zum Bearbeitungsverfahren nach dem Stand der Technik. Dazu wird ein gegebenes Werkstück mit Grundkreisradien $r_{bF2}$, Grundschrägungswinkeln $\beta_{bF2}$ und Fußkegelwinkel $\vartheta_2$ betrachtet. Setzt man diese Grundgrößen in die Gleichungen (79) bis (81) ein, so lassen sich ein Normalmodul $m_{n2}$, ein Schrägungswinkel $\beta_2$ und zwei Normalprofilwinkel $\alpha_{nF2}$ bestimmen. Ersetzt man $\vartheta_2$ jedoch durch einen alternativen Konuswinkel $\hat{\vartheta}_2$, so lassen sich alternative Größen $\hat{m}_{n2}$, $\hat{\beta}_2$ und $\hat{\alpha}_{nF2}$ bestimmen. Mit einer, durch diese alternativen Größen bestimmte theoretische Zahnstange lässt sich eine konische Verzahnung fertigen, welche dieselben Grundgrößen $r_{bF2}$ und $\beta_{bF2}$ aufweist, jedoch einen anderen Fußkegelwinkel hat. Ein für diesen Prozess geeignetes Werkzeug, lässt sich aus den Gleichungen (79) bis (81), welche analog für das Werkzeug gelten, der Relation (R3) und der Tatsache, dass Normalprofilwinkel und Normalmodul der theoretischen Zahnstangen von Werkzeug und Werkstück gleich sein müssen, bestimmen. Der gewünschte Fußkegelwinkel $\vartheta_2$ lässt nun jedoch mit dem in dieser Erfindung vorgestellten Verfahren realisieren. Dazu wird ein geradliniger Verlauf des Fußkreisradius vorgegeben, welcher durch eine um $\vartheta_2$ gegenüber der Drehachse des Werkstücks gekippten Gerade gegeben ist. Dazu muss abhängig von der Axialvorschubposition $z_{V2}$ des Werkstücks der Achsabstand gegenüber einer nicht korrigierten Bearbeitung angepasst werden und gemäß Figur 5b der Achskreuzwinkel $\gamma$ angepasst werden, was gemäß Figur 6b zu einer Änderung des Profilwinkels der theoretischen Zahnstange führt und wie in Figur 24 dargestellt zu einem geänderten Abtrag im Zahnfuß führt. Ob der Abtrag im Fuß von Zehe zu Ferse gegen über dem Verfahren nach dem Stand der Technik zu oder abnimmt, kann darüber gesteuert werden, ob ein alternativer Konuswinkel $\hat{\vartheta}_2$ gewählt wird, welcher kleiner oder größer als $\vartheta_2$ und darüber, ob zum Ausgleich des geänderten Achsabstand der Achskreuzwinkel über den linken ($\Delta\gamma < 0$) oder den rechten ($\Delta\gamma > 0$) Teil der Funktion in Figur 5b kompensiert wird. Wird beispielsweise der alternative Konuswinkel $\hat{\vartheta}_2$ so gewählt, dass der Achsabstand von Zehe zu Ferse vergrößert werden muss und die Vergrößerung des Achsabstands über den rechten Teil der Funktion aus Figur 5b kompensiert wird, so führt dies zu einer Vergrößerung des Achskreuzwinkels von Zehe zu Ferse, was wiederum nach der Funktion in Figur 6b zu einer Verkleinerung des Profilwinkels führt und somit nach Figur 24 zu mehr Abtrag im Fuß. Figur 25 verdeutlicht die Abhängigkeit des Profilwinkels von der Änderung des Achsabstands für die beiden Varianten $\Delta\gamma < 0$ und $\Delta\gamma > 0$. Es zeigt sich, dass der Betrag der Steigung der beiden Funktionen für kleine Änderungen $\Delta d$ groß, für große Änderungen $\Delta d$ klein ist. Dies kann genutzt werden, um neben dem Profilwinkel an Zehe und Ferse auch den Verlauf des Profilwinkels dazwischen zu beeinflussen. Muss beispielsweise im betrachteten Beispiel, der Achsabstand um 0.5mm geändert werden und es wird dazu der Bereich von 1.5mm bis 2.0mm genutzt, so ergibt sich nach Figur 25 eine annähernd lineare Änderung des Profilwinkels über die Breite des Werkstücks. Wird jedoch der Bereich zwischen 0mm und 0.5mm genutzt, so ergibt sich eine nichtlineare parabelartige Änderung. Welcher Bereich genutzt wird, kann über die Zahndicke des Werkzeugs gesteuert werden. Wird eine Zahndicke des Werkzeugs gewählt, welche von der gemäß dem Stand der Technik abweicht, so ist eine Änderung des Achskreuzwinkels nötig, um die gewünschte Zahndicke am Werkstück zu erzielen, wodurch der genutzte Bereich aus Figur 25 bestimmt werden kann.

Ist die über die Breite des Werkstücks sich stetig verändernde Fußgeometrie eines konischen Werkstücks vorgegeben, so können beispielsweise mittels einer Ausgleichsrechnung, der alternativer Konuswinkel $\hat{\vartheta}_2$ und eine oder mehrere der folgenden Einflussgrößen dahingehend bestimmt werden, dass die gewünschte Fußgeometrie optimal angenähert wird: 1) Form des Zahnkopfes des Werkzeugs, 2) Vorzeichen von $\Delta\gamma$, 3) Bereich der Funktion aus Figur 25.

Der alternative Konuswinkel $\hat{\vartheta}_2$ und eine oder mehrere der 3 Einflussgrößen können auch dahingehend bestimmt werden, dass das Einsatzverhalten, insbesondere die Zahnfußtragfähigkeit des Werkstücks optimiert werden. Dazu kann eine Abtragsimulation, welche die entstehende über die Breite des Werkstücks sich stetig verändernde Fußgeometrie bestimmt, genutzt werden, und das Ergebnis in einem Programm zur Bestimmung insbesondere Berechnung und/oder Simulation des Einsatzverhaltens, insbesondere der Zahnfußtragfähigkeit, zu nutzen.

Die gerade vorgestellte Möglichkeit, den Prozess mit einem alternativen Konuswinkel $\hat{\vartheta}_2$ auszulegen und den gewünschten Fußkegelwinkel $\vartheta_2$ über das vorgestellte Verfahren zu realisieren führt nicht nur zu einer Änderung des Profilwinkels der theoretischen Zahnstange über die Breite des Werkstücks, sondern auch dazu, dass $\hat{\alpha}_{nF2}$ vom Prozess gemäß dem Stand der Technik abweicht und somit der Profilwinkel über die ganze Breite des Werkstücks beeinflusst werden kann. Diese Beeinflussung des Profilwinkels führt zu veränderten Wälzkreisen und somit zu veränderten Wälzbedingungen, welche sich insbesondere an den nicht evolventischen Bereichen des Werkstückes, insbesondere am Fuß- und Kopfbereichs auswirken und die Möglichkeiten der im Wälzen herstellbaren Geometrien beeinflussen. So lassen sich einige Geometrien an Fuß und Kopf des Werkstückes nur mit Profilwinkeln der theoretischen Zahnstange realisieren, die in einem bestimmten Bereich liegen. Wie sich der Profilwinkel auf die erzeugbaren Geometrien auswirkt, kann mit einer Fertigungssimulation, die insbesondere die nicht evolventischen Bereiche mit berücksichtigt bestimmt werden. Die Erfindung sieht somit auch vor, den alternativen Konuswinkel $\hat{\vartheta}_2$ und damit die Profilewinkel $\hat{\alpha}_{nF2}$ auf linker und rechter Flanke so zu bestimmen, dass die gewünschten Geometrien an den nicht evolventischen Bereichen insbesondere am Fuß und am Kopf erzielt werden können.

Da die Profilwinkel der theoretischen Zahnstange vom Achskreuzwinkel $\gamma$ abhängen, sind in dieser Erfindung mit den Zusatzbedingen in $\gamma$ und/oder d und/oder $z_{V2}$ auch solche gemeint, welche auch Zusatzbedingen in den Profilwinkeln der theoretischen Zahnstange sind. Somit fallen beispielsweise auch diese Zusatzbedingungen darunter, welche einen Profilwinkel in einem bestimmten Bereich erfordern, um bestimmte Geometrien im nicht evolventischen Bereich zu erzeugen.

## Kombination mit Diagonalwälzverfahren

Einige Ausgestaltungsformen der Erfindung erfordern eine Bearbeitung im Diagonalwälzverfahren. Bei diesen ist das Diagonalverhältnis im Allgemeinen nach unten beschränkt, d.h. es ist ein minimaler Shiftweg erforderlich, das Diagonalverhältnis kann nach oben hingegen frei gewählt werden. Bei allen anderen Ausgestaltungsformen ist eine Bearbeitung im Diagonalwälzverfahren zwar nicht nötig, jedoch problemlos möglich. Das Diagonalverhältnis kann in allen Fällen sowohl konstant als auch nicht konstant sein.

Wird das Verfahren im Diagonalwälzverfahren ausgeführt, so können Werkzeuge verwendet werden, welche eine über die Breite veränderliche Modifikation aufweisen. Solche modifizierten Werkzeuge werden beispielsweise beim topologischen Wälzschleifen eingesetzt. Die DE 10 2015 000 907 und DE 10 2015 008 956 des gleichen Anmelders, welche vollumfänglich zum Gegenstand der vorliegenden Anmeldung gemacht werden, beschreiben Verfahren, welche beim Diagonalwälzschleifen ausnutzen, dass es möglich ist, Geraden auf dem Werkzeug auf Geraden auf dem Werkstück abzubilden oder, wenn ein variable Diagonalverhältnis eingesetzt wird, Geraden auf dem Werkzeug auf Kurven auf dem Werkstück abbilden. Diese Verfahren können mit dem in dieser Erfindung vorgestellten Verfahren kombiniert werden, es ist jedoch zu beachten, dass sich durch eine Änderung des Achskreuzwinkels auch die Zuordnung der Punkte auf dem Werkzeug zu Punkten auf dem Werkstück verändert. Dadurch werden Geraden auf dem Werkzeug bei konstantem Diagonalverhältnis nicht mehr exakt auf Geraden auf dem Werkstück abgebildet, wenn der Achskreuzwinkel in Abhängigkeit von $z_{V2}$ verändert wird. Sind die Änderungen des Achsabstands und des Achskreuzwinkels in Abhängigkeit von $z_{V2}$ bekannt, so kann mit Relation (R6) und (R7) die Zuordnung der Punkte auf dem Werkzeug zu Punkten auf dem Werkstück, wobei die Abhängigkeit der Koeffizient in diesen Relationen von $\gamma$ und d zu berücksichtigen ist.

Ein spezieller Anwendungsfall der Kombination mit Diagonalwälzverfahren ergibt sich, wenn eine zumindest von $\gamma$ und/oder d sowie $z_{V2}$ abhängigen Zusatzbedingung erfüllt sein soll, insbesondere ein freier Verlauf des Fuß- oder Kopfkreisradius am Werkstück erzielt werden soll und gleichzeitig eine gezielte Verschiebung der Profilmodifikation, insbesondere eine Profilmodifikation, welche über die Breite des Werkstücks nicht verschoben ist. Wird Zusatzbedingung über das hier vorgestellte Verfahren erfüllt, so führt dies automatisch auf beiden Flanken zu einer Verschiebung der Profilmodifikation über die Breite des Werkstücks. Diese Verschiebung entspricht im Allgemeinen jedoch nicht der gewünschten. Wird das Verfahren als Diagonalwälzverfahren ausgeführt, so kann ein Werkzeug verwendet werden, auf dem die Profilmodifikation über die Werkzeuglänge gerade so verschoben ist, dass sich die richtige Verschiebung der Profilmodifikation auf dem Werkstück unter Berücksichtigung der Bearbeitungskinematik ausbildet. Ist das verwendete Bearbeitungsverfahren Wälzschleifen mit abrichtbarer Schnecke, so ist die Schnecke entsprechend abzurichten. Die DE 10 2015 000 907 beschreibt ein Verfahren zum Abrichten einer Schnecke mit einer Abrichtscheibe, welches es erlaubt, einen Durchmesser auf der Abrichtscheibe auf einen Durchmesser bzw. Wälzweg auf der Schnecke abzubilden und diese Zuordnung über die Schneckenbreite frei zu wählen. Je nach Anwendungsfall kann dabei das Abrichten ein- oder zweiflankig durchgeführt werden. Ob das Abrichten zweiflankig ausgeführt werden kann, hängt davon ab, ob beim zweiflankigen Abrichten der Schnecke eine Zuordnung von Durchmessern auf der Abrichtscheibe zu Wälzwinkeln auf beiden Flanken der Schnecke erreicht werden kann, die beim späteren Wälzschleifen auf beiden Flanken zu einer Verschiebung der Profilmodifikation über die Breite des Werkstücks die innerhalb der gewünschten Toleranz liegt.

Dieses Verfahren lässt sich auch mit einem Werkzeug mit einem zuvor bestimmten Verlauf des Kopf- oder Fußkreisradius realisieren, sodass sich der Fuß- oder Kopfkreisradius am Werkstück, sowohl aus der Bearbeitungskinematik als auch der Geometrie des Werkzeugs ausbildet. Dies ist insbesondere dann vorteilhaft, wenn eine vom Fuß- und Kopfkreis unabhängige Zusatzbedingung genutzt wird, da sich auf diese Weise, Fuß- oder Kopfkreis, Verschiebung der Profilmodifikation und die Zusatzbedingung erfüllen lassen.

Das Diagonalwälzverfahren ist auch insbesondere dann vorteilhaft, wenn aus technologischen Gründen, beispielsweise um zu hohen Verschleiß des Werkzeugs zu vermeiden, während eines Hubs verschiedene Bereiche des Werkzeugs in Eingriff gebracht werden sollen.

**Anforderungen an bevorzugt verwendbare Werkzeuge**

Wird ein Werkzeug gemäß dem Stand der Technik verwendet, so kann, wie in Figur 5a zu sehen, über eine Änderung des Achskreuzwinkel $\Delta\gamma$ der Grundlückenwinkel nur vergrößert und damit die Zahndicke des Werkstücks nur verringert werden. Um zu gewährleisten, dass mit einem Werkzeug, der Grundlückenwinkel über $\Delta\gamma$ sowohl verringert als auch vergrößert und somit die Zahndicke vergrößert und verringert werden dann, kann ein Werkzeug eingesetzt werden, dessen Zahndicke geringer ist im Verglich zu der eines Werkzeugs gemäß dem Stand der Technik. Das ist gleichbedeutend damit, dass das Werkzeug für einen anderen vom Stand der Technik abweichenden Achskreuzwinkel $\gamma$ ausgelegt wird. Wird dann der Achskreuzwinkel in Richtung Achskreuzwinkel gemäß dem Stand der Technik verändert, so führt dies zu einer größeren Zahndicke des Werkstücks. Wird das Verfahren in der Variante angewendet, in der der Achskreuzwinkel während eines Bearbeitungshubs verändert wird, so kann über die Zahndicke beeinflusst werden, in welchem Bereich die Änderung des Achskreuzwinkels $\Delta\gamma$ liegt. Je kleiner die Zahndicke des Werkzeugs ist, desto größer muss $\Delta\gamma$ betragsmäßig werden, um denselben Effekt zu erzielen. Erfordert die Bearbeitung beispielsweise abhängig von $z_{V2}$ zunächst eine Verkleinerung der Zahndicke von der Oberkannte zur Verzahnungsmitte hin und dann eine Vergrößerung der Zahndicke von der Verzahnungsmitte bis zur Unterkannte, wie dies bei beispielsweise bei einer Flankenlinienballigkeit der Fall ist, so kann dies mit einem Werkzeug mit reduzierter Zahndicke abseits von $\Delta\gamma = 0$ und einer Richtungsänderung von $\Delta\gamma$ realisiert werden, aber jedoch auch mit einem Werkzeug mit entsprechend abgestimmter Zahndicke um $\Delta\gamma = 0$ herum, ohne einer Richtungsumkehr von $\Delta\gamma$ realisiert werden. Letztere Variante kann von Vorteil sein, da dadurch ein evtl. vorhandenes Umkehrspiel der zur Realisierung des Achskreuzwinkels verwendete Achse, bzw. Achsen nicht ins Gewicht fällt.

Ein weiterer Aspekt der bei bevorzugt zu verwendeten Werkzeugen mit definierter Schneide, insbesondre Wälzfräsern und Schälwälzfräsern zu beachten ist, dass es auf Grund der Änderung des Schwenkwinkels zu einer Änderung des Freiwinkels kommen kann, welche sich negativ auf die Standzeit des Werkzeugs auswirken kann. Es sind daher bevorzugt Werkzeuge zu verwenden, deren Hinterschliff so gestaltet ist, dass bei allen im Prozess einzustellenden Achskreuzwinkeln, ein ausreichend großer Freiwinkel am Fräserzahn vorhanden ist. Die sich einstellenden Freiwinkel lassen sich beispielsweise in Rahmen einer Fertigungssimulation bestimmen und somit entsprechen anpassen. Der Freiwinkel sollte dabei für alle im Prozess einzustellenden Achskreuzwinkeln bevorzugt größer 0.5° weiter bevorzugt größer 2° sein.

**Weitere Aspekte zu Flankenlinienmodifikationen**

Die Form der Flankenlinienmodifikationen, die rein über die Bearbeitungskinematik erzeugt werden können, sind durch Gleichung (69) beschrieben. Wird die Flankenlinienmodifikation durch eine Funktion $\overline{F}_{KFt}(z_F)$ gegeben, wobei die Modifikation auf einem gegeben Wälzweg $W_{0F}$ erreicht werden soll, so kann $F_{KFt}$ durch

$$F_{KFt}(w_{0F}\tan\rho_{KF} + z_F) = \overline{F}_{KFt}(z_F) \tag{82}$$

bestimmt werden. Die Flankenlinienmodifikationen können auf linker und rechter Flanke frei gewählt werden und können insbesondere Flankenlinienwinkelmodifikationen, Flankenlinienballigkeiten, Flankenlinienhohlballigkeiten und/oder Endenrücknahmen sein.

Bei der Bearbeitung kann es zu Abweichungen in der Flankenlinie kommen. Solche Abweichungen werden in der Verzahnmaschine über eine Flankenlinienkorrektur kompensiert. Die hier betrachteten Flankenlinienmodifikationen sind als Summe aus der Soll-Flankenlinienmodifikationen und der ggf. nötigen Flankenlinienkorrektur zu verstehen.

Die Flankenlinenmodifikation kann auf einer oder auf beiden Flanken konstant insbesondere 0 sein. Durch das hier vorgestellte Verfahren kann so, unter Erfüllung der Zusatzbedingung auch ein Werkstück ohne Flankenlinienmodifikation gefertigt werden.

Ein spezieller Anwendungsfall der Erfindung sieht vor, bevorzugt bei einer Bearbeitung des Zahnfußes, den Verlauf des Zahnfußes als eine um den Fußkegelwinkel gegenüber der Drehachse gekippten Gerade vorzugeben, um so eine Verzahnung zu fertigen, deren Verlauf des Fußkreisradius von der Flankenlinienmodifikation unbeeinflusst bleibt. Dies führt weiterhin dazu, dass die Flankenlinienmodifikation im Wesentlichen durch eine Änderung des Achskreuzwinkels und nicht durch eine Änderung des Achsabstands realisiert wird. Dies kann von Vorteil sein, wenn die Achse bzw. die Achsen, welche zum Einstellen des Achskreuzwinkels genutzt werden genauer eingestellt werden können als die Achse bzw. die Achsen, welche zum Einstellen des Achsabstands genutzt werden.

**Patentansprüche**

1. Verfahren zur Verzahnbearbeitung eines Werkstückes durch ein Werkzeug auf einer Verzahnmaschine, wobei das Werkstück durch ein Wälzbearbeitungsverfahren bearbeitet wird, wobei die Verzahnbearbeitung bevorzugt zweiflankig erfolgt, wobei durch das Wälzbearbeitungsverfahren eine gewünschte Flankenlinienform und Zahndicke der Verzahnung erzeugt wird, **dadurch gekennzeichnet, dass** eine Zusatz-Bedingung, bei welcher es sich um eine Vorgabe zu der Form der Verzahnung, zum Werkzeugkopfspiel und/oder zum Werkzeugfußspiel handelt, vorgebbar ist und der Achsabstand und der Achskreuzwinkel, mit welchen das Werkzeug zur Verzahnbearbeitung auf dem Werkstück abwälzt, in Abhängigkeit von der gewünschten Flankenlinienform und/oder Zahndicke der Verzahnung und der Zusatz-Bedingung bestimmt werden.

2. Verfahren nach Anspruch 1, wobei in Abhängigkeit von der Zusatz-Bedingung ein Achskreuzwinkel gewählt wird, welcher von einem durch die Schrägungswinkel von Werkzeug und Werkstück vorgegebenen Achskreuzwinkel abweicht, und wobei der Achsabstand so eingestellt wird, dass die gewünschte Flankenlinienform und/oder Zahndicke trotz des abweichenden Schrägungswinkels erzeugt wird, und/oder wobei der Achsabstand so bestimmt wird, dass die Zusatz-Bedingung erfüllt wird, wobei der Achskreuzwinkel in Abhängigkeit von dem Achsabstand so eingestellt wird, dass die gewünschte Flankenlinienform und/oder Zahndicke erzeugt wird.

3. Verfahren nach Anspruch 1 oder 2, wobei als gewünschte Flankenlinienform eine Flankenlinienmodifikation vorgebbar ist, wobei die Flankenlinienmodifikation bevorzugt für linke und rechte Flanke unabhängig vorgebbar ist und/oder wobei bevorzugt der Achsabstand und/oder eine Korrektur der Wälzkopplung als Funktion der Werkstückbreitenposition bestimmt werden.

4. Verfahren nach einem der vorangegangenen Ansprüche, wobei die Vorgabe die Zahnfußgeometrie, insbesondere den Fußkreisradius und/oder den Verlauf des Zahnfußes, und/oder die Zahnkopfgeometrie, insbesondere den Kopfkreisradius und/oder den Verlauf des Zahnkopfes, und/oder die Position einer durch eine Modifikation auf dem Werkzeug auf der aktiven Zahnflanke des Werkstücks erzeugten Modifikation betrifft.

5. Verfahren nach einem der vorangegangenen Ansprüche, wobei der Zahnfuß bei mindestens einem Bearbeitungshub zusammen mit der aktiven Zahnflanke mit bearbeitet wird, wobei die bei diesem Bearbeitungshub erzeugte Zahndicke und der bei diesem Bearbeitungshub erzeugte Fußkreisradius separat vorgebbar sind und/oder wobei der Materialabtrag im Bereich des Zahnfußes und der Zahnflanke separat einstellbar sind.

6. Verfahren nach einem der vorangegangenen Ansprüche, wobei das Werkstück mit mehreren Bearbeitungshüben bearbeitet wird, wobei der Zahnfuß bei mindestens einem Bearbeitungshub zusammen mit der aktiven Zahnflanke mit bearbeitet wird, und wobei die Einstellung von Achskreuzwinkel und Achsabstand zwischen Werkzeug und Werkstück so erfolgt, dass der Materialabtrag im Bereich des Zahnfußes beim letzten Bearbeitungshub kleiner als bei einem vorangegangenen Bearbeitungshub ist, wobei der Materialabtrag im Bereich des Zahnfußes bevorzugt bei allen vorangegangenen Bearbeitungshüben größer oder gleich dem Materialabtrag im Bereich des Zahnfußes beim letzten Bearbeitungshub ist und/oder wobei bevorzugt beim letzten Bearbeitungshub im Fußbereich kein Materialabtrag erfolgt.

7. Verfahren nach einem der vorangegangenen Ansprüche, wobei der Zahnfuß bei mindestens einem Bearbeitungshub zusammen mit der aktiven Zahnflanke mit bearbeitet wird, und wobei der Zahnfuß bei mindestens einem anderen Bearbeitungshub nicht mit bearbeitet wird, wobei bevorzugt bei dem einen Bearbeitungshub keine durch eine Variation der Bewegungsachsen bedingte Modifikation erzeugt wird und/oder wobei beim anderen Bearbeitungshub eine durch eine Variation der Bewegungsachsen bedingte Modifikation der aktiven Zahnflanke erzeugt wird, während das Werkzeug außer Eingriff mit dem Zahnfuß bleibt, wobei bevorzugt bei dem anderen Bearbeitungshub der Achsabstand und/oder der Achskreuzwinkel und/oder eine Korrektur der Wälzkopplung zur Erzeugung einer Flankenlinienmodifikation der aktiven Zahnflanke in Abhängigkeit von der Werkstückbreitenposition verändert werden.

8. Verfahren nach einem der vorangegangenen Ansprüche, wobei das Werkzeug eine Schleifschnecke ist und über einen Kombi-Abrichter abgerichtet wird, welcher gleichzeitig mindestens eine linke und eine rechte Zahnflanke und einen Zahnkopf abrichtet, wobei ein gewünschter Fußkreisradius und eine gewünschte Flankenlinienform und/oder Zahndicke der auf dem Werkstück zu erzeugenden Verzahnung durch geeignete Einstellung des Achsabstands und des Achskreuzwinkels und gegebenenfalls Korrektur der Wälzkopplung zwischen Werkzeug und Werkstück bei der Bearbeitung des Werkstücks erzeugt werden.

**9.** Verfahren nach einem der vorangegangenen Ansprüche, wobei das Werkzeug eine Modifikation aufweist, welche bei der Verzahnbearbeitung auf die aktive Zahnflanke des Werkstücks aufgebracht wird, wobei die Position der Modifikation auf der aktiven Zahnflanke des Werkstücks vorgebbar und/oder veränderbar ist und über die Einstellung des Achskreuzwinkels und des Achsabstands zwischen Werkzeug und Werkstück eingestellt wird.

**10.** Verfahren nach Anspruch 9, wobei ein Werkzeug verwendet wird, dessen Modifikation für eine andere Werkstücksollgeometrie ausgelegt wurde, wobei die Position der Modifikation auf dem Werkstück über die Einstellung des Achskreuzwinkels und des Achsabstands zwischen Werkzeug und Werkstück an die neue Werkstücksollgeometrie angepasst wird, und/oder wobei das Werkzeug über einen Abrichter abgerichtet wird, welcher eine Profilmodifikation aufweist und bevorzugt gleichzeitig mindestens eine linke und eine rechte Zahnflanke abrichtet, wobei die Profilmodifikation des Abrichters durch das Abrichten auf das Werkzeug übertragen wird, und wobei die Position der Modifikation auf dem Werkstück über die Einstellung des Achskreuzwinkels und des Achsabstands zwischen Werkzeug und Werkstück an die Werkstücksollgeometrie angepasst wird.

**11.** Verfahren nach einem der vorangegangenen Ansprüche, wobei der Achskreuzwinkel für mindestens einen Bearbeitungshub über die Werkstückbreite konstant bleibt.

**12.** Verzahnmaschine zur Durchführung eines Verfahrens nach einem der vorangegangenen Ansprüche mit einer Werkzeugaufnahme und einer Werkstückaufnahme sowie NC-Achsen zur Einstellung der Relativposition zwischen Werkzeug und Werkstück zur Verzahnbearbeitung eines in der Werkstückaufnahme aufgenommen Werkstückes durch ein in der Werkzeugaufnahme aufgenommenes Werkzeug, mit einer Steuerung zur Ansteuerung der NC-Achsen zur Durchführung eines Wälzbearbeitungsverfahrens, bei welchem das Werkzeug zur Verzahnbearbeitung auf dem Werkstück abwälzt,

wobei die Steuerung eine Eingabefunktion aufweist, durch welche eine gewünschte Flankenlinienform und Zahndicke und die Zusatz-Bedingung vorgebbar sind,
und wobei die Steuerung eine Bearbeitungsfunktion aufweist, welche den Achsabstand und den Achskreuzwinkel zwischen Werkstück und Werkzeug bei der Wälzbearbeitung so einstellt, dass das bearbeitete Werkstück die gewünschte Flankenlinienform und/oder Zahndicke aufweist und die Zusatz-Bedingung erfüllt.

**13.** Verzahnmaschine nach Anspruch 12, wobei durch die Eingabefunktion die bei einem Bearbeitungshub erzeugte Zahndicke und der bei diesem Bearbeitungshub erzeugte Fußkreisradius separat vorgebbar sind und/oder wobei bevorzugt der Materialabtrag auf rechter und linker Flanke und im Zahnfuß separat vorgebbar sind.

**14.** Computerprogramm, umfassend Befehle, die bei der Ausführung des Programms durch einen Computer diesen veranlassen, zur Berechnung der für die Durchführung einer Wälzbearbeitung benötigten Relativposition zwischen Werkzeug und Werkstück, mit einer Eingabefunktion, durch welche eine gewünschte Flankenlinienform und Zahndicke
und eine Zusatz-Bedingung, bei welcher es sich um eine Vorgabe zu der Form der Verzahnung, zum Werkzeugkopfspiel und/oder zum Werkzeugfußspiel handelt, vorgebbar sind, und mit einer Bestimmungsfunktion, welche den Achsabstand und den Achskreuzwinkels zwischen Werkstück und Werkzeug bei der Wälzbearbeitung so bestimmt, dass das bearbeitete Werkstück die vorgegebene Flankenlinienform und/oder Zahndicke aufweist und die Zusatz-Bedingung erfüllt.

**15.** Computerprogramm
nach Anspruch 14 zur Berechnung der zur Durchführung eines Verfahrens nach einem der vorangegangenen Ansprüche notwendigen Relativposition zwischen Werkzeug und Werkstück.

**Claims**

**1.** A process for gear manufacturing machining a workpiece by a tool on a gear manufacturing machine, wherein the workpiece is machined by a generating machining process, wherein a desired tooth trace shape and/or tooth thickness of the gearing is generated by the generating machining process, **characterized in that** an additional condition, which is a specification on the shape of the gearing and/or on the tool head clearance, can be predefined and the center distance and the axial cross angle by which the tool for the gear manufacturing machining rolls off on the workpiece are determined in dependence on the desired tooth trace shape and/or on the tooth thickness of the gearing and on the additional condition.

2. A process in accordance with claim 1, wherein an axial cross angle is selected in dependence on the additional condition, said axial cross angle differing from an axial cross angle predefined by the helix angle of the tool and of the workpiece; and wherein the center distance is set such that the desired tooth trace shape and/or the tooth thickness is generated despite the deviating helix angle, and/or with the center distance being determined such that the additional condition is satisfied, with the axial cross angle being set in dependence on the center distance such that the desired tooth trace shape and/or tooth thickness is generated.

3. A process in accordance with claim 1 or claim 2, wherein a tooth trace modification is predefinable as a desired tooth trace shape; wherein the tooth thickness and/or the tooth trace modification is/are preferably predefinable independently for the left and right flanks; and/or wherein the center distance and/or a correction of the generating coupling is/are preferably determined as a function of the workpiece width position.

4. A process in accordance with one of the preceding claims, wherein the specification of the root geometry, in particular the root radius and/or the progression of the root and/or the tip geometry, in particular the tip radius and/or the progression of the tip, and/or the position of a modification generated on the active tooth flank of the workpiece by a modification on the tool.

5. A process in accordance with one of the preceding claims, wherein the root is also machined together with the active tooth flank in at least one machining stroke, with the tooth thickness generated in this machining stroke and the root radius generated in this machining stroke being separately predefinable; and/or wherein the material removal in the region of the root and of the tooth flank can be set separately.

6. A process in accordance with one of the preceding claims, wherein the workpiece is machined by a plurality of machining strokes, with the root also being machined together with the active tooth flank in at least one machining stroke, and with the setting of the axial cross angle and the center distance between the tool and the workpiece taking place such that the material removal in the region of the root is smaller during the last machining stroke than in a preceding machining stroke, with the material removal in the region of the root in all the preceding machining strokes preferably being larger than or equal to the material removal in the region of the root in the last machining stroke, and/or with no material removal preferably taking place in the root region in the last machining stroke.

7. A process in accordance with one of the preceding claims, wherein the root is also machined together with the active tooth flank in at least one machining stroke; and wherein the root is not also machined in at least one other machining stroke, with no modification caused by a variation of the movement axles preferably being generated in the one machining stroke, and/or with a modification of the active tooth flank caused by a variation of the movement axles being generated in the other machining stroke, while the tool remains out of engagement with the root, with the center distance and/or the axial cross angle and/or a correction of the generating coupling for generating a tooth trace modification of the active tooth flank preferably being changed in dependence on the workpiece width position in the other machining stroke.

8. A process in accordance with one of the preceding claims, wherein the tool is a grinding worm and is dressed using a combination dressing tool that simultaneously dresses at least one left tooth flank and one right tooth flank and one tip; wherein a desired root radius and a desired tooth trace shape and/or tooth thickness of the gearing to be generated on the workpiece are generated by a suitable setting of the center distance and of the axial cross angle and, optionally, a correction of the generating coupling between the tool and the workpiece in the machining of the workpiece.

9. A process in accordance with one of the preceding claims, wherein the tool has a modification that is applied to the active tooth flank of the workpiece in the gear manufacturing machining, with the position of the modification on the active tooth flank of the workpiece being predefinable and/or variable and/or being set via the setting of the axial cross angle and of the center distance between the tool and the workpiece.

10. A process in accordance with claim 9, wherein a tool is used whose modification was designed for a different desired workpiece geometry; wherein the position of the modification on the workpiece is adapted to the desired workpiece geometry via the setting of the axial cross angle and the center distance between the tool and the workpiece; and/or wherein the tool is dressed using a dressing tool that has a profile modification and preferably simultaneously dresses at least one left tooth flank and one right tooth flank, with the profile modification of the dressing tool being transferred to the tool by the dressing and with the position of the modification on the workpiece being adapted to the workpiece geometry via the setting of the axial cross angle and of the center distance between the tool and the workpiece.

**11.** A process in accordance with one of the preceding claims, wherein the axial cross angle remains constant over the workpiece width for at least one machining stroke.

**12.** A gear manufacturing machine for carrying out a process in accordance with one of the preceding claims having a tool holder and a workpiece holder as well as NC axes for setting the relative position between the tool and the workpiece for the gear manufacturing machining of a workpiece held in the workpiece holder by a tool held in the tool holder, having a control for controlling the NC axes for carrying out a generating machining process in which the tool for the gear manufacturing machining rolls off on the workpiece,

wherein the control has an input function by which a desired tooth trace shape and tooth thickness and the additional condition are predefinable;
and wherein the control has a machining function that sets the center distance and the axial cross angle between the workpiece and the tool in the generating machining such that the machined workpiece has the desired tooth trace shape and/or tooth thickness and satisfies the additional condition.

**13.** A gear manufacturing machine in accordance with claim 12, wherein the tooth thickness generated on a machining stroke by the input function and the root radius generated on this machining stroke can be separately specified, and/or wherein the material removal on the right and left flanks an in the dedendum can preferably be separately specified.

**14.** A computer program comprising commands that, on an execution of the program by a computer, make said computer calculate the relative position between the tool and the workpiece required for the carrying out of a generating machining, having an input function by which a desired tooth trace shape and tooth thickness and an additional condition, which can be a specification on the shape of the gearing, on the tool head clearance, and/or on the tool base clearance, are predefinable; and having a determination function that determines the center distance and the axial cross angle between the workpiece and the tool in the generating machining such that the machined workpiece has the predefined tooth trace shape and/or tooth thickness and satisfies the additional condition.

**15.** A computer program in accordance with claim 14 for calculating the relative position between the tool and the workpiece required for carrying out a process in accordance with one of the preceding claims.

**Revendications**

**1.** Procédé d'usinage de la denture d'une pièce par un outil sur une machine à tailler les engrenages, la pièce étant usinée par un procédé d'usinage par génération, l'usinage de la denture étant de préférence effectué sur les deux flancs, une forme de ligne de flanc et une épaisseur de dent souhaitées de la denture étant générées par le procédé d'usinage par génération, **caractérisé en ce qu'**une condition supplémentaire, pour laquelle il s'agit d'une spécification concernant la forme de la denture, le jeu de tête d'outil et/ou le jeu de pied d'outil, peut être prédéfinie et l'entraxe et l'angle de croisement des axes, avec lesquels l'outil roule sur la pièce pour l'usinage de la denture, étant déterminés en fonction de la forme de ligne de flanc et/ou de l'épaisseur de dent souhaitées de la denture et de la condition supplémentaire.

**2.** Procédé selon la revendication 1, dans lequel, en fonction de la condition supplémentaire, un angle de croisement des axes est choisi, qui diffère d'un angle de croisement des axes prédéfini par les angles d'hélice de l'outil et de la pièce, et dans lequel l'entraxe est réglé de telle manière que la forme de ligne de flanc et/ou l'épaisseur de dent souhaitées sont générées malgré l'angle d'hélice différent, et/ou dans lequel l'entraxe est déterminé de telle manière que la condition supplémentaire est remplie, l'angle de croisement des axes étant réglé en fonction de l'entraxe de telle manière que la forme de ligne de flanc et/ou l'épaisseur de dent souhaitées sont générées.

**3.** Procédé selon la revendication 1 ou 2, dans lequel une modification de ligne de flanc peut être prédéfinie comme forme de ligne de flanc souhaitée, la modification de ligne de flanc pouvant de préférence être prédéfinie indépendamment pour le flanc gauche et le flanc droit et/ou l'entraxe et/ou une correction de l'engrènement de génération pouvant de préférence être déterminés comme fonction de la position en largeur de la pièce.

**4.** Procédé selon l'une des revendications précédentes, dans lequel la spécification concerne la géométrie du pied de dent, en particulier le rayon de pied et/ou le tracé du pied de dent, et/ou la géométrie de la tête de dent, en particulier le rayon de tête de dent et/ou le tracé de la tête de dent, et/ou la position d'une modification générée sur un flanc de dent actif de la pièce par une modification sur l'outil.

5.  Procédé selon l'une des revendications précédentes, dans lequel le pied de dent est usiné conjointement avec le flanc de dent actif lors d'au moins une course d'usinage, l'épaisseur de dent générée lors de cette course d'usinage et le rayon de pied de dent généré lors de cette course d'usinage pouvant être prédéfinis séparément et/ou l'enlèvement de matière dans la zone du pied de dent et du flanc de dent pouvant être réglé séparément.

6.  Procédé selon l'une des revendications précédentes, dans lequel la pièce est usinée avec plusieurs courses d'usinage, le pied de dent étant usiné conjointement avec le flanc de dent actif lors d'au moins une course d'usinage, et le réglage de l'angle de croisement des axes et de l'entraxe entre l'outil et la pièce étant effectué de telle manière que l'enlèvement de matière dans la zone du pied de dent lors de la dernière course d'usinage est inférieur à lors d'une course d'usinage précédente, l'enlèvement de matière dans la zone du pied de dent étant de préférence, pour toutes les courses d'usinage précédentes, supérieur ou égal à l'enlèvement de matière dans la zone du pied de dent lors de la dernière course d'usinage et/ou, de préférence, aucun enlèvement de matière n'ayant lieu dans la zone de pied lors de la dernière course d'usinage.

7.  Procédé selon l'une des revendications précédentes, dans lequel le pied de dent est usiné conjointement avec le flanc de dent actif lors d'au moins une course d'usinage, et dans lequel le pied de dent n'est pas usiné conjointement lors d'au moins une autre course d'usinage, dans lequel aucune modification conditionnée par une variation des axes de déplacement n'est de préférence générée lors de ladite une course d'usinage et/ou dans lequel, lors de l'autre course d'usinage, une modification du flanc de dent actif conditionnée par une variation des axes de déplacement est de préférence générée pendant que l'outil n'est pas en prise avec le pied de dent, dans lequel, lors de l'autre course d'usinage, l'entraxe et/ou l'angle de croisement des axes et/ou une correction de l'engrènement de génération sont de préférence modifiés pour générer une modification de ligne de flanc du flanc de dent actif en fonction de la position en largeur de la pièce.

8.  Procédé selon l'une des revendications précédentes, dans lequel l'outil est une meule-mère et est dressé par le biais d'un dresseur combiné, qui dresse simultanément au moins un flanc de dent gauche et droit et une tête de dent, un rayon de pied de dent souhaité et une forme de ligne de flanc et/ou épaisseur de dent souhaitées de la denture à générer sur la pièce étant générés par un réglage adapté de l'entraxe et de l'angle de croisement des axes et le cas échéant une correction de l'engrènement de génération entre l'outil et la pièce lors de l'usinage de la pièce.

9.  Procédé selon l'une des revendications précédentes, dans lequel l'outil comporte une modification qui est appliquée lors de l'usinage de la denture sur le flanc de dent actif de la pièce, la position de la modification sur le flanc de dent actif de la pièce pouvant être prédéfinie et/ou modifiée et étant réglée par le biais du réglage de l'angle de croisement des axes et de l'entraxe entre l'outil et la pièce.

10. Procédé selon la revendication 9, dans lequel un outil est utilisé dont la modification a été conçue pour une autre géométrie théorique de pièce, la position de la modification sur la pièce étant adaptée à la nouvelle géométrie théorique de pièce par le biais du réglage de l'angle de croisement des axes et de l'entraxe entre l'outil et la pièce, et/ou dans lequel l'outil est dressé par le biais d'un dresseur, qui comporte une modification de profil et qui dresse de préférence simultanément au moins un flanc de dent gauche et un flanc de dent droit, la modification de profil du dresseur étant transférée à l'outil par le dressage et la position de la modification sur la pièce étant adaptée à la géométrie théorique de pièce par le biais du réglage de l'angle de croisement des axes et de l'entraxe entre l'outil et la pièce.

11. Procédé selon l'une des revendications précédentes, dans lequel l'angle de croisement des axes pour au moins une course d'usinage reste constant sur la largeur de la pièce.

12. Machine à tailler les engrenages destinée à exécuter un procédé selon l'une des revendications précédentes, comprenant un logement d'outil et un logement de pièce ainsi que des axes CN pour le réglage de la position relative entre l'outil et la pièce pour l'usinage de la denture d'une pièce reçue dans le logement de pièce par un outil reçu dans le logement d'outil, comprenant un organe de commande pour commander les axes CN pour exécuter un procédé d'usinage par génération, dans lequel l'outil pour l'usinage de la denture roule sur la pièce,

    dans laquelle l'organe de commande comporte une fonction de saisie, par laquelle une forme de ligne de flanc et une épaisseur de dent souhaitées et la condition supplémentaire peuvent être prédéfinies,

et dans laquelle l'organe de commande comporte une fonction d'usinage, qui règle l'entraxe et l'angle de croisement des axes entre la pièce et l'outil lors de l'usinage par génération de telle manière que la pièce usinée comporte la forme de ligne de flanc et/ou l'épaisseur de dent souhaitées et remplit la condition supplémentaire.

13. Machine à tailler les engrenages selon la revendication 12, dans laquelle, par la fonction de saisie, l'épaisseur de dent générée lors d'une course d'usinage et le rayon de pied de dent généré lors de cette course d'usinage peuvent être prédéfinis séparément et/ou dans laquelle l'enlèvement de matière sur le flanc droit et gauche et dans le pied de dent peut de préférence être prédéfini séparément.

14. Programme informatique, comprenant des instructions, qui, lors de l'exécution du programme par un ordinateur, amènent celui-ci à calculer la position relative entre l'outil et la pièce nécessaire pour l'exécution d'un usinage par génération, avec une fonction de saisie, par laquelle une forme de ligne de flanc et épaisseur de dent souhaitées et une condition supplémentaire, pour laquelle il s'agit d'une spécification concernant la forme de la denture, le jeu de tête d'outil et/ou le jeu de pied d'outil, peuvent être prédéfinies, et avec une fonction de détermination, qui détermine l'entraxe et l'angle de croisement des axes entre la pièce et l'outil lors de l'usinage par génération de telle manière que la pièce usinée comporte la forme de ligne de flanc et/ou l'épaisseur de dent prédéfinies et remplit la condition supplémentaire.

15. Programme informatique selon la revendication 14, destiné à calculer la position relative entre l'outil et la pièce nécessaire pour exécuter un procédé selon l'une des revendications précédentes.

# Figur 1

## Figur 2

# Figur 3

Figur 4

Figur 5

a)

b)

Figur 6

a)

b)

# Figur 7

a)

b)

# Figur 8

a)

b)

EP 3 242 175 B1

## Figur 9

a)

b)

## Figur 10

a)

b)

# Figur 11

a)

52

56

54

b)

52

56

54

# Figur 12

a)

b)

Figur 13

Figur 14

Figur 15

Figur 16

**LF $\alpha=16°$ RF**

**LF $\alpha=20°$ RF**

**LF $\alpha=24°$ RF**

Figur 17

## LF  $\gamma=-56.85°$  RF

w          w

## LF  $\gamma=-57.52°$  RF

w          w

## LF  $\gamma=-58.°$  RF

w          w

Figur 18

a)

b)

Figur 19

70

Figur 20

Figur 21

a)

b)

Figur 22

Figur 23

Figur 24

Figur 25

Figur 26

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10208531
- DE 102014007646 A1
- DE 102012015846 A1

- DE 102015000907
- DE 102015008956

### In der Beschreibung aufgeführte Nicht-Patentliteratur

- **NIEMANN, G ; WINTER, H.** Maschinenelemente. Springer Verlag, 1983, vol. 3, 2